# EUROPEAN PATENT APPLICATION

(11) **EP 1 624 405 A1**
(43) Date of publication of application: **08.02.2006**
(21) Application number: 04732487.6
(22) Date of filing: 12.05.2004
(51) Int. Cl.: G06Q 10/00

(54) **TERMINAL, JOB INSTRUCTION METHOD, CONTENT PROVIDING DEVICE, CONTENT PROVIDING METHOD, RECORDING MEDIUM, PROGRAM, JOB MANAGEMENT SYSTEM, AND JOB MANAGEMENT METHOD**

(30) Priority: 12.05.2003 JP 2003133438
(71) Applicant: OMRON CORPORATION, Kyoto-shi, Kyoto 600-8530 (JP)
(72) Inventor: ANDO, Tannichi; c/o OMRON CORPORATION, 801,, Shiokoji-dori, Kyoto-shi, Kyoto;6008530 (JP); KUSANO, Yuji; c/o OMRON CORPORATION, 801,, Kyoto-shi, Kyoto; 6008530 (JP)
(74) Representative: Calderbank, Thomas Roger
(86) International application number: PCT/JP2004/006709
(87) International publication number: WO 2004/100036

(57) **Abstract**

The present invention enables the continuous designation of appropriate business at an appropriate timing and in appropriate order with minimal operation, and enables the management side to comprehend the business condition. A master control unit 101 controls the output of an aggregate based on an event response control program associated with the aggregate containing information being output, and in correspondence with an event. A play list reader 102 controls the output of information contained in an aggregate based on ordinal data associated with the aggregate for which the output thereof has been designated by the master control unit 101. A communication unit 106 controls the transmission of business condition information indicating the condition of business to a business support server 502 for providing the contents based on the event response control program, and in correspondence with an event. The present invention may be employed in a business support system for supporting the implementation of business.

## Description

### TECHNICAL FIELD

The present invention relates to a terminal device, business designation method, contents provision device, contents provision method, recording medium, program, business management system and business management method, and in particular to a terminal device, business designation method, contents provision device, contents provision method, recording medium, program, business management system and business management method for supporting the implementation of business of the user using a terminal device.

### BACKGROUND ART

Pursuant to the advancement of IT and network technology in recent years, the use of a business support terminal device directed to users who are driving or operating equipment is increasing.

In this kind of business support terminal device, the user operates the business application program. Therefore, the user who is to operate the business support terminal device must engage in complicated procedures such as gazing at the screen to select the target item or input item of operation, performing operations with a pointing device such as a keyboard, operation button, mouse or touch pad, gazing at the display on the screen and confirming the results of the operation, and performing the subsequent operation.

Moreover, the gazette of Japanese Patent Laid-Open Publication No. 2000-215211 discloses guiding scripts having time information and placing information for guides and guide information and describing an instruction sequence capable of expressing those information by a time sequence by using a mark-up language are prepared in a center or a medium, wherein a script conversion unit converts a guiding script selected by an operation input unit into structured data for guide and transfers the converted data to an instruction processing unit, and the processing unit executes an instruction coincident with current time or a current position obtained from a state acquiring unit based on the structured data and a guide output unit outputs a guide.

As described above, upon operating a business support terminal device, the user needs to focus on the operation of the business support terminal device. In other words, with a conventional business support terminal device, the constitution is such that it is necessary to focus on the operation procedure at hand upon performing operations. Therefore, conventionally, it was not possible to operation the business support terminal device while engaging in other operations.

When it is necessary to focus one's attention to the business at hand or the target of such business; for instance, when it is necessary to concentrate on the driving or operation of vehicles, aircrafts or ships, when performing dangerous operations with a crane, or when responding to a phone call from a customer, when such user tries to use the business support terminal device, the user's consciousness (concentration) will be diverted from the business at hand.

When it is necessary to operate the business support terminal device while engaging in other business, the user needs to temporarily suspend the business at hand such as driving in order to operate the business support terminal device. When the business support terminal device is used while driving a vehicle or operating a crane, there is fear that this may cause a serious accident.

Contrarily, if a conventional business support terminal device is operated while continuing one's business at hand, the user's concentration and focus will be diverted from the original business at hand, and the operating efficiency may considerably deteriorate, or mistakes or accidents may occur as a result thereof.

Results from the detailed analysis of the problematic points of a conventional business support terminal device are described below.

When starting the support based on the user's operation, there are cases where this may hinder the implementation of actions relating to the original business at hand. Unless the constitution relieves the user from having to focus on the operation of the business support terminal device, the original business at hand will be hindered.

The designation of business needs to be notified without the user having to gaze at the screen. In a center which manages the progress of business of individual users, since such center is not able to comprehend the condition of the user or vehicle, or the condition of business operations, the center is not able to give unilateral instructions to the user. It is impossible to create a business application program corresponding to all of the conditions that may occur during the implementation of business.

The center managing the progress of business of individual users is not able to accurately support the business unless it is able to comprehend the progress of business or condition of the user. To significantly increase the user's operation for comprehending the progress of business or condition of the user will have an opposite effect of hindering the progress of business.

In a case of automatically conveying the information indicating the progress of business of condition of the user, the method of scheduling based on time is not able to respond to the change or delay in the schedule. Here, if the user does not prepare the condition information in advance, much time will be required for transmitting the required data. Further, when the user is engaged in actions other than the operation of the business support terminal device, such as driving, the user often forgets to transmit such data.

It is necessary for the user to comprehend the condition of the support being provided by the business support terminal device. If the user is not able to comprehend such condition, the user may not know what to do in subsequent situations. If the user needs to operate the business support terminal device or to gaze at the screen in order to comprehend such condition, such operation will hinder the implementation of business.

Since a plurality of business operations is often performed in parallel, it is necessary to enable the execution of multiple processing steps for business support. With the method of switching screens during such processing, the operation to be performed will increase considerably, and will hinder the implementation of business. In other words, it is necessary to enable the provision of new support by interrupting the support currently being provided, and, after the new support is completed, to return to the previous support and continuing such support processing.

### DISCLOSURE OF THE INVENTION

The present invention was devised in view of the foregoing circumstances, and an object thereof is to enable the continuous designation of appropriate business at an appropriate timing and in appropriate order with minimal operation, and to enable the management side to comprehend the business condition.

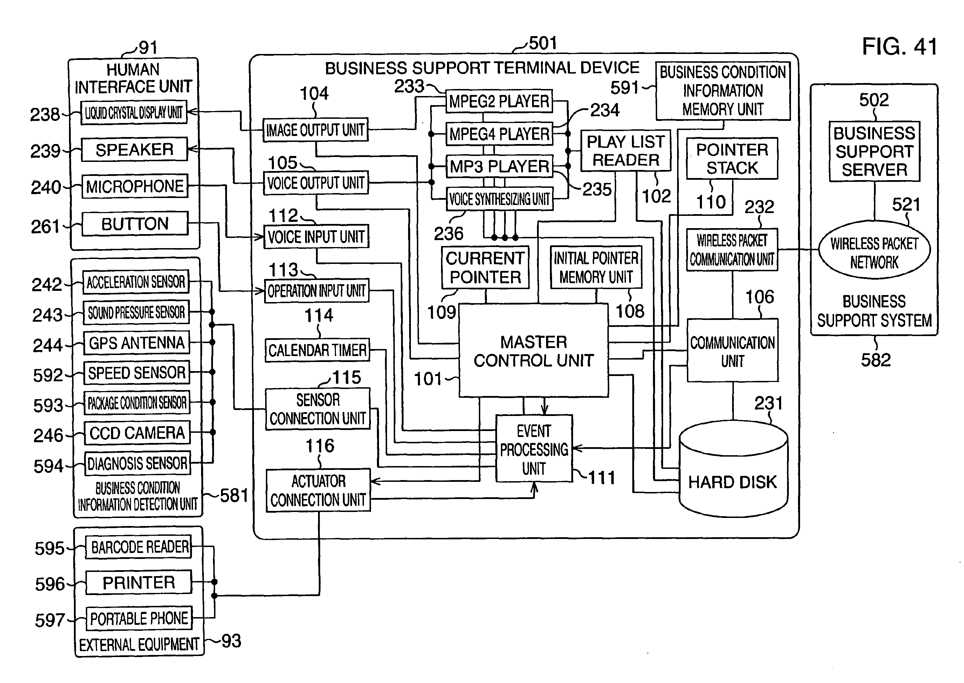

The terminal device according to the present invention comprises: an aggregate output control means (e.g., the master control unit 101 illustrated in Fig. 41) for controlling the output of the aggregate based on an event response control program associated with the aggregate, which contains the contents being reproduced, among the event response control programs having described therein a command for an event and associated with each of the aggregates, and in correspondence with the event; a contents reproduction control means (e.g., the play list reader 102 illustrated in Fig. 41) for controlling the reproduction of the contents contained in the aggregate based on ordinal data associated with the aggregate, for which the output thereof has been designated with the aggregate output control means, among the ordinal data having described therein the reproduction order of the contents associated with each of the aggregates; and a transmission control means (e.g., the communication unit 103 illustrated in Fig. 41) for controlling the transmission of the business condition information indicating the condition of the business to a contents provision device for providing the contents based on the event response control program associated with the aggregate containing the contents being reproduced, and in correspondence with the event.

In order to clarify the correspondence with the respective means of the invention claimed in the claims and the embodiments described below, the foregoing example indicates the characteristics of the present invention by adding the corresponding embodiment (merely an example) in parenthesis immediately after to the respective means. Needless to say, such indication does not signify that the respective means are limited to such example, and the same shall apply below.

With the terminal device of the present invention, output of the aggregate is controlled based on an event response control program associated with the aggregate, which contains the contents being reproduced, among the event response control programs having described therein a command for an event and associated with each of the aggregates, and in correspondence with the event, and the reproduction of the contents contained in the aggregate is controlled based on ordinal data associated with the aggregate, for which the output thereof has been designated with the aggregate output control means, among the ordinal data having described therein the reproduction order of the contents associated with each of the aggregates. And, the transmission of the business condition information indicating the condition of the business to a contents provision device for providing the contents is controlled based on the event response control program associated with the aggregate containing the contents being reproduced, and in correspondence with the event.

When the aggregate to which the contents being reproduced belong is replaced, the event response control program to be read is also replaced, and, even if the same event is input, the content to be controlled will change. And, according to the output order of contents described in the ordinal data associated with the aggregate for which the output thereof has been designated, the contents contained in the aggregate for which the output thereof has been designated will be output.

As a result, by appropriately describing the event response control program and ordinal data, continuous designation of business at an appropriate timing and in appropriate order with minimal operation will be enabled.

Further, since the business condition information indicating the condition of business is transmitted to the contents provision device in correspondence with the event, the contents provision device, which is on the management side, will be able to comprehend the business condition of the terminal device without having to perform any operation to the terminal device.

This aggregate output control means, contents reproduction control means or transmission control means may be constituted with dedicated hardware, or realized with a computer loaded with a control program.

Contents, in a broad sense, means information or data capable of being used for designating business to the user of the terminal device, includes copyrighted works, control data, or control data or data significant to the user upon performing one's business. Contents in particular include data for outputting sounds or displaying images, as well as characters, numerical values, figures and other data.

When prescribing from a different perspective, contents include reproduced data contents, coded data contents or functional contents. Reproduced data contents or coded data contents include, for example, MPEG-2 format contents or MP3 format contents. Functional contents refer to contents composed of information other than images or sounds, but output as images or sounds. Functional contents include data for controlling equipment.

An aggregate is formed of 0 or 1 or a plurality of contents having some kind of association. For instance, an aggregate may be formed to be an aggregate composed of contents stored in a folder or directory, or an aggregate may be formed to be an aggregate formed from files or subordinate aggregates stored in a folder or directory. Association for determining the aggregate may be described for the respective contents.

A layered system as used herein will suffice so as long as the relationship of the connection between an aggregate unit, and the aggregate unit contained therein is evident at minimum. A layered system includes a tree structure. For example, when the aggregate is formed from an aggregate of information stored in a folder, the layered system will mean the structure constituted with the connection of folders.

A second unit contained in a first unit is referred to as a descendant of the first unit. A descendant one layer away is referred to as a child. A second containing a first unit is referred to as an ancestor of the first unit. An ancestor one layer away is referred to as a parent.

An event refers to (information indicating) a change of state, and, for example, refers to an external or internal change of state. An event includes an event generated with the user's operation, an event generated as a result of the sensor detecting something from the outside environment, an event generated from the year, month, date or time, an event sent via a network, an event generated from the reproduction of contents, and an event generated from the change in the communication status. The event generated with the user's operation includes a command.

An event response control program will suffice so as long as it has described therein information for identifying the event and a command for specifying the processing contents associated with the event at minimum. A command, for instance, is described with the processing target and processing content.

To be associated with an aggregate means that an event response control program can be specified with the aggregate. Being associated with an aggregate includes associating an empty event response control program with the aggregate. For example, when the aggregate is formed from an aggregate of information stored in a folder, as a result of the event response control program being stored in the folder, the event response control program will be associated with the aggregate of information stored in the folder.

To control the output of an aggregate means to designate the output of contents belonging to the aggregate at minimum. In such a case, it is not necessary to specify the content itself.

In a preferred embodiment, the business condition information contains at least either contents reproduction condition information indicating the reproduction of the contents, or acquisition condition information acquired internally or externally thereof.

Further, the acquisition condition information may contain at least either event information indicating the acquired event, or sensor information acquired with a sensor.

More preferably, the terminal device may further comprise a sensor for acquiring the sensor information contained in the business condition information. As a result of employing the foregoing constitution, the terminal device will be able to acquire sensor information indicating the internal or external state of oneself.

The terminal device may further comprise a first memory control means for controlling the memory of the business condition information.

The aggregate output control means may control the output of the aggregate based on the event response control program associated with the aggregate containing the contents being reproduced, and the event response control program associated with the aggregate of the ancestor of the aggregate containing the contents being reproduced, and in correspondence with the event. As a result, designation of the output of a more appropriate aggregate will be enabled with the event response control program having fewer commands described therein.

The terminal device may further comprise a reproduction means for reproducing the contents based on the control of the contents reproduction control means and in correspondence with the type of the contents.

Type of contents, in a broad sense, means the distinction of contents based on the form of outputting contents, form of recognizing contents or the format of encoding contents, and, for instance, may be a type specified with sounds or images recognized with senses, a type specified with characters or music which is recognized logically or sensuously, a type specified with the MPEG format or coded format, and so on. Type of contents, for example, is identified with the attribute of contents, or the name of the file (e.g., so-called extension) storing the information.

For example, the reproduction means will reproduce contents in correspondence with the type of contents, which are text data, for MPEG-2, MP3 or voice synthesis.

The terminal device may further comprise event generation means for acquiring the outside status and generating the event. As a result of employing the foregoing constitution, designation of business can be switched in accordance with the change in environment without having to request the user's operation. Therefore, the user will be provided with an appropriate business designation corresponding to the change in environment.

The event generation means may generate an event from a status acquired with a microphone, acceleration sensor, sound pressure sensor, GPS, failure diagnosis sensor or CCD camera.

In a further preferred embodiment, the terminal device may further comprise second memory control means for controlling the memory of the contents, the event response control program, and the ordinal data. As a result, it will be possible to store information, event response control program, and ordinal data.

The transmission control means may further control the transmission of the request of the aggregate, for which the reception thereof has been designated from the aggregate output control means, to the contents provision device for providing the contents; and further comprise: a reception control means for controlling the reception of the contents belonging to the requested aggregate provided by the contents provision device, as well as the event response control program and the ordinal data associated with the requested aggregate.

In such a case, since the transmission control means will request the contents based on the designation of the aggregate output control means, for instance, it will be possible to receive contents such that the reception of contents will be completed only regarding the contents to be used for designating business when reproducing contents.

The aggregate output control means may also rewrite the ordinal data. As a result, even if it is the same contents, the order of reproducing contents can be changed.

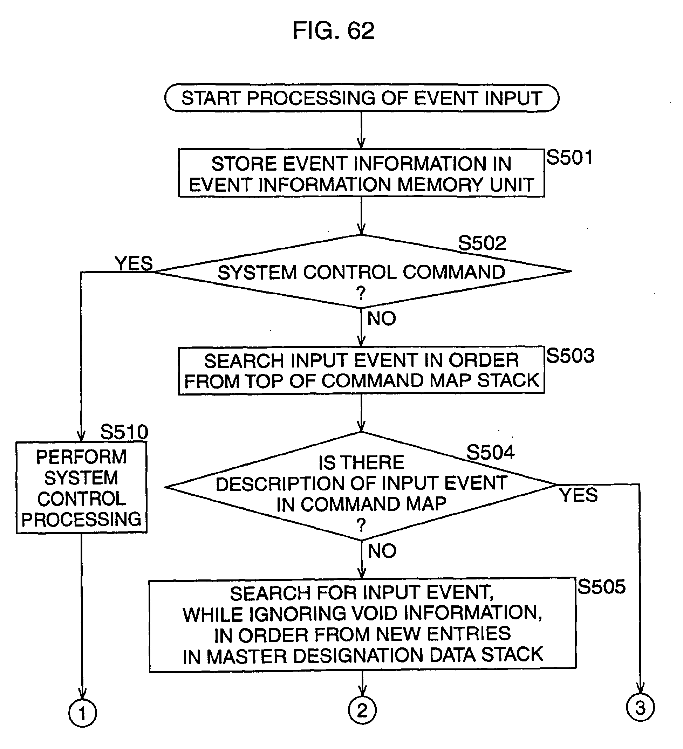

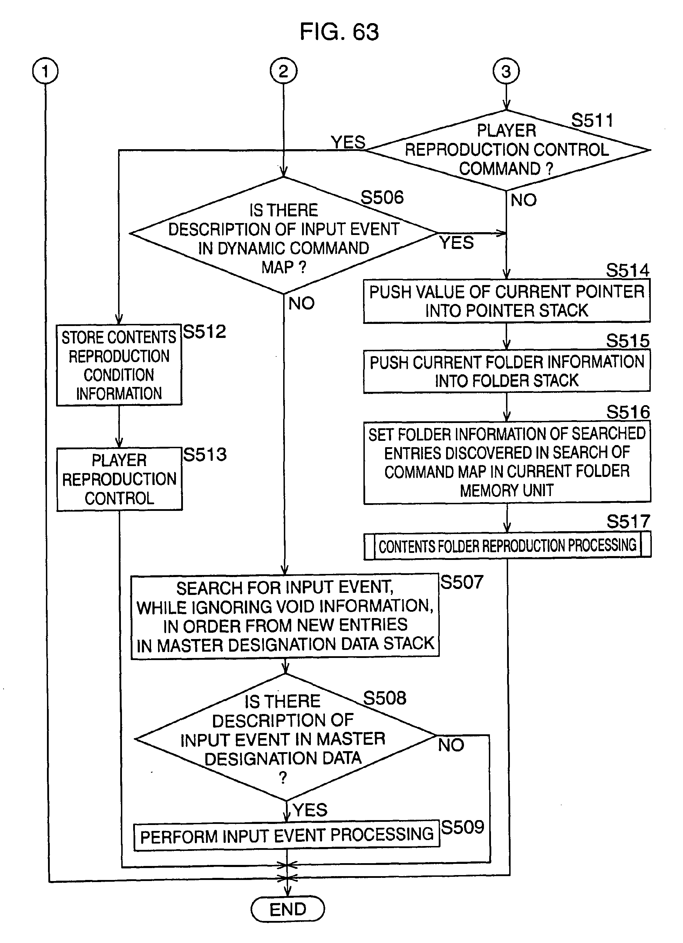

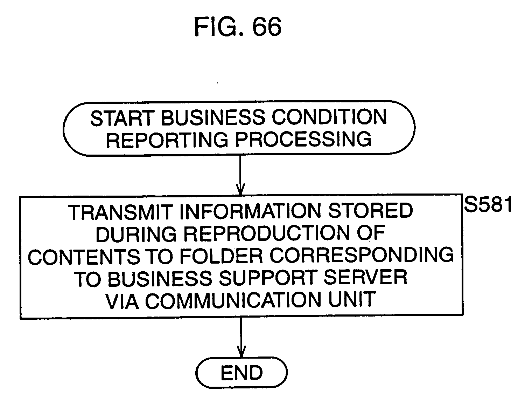

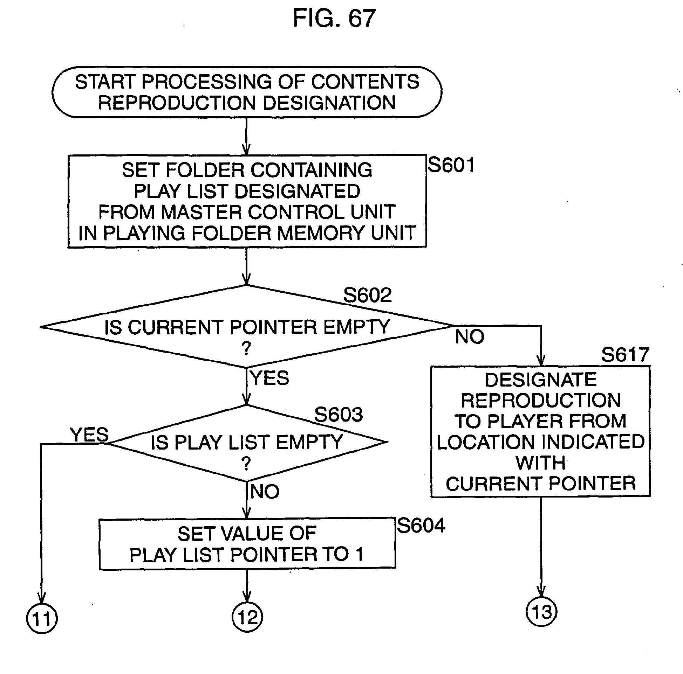

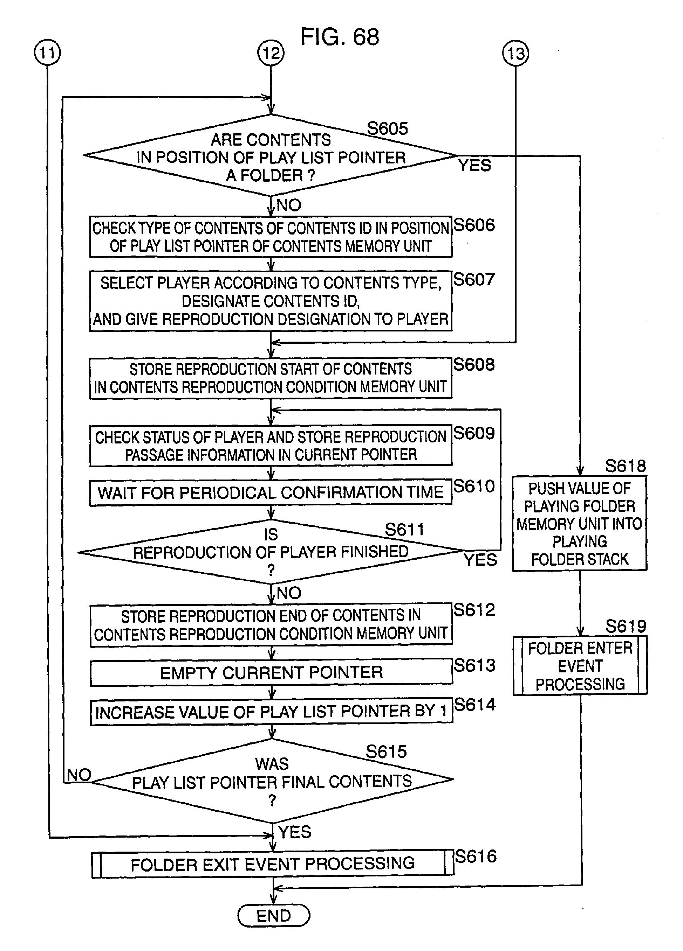

The business designation method according to the present invention comprises: an aggregate output control step (e.g., processing of step S504 to step S509 depicted in Fig. 62 and Fig. 63) for controlling the output of the aggregate based on an event response control program associated with the aggregate, which contains the contents being reproduced, among the event response control programs having described therein a command for an event and associated with each of the aggregates, and in correspondence with the event; a contents reproduction control step (e.g., processing of step S602 to step S607 depicted in Fig. 67 and Fig. 68) for controlling the reproduction of the contents contained in the aggregate based on ordinal data associated with the aggregate, for which the output thereof has been designated in the aggregate output control step, among the ordinal data having described therein the reproduction order of the contents associated with each of the aggregates; and a transmission control step (e.g., processing of step S581 depicted in Fig. 66) for controlling the transmission of the business condition information indicating the condition of the business to a contents provision device for providing the contents based on the event response control program associated with the aggregate containing the contents being reproduced, and in correspondence with the event.

The program of the first recording medium according to the present invention comprises: an aggregate output control step (e.g., processing of step S504 to step S509 depicted in Fig. 62 and Fig. 63) for controlling the output of the aggregate based on an event response control program associated with the aggregate, which contains the contents being reproduced, among the event response control programs having described therein a command for an event and associated with each of the aggregates, and in correspondence with the event; a contents reproduction control step (e.g., processing of step S602 to step S607 depicted in Fig. 67 and Fig. 68) for controlling the reproduction of the contents contained in the aggregate based on ordinal data associated with the aggregate, for which the output thereof has been designated in the aggregate output control step, among the ordinal data having described therein the reproduction order of the contents associated with each of the aggregates; and a transmission control step (e.g., processing of step S581 depicted in Fig. 66) for controlling the transmission of the business condition information indicating the condition of the business to a contents provision device for providing the contents based on the event response control program associated with the aggregate containing the contents being reproduced, and in correspondence with the event.

The first program according to the present invention comprises: an aggregate output control step (e.g., processing of step S504 to step S509 depicted in Fig. 62 and Fig. 63) for controlling the output of the aggregate based on an event response control program associated with the aggregate, which contains the contents being reproduced, among the event response control programs having described therein a command for an event and associated with each of the aggregates, and in correspondence with the event; a contents reproduction control step (e.g., processing of step S602 to step S607 depicted in Fig. 67 and Fig. 68) for controlling the reproduction of the contents contained in the aggregate based on ordinal data associated with the aggregate, for which the output thereof has been designated in the aggregate output control step, among the ordinal data having described therein the reproduction order of the contents associated with each of the aggregates; and a transmission control step (e.g., processing of step S581 depicted in Fig. 66) for controlling the transmission of the business condition information indicating the condition of the business to a contents provision device for providing the contents based on the event response control program associated with the aggregate containing the contents being reproduced, and in correspondence with the event.

With the business designation method, first recording medium, and first program of the present invention, output of the aggregate is controlled based on an event response control program associated with the aggregate, which contains the contents being reproduced, among the event response control programs having described therein a command for an event and associated with each of the aggregates, and in correspondence with the event, and the reproduction of the contents contained in the aggregate is controlled based on ordinal data associated with the aggregate, for which the output thereof has been designated with the aggregate output control means, among the ordinal data having described therein the reproduction order of the contents associated with each of the aggregates. And, the transmission of the business condition information indicating the condition of the business to a contents provision device for providing the contents is controlled based on the event response control program associated with the aggregate containing the contents being reproduced, and in correspondence with the event.

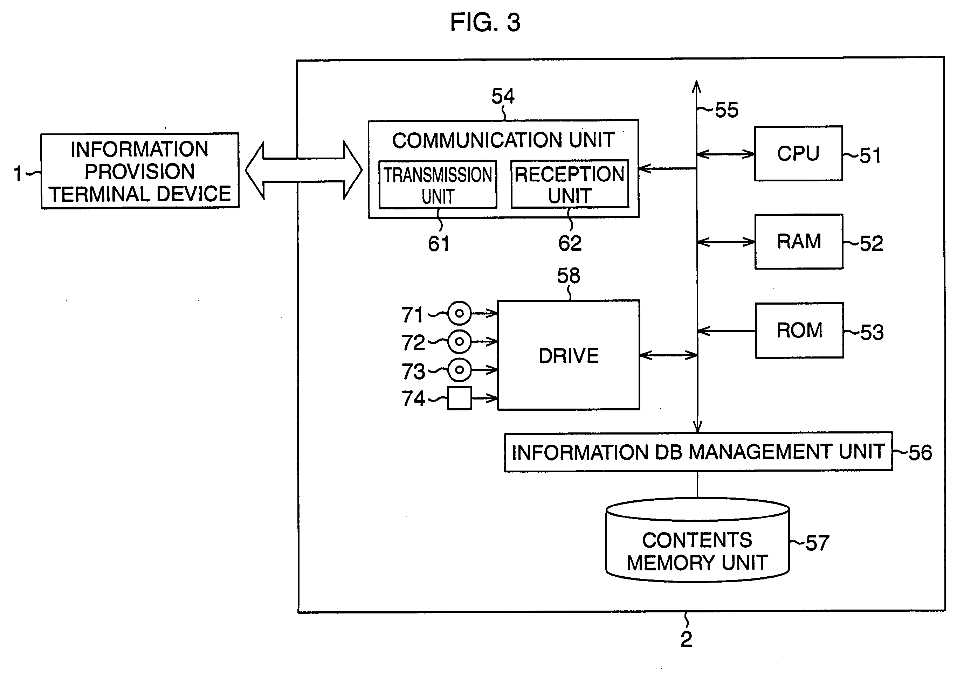

The contents provision device according to the present invention comprises: a memory control means (e.g., the contents memory unit 57 illustrated in Fig. 3) for controlling the contents containing a layered system with an aggregate of the contents as the unit thereof and having the designation of the business described therein, and controlling the memory of an event response control program having described therein a command for an event to a terminal device for reproducing the contents associated with each of the aggregates, and ordinal data having described therein the order of reproducing the contents; a transmission control means (e.g., the transmission unit 61 illustrated in Fig. 3) for controlling the transmission to the terminal device, when the aggregate is requested from the terminal device, of the contents belonging to the requested aggregate as well as the event response control program and the ordinal data associated with the requested aggregate; and a reception control means (e.g., the reception unit 62 illustrated in Fig. 3) for controlling the reception of the business condition information indicating the condition of the business to be transmitted from the terminal device.

With the contents provision device of the present invention, the contents containing a layered system with an aggregate of the contents as the unit thereof and having the designation of the business described therein are controlled, and the memory of an event response control program having described therein a command for an event to a terminal device for reproducing the contents associated with each of the aggregates, and ordinal data having described therein the order of reproducing the contents are controlled. And, the transmission to the terminal device, when the aggregate is requested from the terminal device, of the contents belonging to the requested aggregate as well as the event response control program and the ordinal data associated with the requested aggregate is controlled. Further, the reception of the business condition information indicating the condition of the business to be transmitted from the terminal device is controlled.

As a result, continuous designation of business at an appropriate timing and in appropriate order with minimal operation will be enabled. Further, it will be possible to comprehend the business condition of the terminal device from the business condition information transmitted from the terminal device.

The contents provision device can transmit contents to the terminal device via a wired or wireless transmission or broadcasting line. For example, the contents provision device can transmit contents to the terminal device via a wired or wireless network.

This memory control means, transmission control means or reception control means may be constituted with dedicated hardware, or realized with a computer loaded with a program.

The contents provision method according to the present invention comprises: a memory control step for controlling the contents containing a layered system with an aggregate of the contents as the unit thereof and having the designation of the business described therein, and controlling the memory of an event response control program having described therein a command for an event to a terminal device for reproducing the contents associated with each of the aggregates, and ordinal data having described therein the order of reproducing the contents; a transmission control step for controlling the transmission to the terminal device, when the aggregate is requested from the terminal device, of the contents belonging to the requested aggregate as well as the event response control program and the ordinal data associated with the requested aggregate; and a reception control step for controlling the reception of the business condition information indicating the condition of the business to be transmitted from the terminal device.

The program of the second recording medium according to the present invention comprises: a memory control step for controlling the contents containing a layered system with an aggregate of the contents as the unit thereof and having the designation of the business described therein, and controlling the memory of an event response control program having described therein a command for an event to a terminal device for reproducing the contents associated with each of the aggregates, and ordinal data having described therein the order of reproducing the contents; a transmission control step for controlling the transmission to the terminal device, when the aggregate is requested from the terminal device, of the contents belonging to the requested aggregate as well as the event response control program and the ordinal data associated with the requested aggregate; and a reception control step for controlling the reception of the business condition information indicating the condition of the business to be transmitted from the terminal device.

The second program according to the present invention comprises: a memory control step for controlling the contents containing a layered system with an aggregate of the contents as the unit thereof and having the designation of the business described therein, and controlling the memory of an event response control program having described therein a command for an event to a terminal device for reproducing the contents associated with each of the aggregates, and ordinal data having described therein the order of reproducing the contents; a transmission control step for controlling the transmission to the terminal device, when the aggregate is requested from the terminal device, of the contents belonging to the requested aggregate as well as the event response control program and the ordinal data associated with the requested aggregate; and a reception control step for controlling the reception of the business condition information indicating the condition of the business to be transmitted from the terminal device.

With the contents provision method, second recording medium and second program of the present invention, the contents containing a layered system with an aggregate of the contents as the unit thereof and having the designation of the business described therein are controlled, and the memory of an event response control program having described therein a command for an event to a terminal device for reproducing the contents associated with each of the aggregates, and ordinal data having described therein the order of reproducing the contents are controlled. And, the transmission to the terminal device, when the aggregate is requested from the terminal device, of the contents belonging to the requested aggregate as well as the event response control program and the ordinal data associated with the requested aggregate is controlled. Further, the reception of the business condition information indicating the condition of the business to be transmitted from the terminal device is controlled.

With the business management system according to the present invention, the contents provision device comprises: a memory control means for controlling the memory of the contents, and controlling the memory of an event response control program having described therein a command for an event to a terminal device and associated with each of the aggregates, and ordinal data having described therein the order of reproducing the contents; and a first transmission control means for controlling the transmission to the terminal device, when the aggregate is requested from the terminal device, of the contents belonging to the requested aggregate as well as the event response control program and the ordinal data associated with the requested aggregate; and wherein the terminal device comprises: a first reception control means for controlling the reception of the contents, the event response control program, and the ordinal data transmitted from the contents provision device; an aggregate output control means for controlling the output of the aggregate based on the event response control program associated with the aggregate containing the contents being reproduced among the received event response control programs, and in correspondence with the event; a contents reproduction control means for controlling the reproduction of the contents contained in the aggregate based on the ordinal data associated with the aggregate, for which the output thereof has been designated with the aggregate output control means, among the received ordinal data; and a second transmission control means for controlling the transmission of the business condition information indicating the condition of the business to the contents provision device based on the event response control program associated with the aggregate containing the contents being reproduced, and in correspondence with the event; and wherein the contents provision device further comprises: a second reception control means for controlling the reception of the business condition information to be transmitted from the terminal device.

With the business management system of the present invention, the contents are controlled, and the memory of an event response control program having described therein a command for an event to a terminal device for reproducing the contents associated with each of the aggregates; and ordinal data having described therein the order of reproducing the contents is controlled; and the transmission to the terminal device, when the aggregate is requested from the terminal device, of the contents belonging to the requested aggregate as well as the event response control program and the ordinal data associated with the requested aggregate is controlled. Further, the reception of the contents, the event response control program, and the ordinal data transmitted from the contents provision device is controlled; the output of the aggregate is controlled based on the event response control program associated with the aggregate containing the contents being reproduced among the received event response control programs, and in correspondence with the event; and the reproduction of the contents contained in the aggregate is controlled based on the ordinal data associated with the aggregate, for which the output thereof has been designated with the aggregate output control means, among the received ordinal data. And, the transmission of the business condition information indicating the condition of the business to the contents provision device is controlled based on the event response control program associated with the aggregate containing the contents being reproduced, and in correspondence with the event, and the reception of the business condition information to be transmitted from the terminal device is controlled.

A system represents the overall device constituted from a plurality of devices.

The business management method according to the present invention comprises: a memory control step for controlling the memory of the contents, and controlling the memory of an event response control program having described therein a command for an event to a terminal device and associated with each of the aggregates, and ordinal data having described therein the order of reproducing the contents; a first transmission control step for controlling the transmission to the terminal device, when the aggregate is requested from the terminal device, of the contents belonging to the requested aggregate as well as the event response control program and the ordinal data associated with the requested aggregate; a first reception control step for controlling the reception of the contents, the event response control program, and the ordinal data transmitted from the contents provision device; an aggregate output control step for controlling the output of the aggregate based on the event response control program associated with the aggregate containing the contents being reproduced among the received event response control programs, and in correspondence with the event; a contents reproduction control step for controlling the reproduction of the contents contained in the aggregate based on the ordinal data associated with the aggregate, for which the output thereof has been designated in the aggregate output control step, among the received ordinal data; a second transmission control step for controlling the transmission of the business condition information indicating the condition of the business to the contents provision device based on the event response control program associated with the aggregate containing the contents being reproduced, and in correspondence with the event; and a second reception control step for controlling the reception of the business condition information to be transmitted from the terminal device.

With the business management method of the present invention, the contents are controlled, and the memory of an event response control program having described therein a command for an event to a terminal device for reproducing the contents associated with each of the aggregates, and ordinal data having described therein the order of reproducing the contents is controlled; and the transmission to the terminal device, when the aggregate is requested from the terminal device, of the contents belonging to the requested aggregate as well as the event response control program and the ordinal data associated with the requested aggregate is controlled. Further, the reception of the contents, the event response control program, and the ordinal data transmitted from the contents provision device is controlled; the output of the aggregate is controlled based on the event response control program associated with the aggregate containing the contents being reproduced among the received event response control programs, and in correspondence with the event; and the reproduction of the contents contained in the aggregate is controlled based on the ordinal data associated with the aggregate, for which the output thereof has been designated with the aggregate output control means, among the received ordinal data. And, the transmission of the business condition information indicating the condition of the business to the contents provision device is controlled based on the event response control program associated with the aggregate containing the contents being reproduced, and in correspondence with the event, and the reception of the business condition information to be transmitted from the terminal device is controlled.

### BRIEF DESCRIPTION OF THE DRAWINGS

Fig. 1 is a diagram for explaining an embodiment of the information provision system pertaining to the present invention;
Fig. 2 is a diagram showing an example of the internal structure of the information provision terminal device;
Fig. 3 is a diagram showing an example of the internal structure of the information provision server;
Fig. 4 is a block diagram showing a more detailed constitution of an embodiment of the information provision system pertaining to the present invention;
Fig. 5 is a diagram for explaining the schematic of the operation of the information provision terminal device;
Fig. 6 is a block diagram showing a more detailed constitution of an embodiment of the information provision system pertaining to the present invention;
Fig. 7 is a block diagram for explaining a more detailed constitution of the master control unit;
Fig. 8 is a block diagram for explaining the operation of the event processing unit;
Fig. 9 is a diagram for explaining the reading of the command map data, dynamic command map data and master designation data, and the search of command based on the input event;
Fig. 10 is a diagram for explaining the relationship between the contents, play list and master designation data, and the folder;
Fig. 11 is a diagram showing the concept of a folder;
Fig. 12 is a diagram showing the data structure for managing information;
Fig. 13 is a diagram showing an example of the data structure in the information provision terminal device;
Fig. 14 is a diagram showing the operation of the information provision terminal device when operated by the user 1;
Fig. 15 is a diagram for explaining the information provision server;
Fig. 16 is a diagram for explaining the basic form of operation of the information provision terminal device from which information is continuously extracted;
Fig. 17 is a diagram for explaining the basic constitution of a folder;
Fig. 18 is a diagram showing an example of a folder having a layered system;
Fig. 19 is a diagram showing and example of the master designation data;
Fig. 20 is a diagram for explaining the operation of downloading the folder, contents, master designation data and play list from the information provision server to the information provision terminal device;
Fig. 21 is a diagram for explaining the operation of downloading the folder, contents, master designation data and play list from the information provision server to the information provision terminal device;
Fig. 22 is a diagram for explaining the operation of downloading the folder, contents, master designation data and play list from the information provision server to the information provision terminal device;
Fig. 23 is a diagram for explaining the operation of downloading the folder, contents, master designation data and play list from the information provision server to the information provision terminal device;
Fig. 24 is a diagram for explaining the operation of downloading the folder, contents, master designation data and play list from the information provision server to the information provision terminal device;
Fig. 25 is a diagram for explaining the operation of downloading the folder, contents, master designation data and play list from the information provision server to the information provision terminal device;
Fig. 26 is a diagram for explaining the operation of downloading the folder, contents, master designation data and play list from the information provision server to the information provision terminal device;
Fig. 27 is a flowchart for explaining the processing of activating the information provision terminal device;
Fig. 28 is a flowchart for explaining the activation processing;
Fig. 29 is a flowchart for explaining the contents folder reproduction processing;
Fig. 30 is a flowchart for explaining the event input processing;
Fig. 31 is a flowchart for explaining the previous command processing;
Fig. 32 is a flowchart for explaining the subsequent command processing;
Fig. 33 is a flowchart for explaining the return command processing;
Fig. 34 is a flowchart for explaining the processing of reproduction designation of contents;
Fig. 35 is a flowchart for explaining the folder enter event processing;
Fig. 36 is a flowchart for explaining the folder exit event processing;
Fig. 37 is a block diagram for explaining the constitution of an embodiment of the business support system as the information provision system pertaining to the present invention;
Fig. 38 is a block diagram showing a further specific example of the business support system;
Fig. 39 is a diagram showing the business support terminal device installed in a vehicle;
Fig. 40 is a diagram showing the external appearance of the business support terminal device;
Fig. 41 is a block diagram showing the detailed constitution of the business support system pertaining to the present invention;
Fig. 42 is a diagram showing an example of the voice command as an event of the business support terminal device;
Fig. 43 is a diagram showing the constitution of a folder in the business support system;
Fig 44 is a diagram for explaining the folder in detail;
Fig. 45 is a diagram for explaining the processing of selecting the contents for supporting the business;
Fig. 46 is a diagram for explaining the processing of comprehending the business condition;
Fig. 47 is a diagram for explaining a detailed example of the business condition in a time series in the business of delivering packages;
Fig. 48 is a diagram for explaining the processing of storing the business condition information in the contents memory unit;
Fig. 49 is a diagram for explaining an example of the business condition information;
Fig. 50 is a diagram for explaining the upload of the business condition information to the business support server;
Fig. 51 is a diagram for explaining the reproduction of contents in the business support terminal device;
Fig. 52 is a diagram for explaining the upload of the business condition information from the business support terminal device to the business support server;
Fig. 53 is a diagram for explaining the business condition information to be read out by the business management terminal device;
Fig. 54 is a diagram for explaining the business condition information memory unit;
Fig. 55 is a diagram for explaining the contents reproduction condition information;
Fig. 56 is a diagram for explaining the event information;
Fig. 57 is a diagram for explaining the sensor information;
Fig. 58 is a diagram showing another example of the constitution of a folder;
Fig. 59 is a diagram showing an example of the contents for supporting the start of business;
Fig. 60 is a diagram for explaining an example of the contents for supporting the next business;
Fig. 61 is a diagram for explaining an example of the contents for supporting emergency business;
Fig. 62 is a flowchart for explaining the processing of event input by the master control unit of the business support terminal device;
Fig. 63 is a flowchart for explaining the processing of event input by the master control unit of the business support terminal device;
Fig. 64 is a flowchart for explaining the business condition acquisition processing of the master control unit of the business support terminal device;
Fig. 65 is a flowchart for explaining the business condition memory processing of the master control unit of the business support terminal device;
Fig. 66 is a flowchart for explaining the business condition reporting processing of the master control unit of the business support terminal device;
Fig. 67 is a flowchart for explaining the processing of contents reproduction designation by the master control unit and play list reader of the business support terminal device; and
Fig. 68 is a flowchart for explaining the processing of contents reproduction designation by the master control unit and play list reader of the business support terminal device.

### BEST MODE FOR CARRYING OUT THE INVENTION

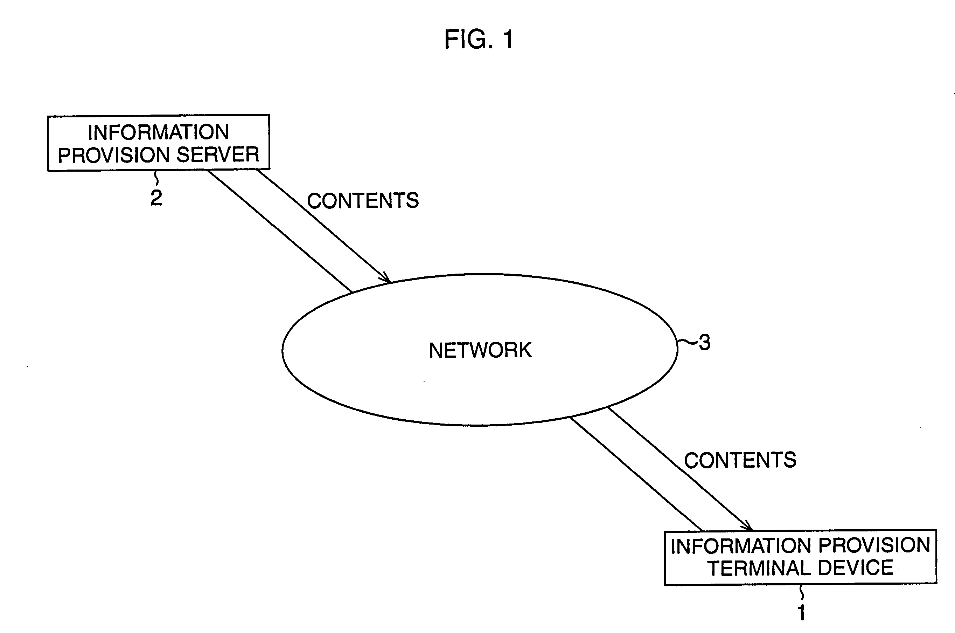

Fig. 1 is a diagram for explaining an embodiment of the information provision system pertaining to the present invention.

An information provision terminal device 1 receives contents, or a type of information, from an information provision server 2 via a network 3, and provides such contents to a user. In the present invention, contents, for example, are handled as contents data.

The contents handled with the information provision device of the present invention can be classified into the following three categories:
1. Reproduced data contents;
2. Coded data contents; and
3. Functional contents.

Details of the respective contents will be described later.

In the present embodiment, the received contents are provided to the user according to the following events:
1. Human interface event;
2. Sensor event;
3. Calendar timer event;
4. Network event;
5. Player event;
6. Contents event; and
7. Open line event.

Operation of the user is input as the human interface event via the human interface unit described later. Information of the sensor connected to the sensor connection unit described later is input as the sensor event.

The calendar timer event is an event that arises based on the date and hour or time. As a result of using this event, functions to be conducted after the lapse of a certain length of time or at a certain point in time can be designated.

The network event is an event sent via the network 3. The generation source of an event, for example, may be the information provision server 2 or the information provision terminal device 1, or a network camera or network sensor not shown.

The player event is an event that is generated by the player (reproduction unit or reproduction device) of the information provision terminal device 1. This player event notifies the (change of the) player's operational status such as the start, pause or stop of reproduction.

The contents event is an event generated by the contents. The contents producer is able to designate the timing of generation by employing master designation data. As a result of using the contents event, it will be possible to synchronize a plurality of contents, or to notify the user of the generation of an event.

The open line event is an event generated due to changes in the communication status. As a result of using the open line event, it will be possible to change the function of the contents according to the changes in the communication status. The open line event will enable a different function for the respective contents.

In other words, when communication is not possible, it will be possible to provide a notification to such effect, enable download afterward, or switch to the reproduction of different contents.

The information provision server 2 is used for providing (distributing) to the information provision terminal device 1 the contents to be provided to the user 41 via the network 3.

The network 3 is a contents data transmission medium formed from a wired or wireless telecommunications circuit. The network 3 is not limited to a transmission medium or protocol, and it will suffice so as long as bi-directional communication is enabled, and includes optical fiber. For instance, the network 3 may be constituted with a combination of a wireless network, which as a data communication network of a portable phone carrier, and a wireless LAN (Local Area Network) formed from a communication station constituting an area referred to as a hot spot.

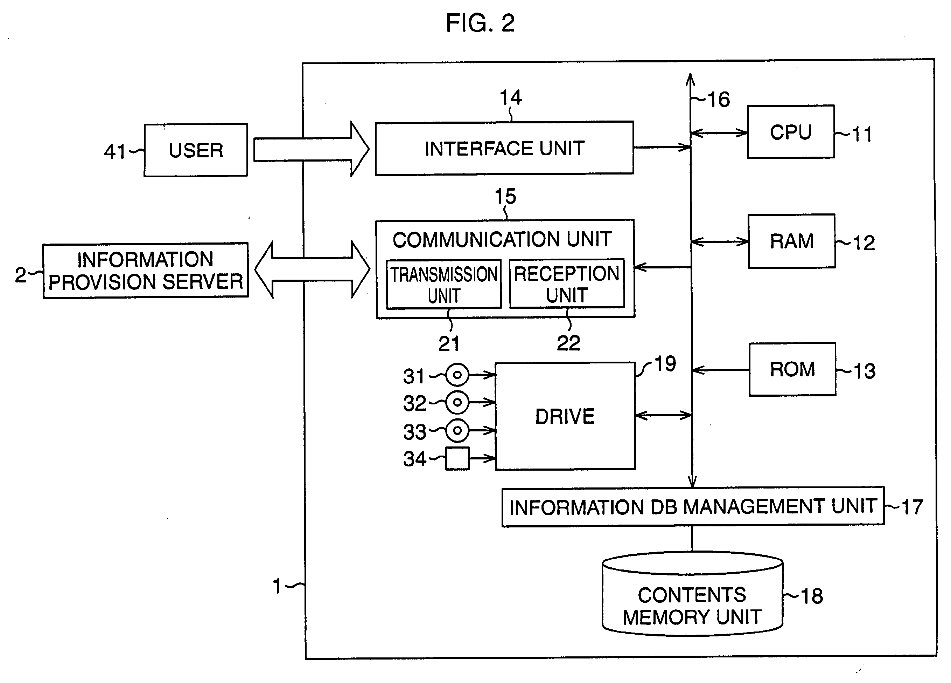

Fig. 2 is a diagram showing an example of the internal structure of the information provision terminal device 1. The information provision terminal device 1 includes a CPU (Central Processing Unit) 11, a RAM (Random Access Memory) 12, a ROM (Read Only Memory) 13, an interface unit 14 and a communication unit 15. The CPU 11, RAM 12, ROM 13, interface unit 14 and communication unit 15 are mutually connected with a bus 16.

The CPU 11 executes various types of processing according to the program stored in the RAM 12 or ROM 13. The RAM 12 arbitrarily stores program or data to be executed by the CPU 11.

An interface unit 14 is also connected to the CPU 11 via the bus 16. A signal corresponding to the operation of the user 41 is input to the interface unit 14. The CPU 11 executes various types of processing in correspondence with the command input from the interface unit 14. And, the CPU 11 outputs sounds and images obtained as a result of such processing via the interface unit 14.

A communication unit 15 is also connected to the CPU 11 via the bus 16. Specifically, the communication unit 15 communicates with the information provision server 2 via the network 3. In the case of this example, the reception unit 22 of the communication unit 15 receives the contents transmitted from the information provision server 2, the transmission unit 21 of the communication unit 15 transmits the contents request to the information provision server 2, and the communication unit 15 functions as the interface with the network 3.

Moreover, a program may be acquired via the communication unit 15 and stored in the RAM 12.

A contents memory unit 18 is also connected to the bus 16 via the information database (DB) management unit 17. The contents memory unit 18 is constituted, for instance, of a hard disk, optical disk, magnetic optical disk or semiconductor memory, and stores the contents. The information database management unit 17 controls the storage of contents in the contents memory unit 18, or the read-out of the contents.

In addition, when the magnetic disk 31, optical disk 32, magnetic optical disk 33 or semiconductor memory 34 is installed in the drive 19 connected to the bus 16, the drive 19 drives such medium and acquires the program or data recorded therein. The acquired program or data is forwarded and stored in the RAM 12 or the writable ROM 13 as necessary.

Incidentally, the information provision terminal device 1 may also be constituted without providing the drive 19.

The user 41 operates the operational unit connected to the interface unit 14 to operate the information provision terminal device 1. The operational unit may be built in the information provision terminal device 1, or may be provided externally.

It is desirable that the user, who is subject to certain restrictions, is able to easily operate the operational unit.

Under certain constrained conditions such as where a mechanical operation with the hand or foot is difficult, a voice command is used. Here, the operational unit will be a microphone. Or, the operation may be made with an imaging device (optical means) such as a camera (video camera) capturing the line of sight, expression or gesture. Under certain constrained conditions where it is difficult to use the voice command, such as in a train, it is desirable to employ a mechanical operational unit. A mechanical operational unit may be a widely used push button, switch, keyboard, pointing device or the like.

With an application where it is preferable to keep the operation a secret from others, it is desirable to provide an operational unit in which others will not know the operation.

In the embodiment of the in-car information provision terminal device 1, a voice command and a wireless remote controller are used as the operational unit. It is also possible to display a graphical interface screen on a display device such as a CRT display device or liquid crystal display device, and use a pointing device on the screen to conduct the operation.

In a situation where it is undesirable to divert one's attention from one's visual perception as with a driver driving a vehicle, it is desirable to enable the control only with a voice command.

In an application where an event arises requiring an instantaneous operation such in emergency situations, it is desirable to enable operation with a simple operation such as with an emergency button. For example, it is desirable to install an emergency button near the driver's seat.

Fig. 3 is a diagram showing an example of the internal structure of the information provision server 2. The information provision server 2 includes a CPU 51, a RAM 52, a ROM 53 and a communication unit 54. The CPU 51, RAM 52, ROM 53 and communication unit 54 are mutually connected via a bus 55.

The CPU 51 executes various types of processing according to the program stored in the RAM 52 or ROM 53. The RAM 52 arbitrarily stores program or data to be executed by the CPU 51.

A communication unit 54 is also connected to the CPU 51 via the bus 55. The communication unit 54 communicates with the information provision terminal device 1 via the network 3. Specifically, the communication unit 54 includes a transmission unit 61 and a reception unit 62. In the case of this example, the transmission unit 61 of the communication unit 54 transmits the contents to the information provision terminal device 1, the reception unit 62 of the communication unit 54 receives the contents request transmitted from the information provision terminal device 1, and the communication unit 54 functions as the interface with the network 3.

Moreover, a program may be acquired via the communication unit 54 and stored in the RAM 52.

A contents memory unit 57 is also connected to the bus 55 via an information database (DB) management unit 56. The contents memory unit 57 is constituted, for example, of a hard disk, optical disk, magnetic optical disk, semiconductor memory or magnetic tape, and stores the contents. The information database management unit 56 controls the storage of contents in the contents memory unit 57, or the read-out of the contents.

In addition, when the magnetic disk 71, optical disk 72, magnetic optical disk 73 or semiconductor memory 74 is installed in the drive 58 connected to the bus 55, the drive 58 drives such medium and acquires the program or data recorded therein. The acquired program or data is forwarded and stored in the RAM 52 or the writable ROM 53 as necessary.

Incidentally, the information provision server 2 may also be constituted without providing the drive 58.

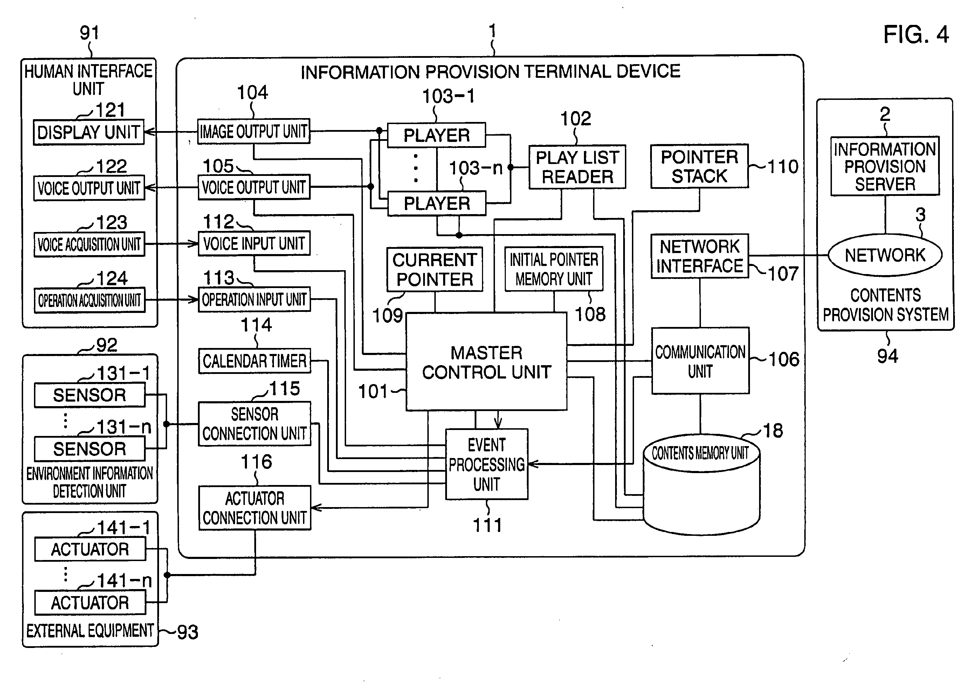

Fig. 4 is a block diagram showing a more detailed constitution of an embodiment of the information provision system pertaining to the present invention. The human interface unit 91, based on the signal or data output from the information provision terminal device 1, presents images, sounds, vibration, light and so on to the user 41. Further, the human interface unit 91 is operated by the user 41, creates a signal or data corresponding to the operation, and supplies the created signal or data representing the operation to the information provision terminal device 1.

The environment information detection unit 92 acquires information relating to the environment of the information provision terminal device 1, and generates a signal or data representing the environment from the acquired information. Information relating to the environment acquired by the environment information detection unit 92 may be information relating to light such as images or brightness, information relating to sound such as voices or volume (sound pressure), information relating to spatial positioning such as the operational status, position, acceleration or speed of other devices or oneself, information relating to the climate such as temperature, humidity or wind velocity, information relating to the chemical environment such as the type or amount of chemical substance to be distributed circumferentially, and so on.

The external equipment 93, based on the signal from the information provision terminal device 1, engages in a prescribed mechanical, electrical or chemical operation.

The contents provision system 94, for instance, is constituted of an information provision server 2 and network 3, and provides to the information provision terminal device 1 the contents belonging to a prescribed aggregate in accordance with the request from the information provision terminal device 1.

The information provision terminal device 1 includes a master control unit 101, a play list reader 102, players 103-1 to 103-n, an image output unit 104, a voice output unit 105, a communication unit 106, a network interface 107, an initial pointer memory unit 108, a current pointer 109, a pointer stack 110, an event processing unit 111, a voice input unit 112, an operation input unit 113, a calendar timer 114, a sensor connection unit 115 and an actuator connection unit 116.

The master control unit 101 reads the master designation data, command map data or dynamic command map data, which is an example of the event response control program having described therein a command for an event and associated with the aggregate of contents and designates the output of the aggregate of contents to the play list reader 102 based on the read master designation data, command map data or dynamic command map data as well as the event from the event processing unit 111.

Here, an aggregate of contents is formed from 0 or 1 or a plurality of contents having some kind of association. For instance, an aggregate may be formed to be an aggregate composed of contents stored in a folder or directory. Association for determining the aggregate may be described for the respective contents.

To be associated with an aggregate means that an event response control program can be specified with the aggregate. Being associated with an aggregate includes associating an empty event response control program with the aggregate. For example, when the aggregate is formed from an aggregate of information stored in a folder, as a result of the event response control program being stored in the folder, the event response control program will be associated with the aggregate of information stored in the folder.

The master control unit 101 reads the master designation data, command map data and dynamic command map data described later, and designates the reception of an aggregate of contents belonging to an aggregate to the communication unit 106 based on the read master designation data, command map data and dynamic command map data, as well as the event from the event processing unit 111.

The play list reader 102 designates the output of contents to the players 103-1 to 103-n based on the play list, which is an example of ordinal data in which the output order of contents is described therein. When the output of a prescribed aggregate of contents is designated from the master control unit 101, the play list reader 102 designates the output of contents to the players 103-1 to 103-n based on the play list, which is an example of ordinal data associated with the aggregate for which the output thereof has been designated.

For example, when the aggregate is formed from an aggregate of contents stored in a folder, the play list, which is an example of ordinal data, will be stored in the folder, and the play list, which is an example of ordinal data, will be associated with the aggregate of contents stored in the folder.

When the output of all contents in which the order thereof is described in the play list is finished with respect to a prescribed aggregate, the play list reader 102 supplies to the master control unit 101 information indicating the completion of output of the contents of such aggregate.

The players 103-1 to 103-n reproduce the contents recorded in the contents recording unit 18 based on the control of the play list reader 102, and outputs the reproduced contents to the image output unit 104 and voice output unit 105. The players 103-1 to 103-n respectively reproduce contents of a different format.

Upon completing the reproduction of contents, the players 103-1 to 103-n supply information indicating the reproduction of contents to the play list reader 102.

The image output unit 104 outputs to the human interface unit 91, in a prescribed format, an image, which is an output of the contents supplied from one of the players 103-1 to 103-n. The voice output unit 105 outputs to the human interface unit 91, in a prescribed format, a sound, which is an output of the contents supplied from one of the players 103-1 to 103-n.

When the reception of a prescribed aggregate of contents is designated from the master control unit 101, the communication unit 106 transmits to the information provision server 2, via the network interface 107 and network 3, the request for an aggregate of contents for which the reception thereof has been designated. Via the network interface 107 and network 3, the communication unit 106 receives the contents belonging to the requested aggregate; the master designation data, command map data or dynamic command map data, which is an example of the event response control program associated with the requested aggregate; or the play list, which is an example of ordinal data associated with the requested aggregate transmitted from the information provision server 2.

Further, the communication unit 106 generates an event representing that the reception of contents has started, or the reception of contents has been completed, and supplies such generated event to the event processing unit 111.

The network interface 107 is, for example, an NIC (Network Interface Card), and transmits or receives contents or data corresponding to the format of the connected network. The network interface 107, for instance, transmits or receives a packet storing contents or data via a wireless medium when the network 3 is a wireless network 312.

The initial pointer memory unit 108 stores an initial pointer representing the aggregate of contents to be output upon activation. The current pointer 109 stores information indicating the position of the contents currently being output in the play list having described therein the output order of the contents.

The pointer stack 110 pushes and stores pointer information which is the value of the current pointer 109 representing the contents output at such time when the master control unit 101 designates the output of the aggregate of contents and pops and reads the stored pointer information when the output of the aggregate of contents is finished. In other words, the pointer stack 110 stores the pointer information when the output aggregate is changed as a log. As a result, when the output of all contents belonging to the aggregate is finished based on the play list, contents that were output prior to the output aggregate being changed will be output.

The event processing unit 111 acquires an event from the event source, and supplies the acquired event to the master control unit 101. For example, the event processing unit 111 acquires an event representing that the reception of contents supplied from the communication unit 106 is complete, an event which is a command corresponding to the vocalization of the user 41 supplied from the voice input unit 112, and event corresponding to the operation of the user 41 supplied from the operation input unit 113, an event corresponding to the year, month, day, hour or time supplied from the calendar timer 114, an event representing environmental changes supplied from the sensor connection unit 115, and supplies such events to the master control unit 101.

The voice input unit 112 recognizes the word vocalized by the user 41 based on the voice signal vocalized by the user 41 which was supplied from the voice acquisition unit 123 of the human interface unit 91, and supplies the recognized voice as an event (command); that is, it generates an event representing the recognized voice, and supplies the generated event to the event processing unit 111. A command, for example, may be text representing the recognized word.

The operation input unit 113 generates an event representing the user's operation based on the signal corresponding to the operation of the user 41 which was supplied from the operation acquisition unit 124 of the human interface unit 91, and supplies the generated event to the event processing unit 111.

The calendar timer 114 generates an event in relation to the set year, month, day or hour, or an event corresponding to the time (period), and supplies the generated event to the event processing unit 111. For example, the calendar timer 114 generates an event representing the set hour when it becomes the hour set by the master control unit 101, and supplies the generated event to the event processing unit 111. For example, when the time (period) is set by the master control unit 101, the calendar timer 114 generates an event representing that the time (period) has elapsed when the set time (period) has elapsed upon the start of count being designated, and supplies the generated event to the event processing unit 111.

The sensor connection unit 115 generates an event based on the signal representing the environmental information supplied from the environment information detection unit 92, and supplies the generated event to the event processing unit 111. The actuator connection unit 116 supplies a signal designating an operation to the external equipment 93 based on the control of the master control unit 101.

The human interface unit 91 includes a display unit 121, a voice output unit 122, a voice acquisition unit 123 or an operation acquisition unit 124.

The display unit 121 displays images or text based on the signal or data supplied from the image output unit 104. The display unit 121 may be a liquid crystal display device, a CRT (Cathode-Ray Tube) display device, an LED display device or an organic EL (Electro Luminescence) display device capable of displaying images or text.

The voice output unit 122 outputs a voice (emits sound) based on the signal or data supplied from the voice output unit 105. For example, the voice output unit 122 may be a loud speaker or a buzzer. The voice acquisition unit 123 is a microphone, for example, and acquires the voice vocalized by the user 41, and supplies the signal or data representing the acquired voice to the voice input unit 112.

The operation acquisition unit 124 is a switch, for example, and supplies the signal or data corresponding to the operation of the user 41 to the operational input connection unit 113.

The environment information detection unit 92 includes sensors 131-1 to 131-n. Sensors 131-1 to 131-n respectively acquire different types of information, or acquire the same type of information.

For example, the sensor 131-1 acquires information relating to light such as images or brightness, and supplies the signal or data representing the acquired information relating to light to the sensor connection unit 115. The sensor 131-2 acquires information relating to sound such as a voice or volume (sound pressure), and supplies the signal or data representing the acquired information relating to sound to the sensor connection unit 115. The sensor 131-3 acquires information relating to spatial positioning such as acceleration or speed, and supplies the signal or data representing the acquired information relating to spatial positioning to the sensor connection unit 115.

The external equipment 93 includes actuators 141-1 to 141-n. The actuators 141-1 to 141-n respectively engage in different types of operations, or engage in the same type of operation. The actuators 141-1 to 141-n may be respectively constituted from, for instance, an electrical switch, solenoid, hydraulic switch, air valve, electric motor, hydraulic cylinder, or air cylinder.

For example, the actuator 141-1 may be an electrical switch for locking the door lock of the vehicle having installed therein the information provision terminal device 1. For example, the actuator 141-2 may be a motor for opening and closing the window of the vehicle having installed therein the information provision terminal device 1. For example, the actuator 141-2 may be a motor for operating the butterfly valve of the air conditioner of the vehicle having installed therein the information provision terminal device 1. For example, the actuator 141-3 may be an electrical switch for controlling the lighting of the headlamp of the vehicle having installed therein the information provision terminal device 1.

Incidentally, the information provision terminal device 1 may employ a constitution of not including the environment information detection unit 92 or external equipment 93. In such a case, the information provision terminal device 1 may also employ a constitution without including the sensor connection unit 115 or actuator connection unit 116.

Moreover, the human interface unit 91, environment information detection unit 92 or external equipment 93 may be an independent device, or may be built in the information provision terminal device 1. In particular, the sensors 131-1 to 131-n may be partially or wholly built in the information provision terminal device 1.

Further, the communication unit 106 communicates with the information provision server 2 via a plurality of transmission paths.

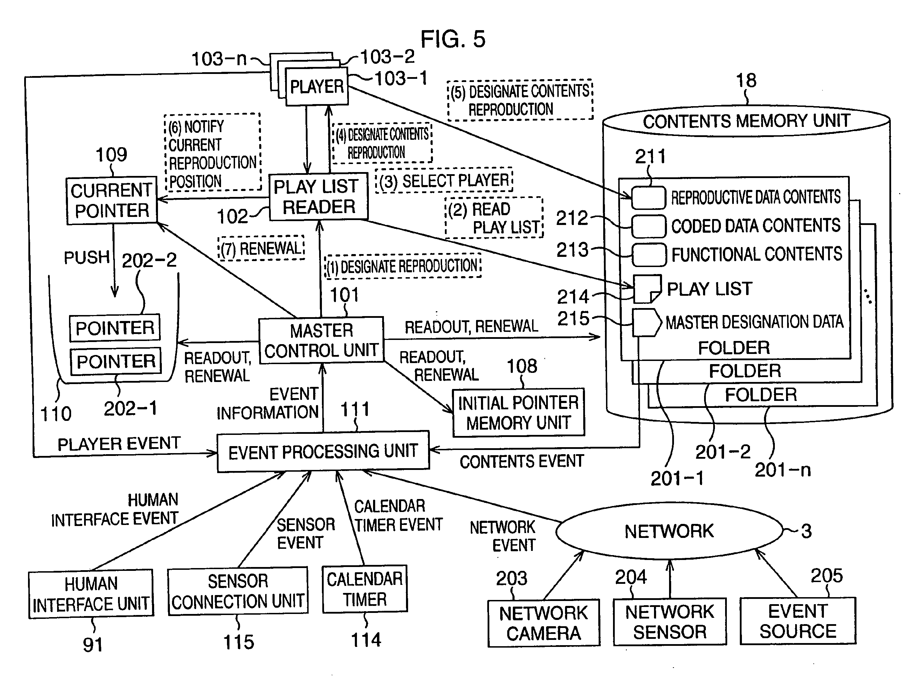

Fig. 5 is a diagram for explaining the schematic of the operation of the information provision terminal device 1.

The contents memory unit 18 stores the contents in a prescribed data structure. The contents memory unit 18 stores, for each of the folders 201-1 to 201-n, reproductive data contents 211, coded data contents 212, functional contents 213, play list 214 or master designation data 215. The folders 201-1 to 201-n have the data structure described later.

When the folders 201-1 to 201-n do not have to be differentiated separately, they will be simply referred to as a folder 201 below.

In the following explanation, the reproductive data contents 211 may be referred to as the contents 211. Operation and processing of the contents 211 are explained below.

Unless specified in particular, the operation or processing of the contents 211 may be replaced with the operation or processing of the coded data contents 212 or functional contents 213.

The master control unit 101, based on the event (information) supplied from the event processing unit 111, reads and writes the content of the contents memory unit 18, pointer stack 110, current pointer 109, and initial pointer memory unit 108.

The event processing unit 111 acquires the player event supplied from the players 103-1 to 103-n; the human interface event supplied from the human interface unit 91 via the voice input unit 112 or operation input unit 113; the sensor event supplied from the sensor connection unit 115; the calendar event supplied from the calendar timer 114; or the network event supplied from the network camera 203, network sensor 204, or other event sources 205 such as an information processing device or server via the network 3; and supplies the event information indicating the content of the event to the master control unit 101.

When the players 103-1 to 103-n do not have to be differentiated separately, they will be simply referred to as a player 103 below.

The play list reader 102, based on the designation of the master control unit 101, reads the play list in the folder storing the contents currently being reproduced and stored in the contents memory unit 18, selects one among the players 103-1 to 103-n in accordance with the type of contents and designates the reproduction of such contents.

The players 103-1 to 103-n reproduce the designated contents based on the designation of the play list reader 102.

When the information provision terminal device 1 starts its operation, the master control unit 101 reads information for designating the contents to be initially reproduced from the initial pointer memory unit 108, reads the master designation data, writes in the current point 109 according to the content described therein, and designates the start of reproduction to the play list reader 102.

The pointer stack 110, based on the control of the master control unit 101, pushes (stores) the contents of the current pointer 109 designating one of the folders 201-1 to 201-n as pointers 202-1 to 202-n, or pops the pointers 202-1 to 202-n (i.e., reads the pointers 202-1 to 202-n and stores them in the current pointer 109) when the folders 201-1 to 201-n storing the contents to be output are switched.

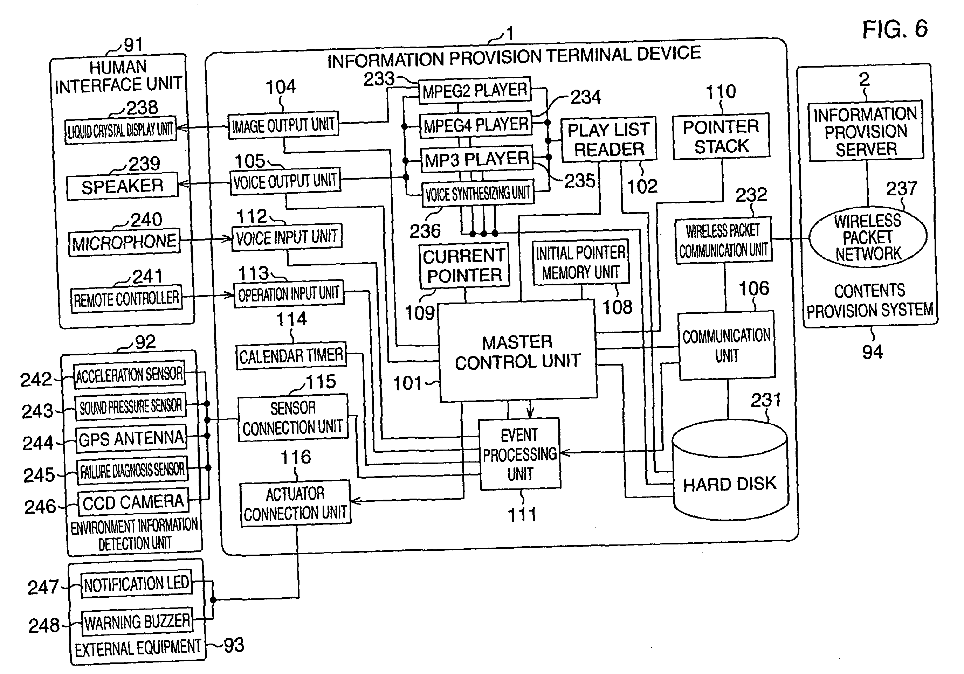

Fig. 6 is a block diagram showing a more detailed constitution of an embodiment of the information provision system pertaining to the present invention. Components that are the same as those shown in Fig. 4 are given the same reference numerals, and the explanation thereof is omitted.

In the information provision system depicted in Fig. 6, a hard disk 231 as the contents memory unit 18 is provided. The wireless packet communication unit 232 is an example of the network interface 107. The wireless packet communication unit 232 communicates with the information provision server 2 via the wireless packet network 237, which is an example of the network 3.

The MPEG2 (Moving Pictures Experts Group) player 233 and MPEG4 player 234 respectively reproduce contents composed of images or sounds in the MPEG2 format or MPEG4 format. The MP3 (MPEG 1 Audio Layer 3) player 235 reproduces audio contents in the MP3 format.

The voice synthesizing unit 236 synthesizes voices based on contents for performing voice synthesis; for instance, text-to-speech format contents.

The liquid crystal display unit 238 is an example of the display unit 121, and is composed of a liquid crystal display device. The speaker 239 is an example of the voice output unit 122, and is composed from the likes of a dynamic speaker. The microphone 240 is an example of the voice acquisition unit 123, and is composed from a dynamic microphone or a condenser microphone.

When only an audio service is provided in the information provision system depicted in Fig. 6 and it is not necessary to provide a display, the constitution does not have to include a liquid crystal display unit 238 and image output unit 104.

The remote controller 241 is an example of the operation acquisition unit 124, and supplies to the operation input unit 113 a signal representing the operational content via infrared light of radio waves. The acceleration sensor 242, sound pressure sensor 243, GPS (Global Positioning System) antenna 244, failure diagnosis sensor 245 and CCD (Charge Coupled Device) camera 246 are examples of the sensors 131-1 to 131-n, and are respectively sensors for acquiring the acceleration, sound pressure, positional information, operational status of the device, and images.

The notification LED 247 and warning buzzer 248 are examples of the actuators 141-1 to 141-n, and respectively convey information to the user 41 by illuminating, extinguishing or flashing light, and convey information to the user 41 by sounds.

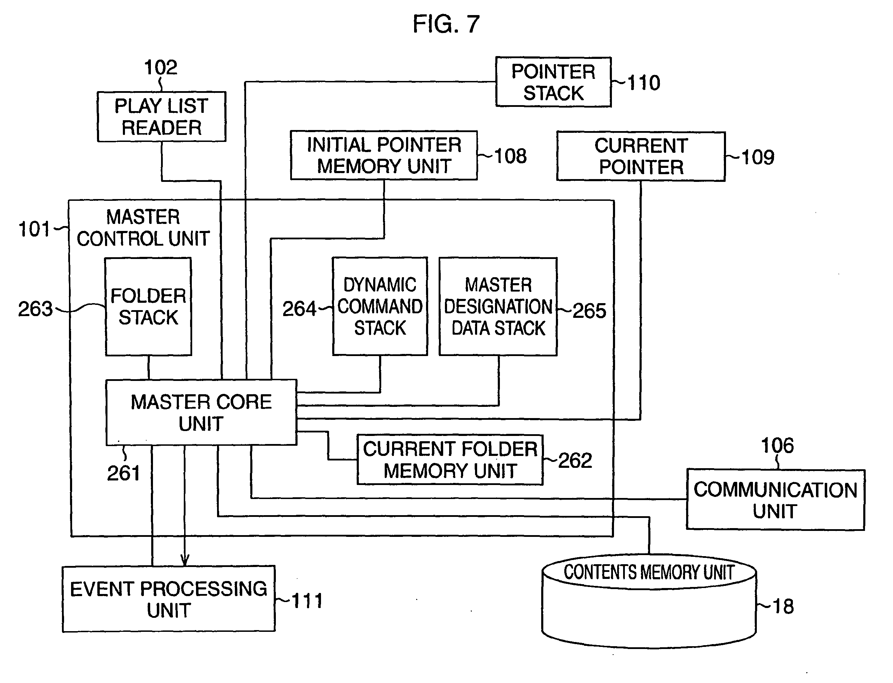

Fig. 7 is a block diagram for explaining a more detailed constitution of the master control unit 101.

The master control unit 101 is provided with a master core unit 261, a current folder memory unit 262, a folder stack 263, a dynamic command stack 264 and a master designation data stack 265.

The master core unit 261 controls the contents memory unit 18, play list reader 102 and communication unit 106 based on the event supplied from the event processing unit 111, master designation data 215, command map data described later and dynamic command map data, as well as information stored in the initial pointer memory unit 108, current pointer 109, current folder memory unit 262, folder stack 263, dynamic command stack 264 and master designation data stack 265.

The current folder memory unit 262 stores data for specifying the folder 201 storing the contents that are currently being output.

The folder stack 263 ordinally stores data for specifying the folder 201 storing the contents that were output in the past.

The dynamic command stack 264 ordinally stores data for specifying the folder 201 storing the contents that were output in the past and storing the dynamic command map data.

The master designation data stack 265 ordinally stores data for specifying the folder 201 storing the contents that were output in the past and storing the master designation data 215.

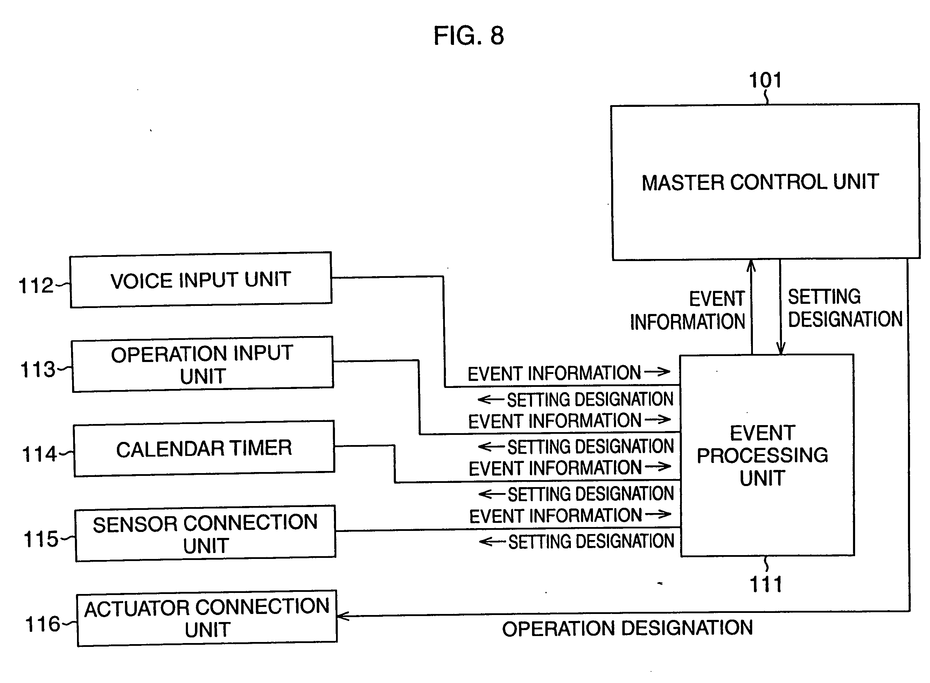

Fig. 8 is a block diagram for explaining the operation of the event processing unit 111.

The event processing unit 111, based on the setting designation from the master control unit 101, designates the setting of a threshold or the like for determining the output of event information indicating the content of information to the voice input unit 112, operation input unit 113, calendar timer 114, sensor connection unit 115 and actuator connection unit 116.

The event processing unit 111 acquires event information indicating the content of the event output by the voice input unit 112, operation input unit 113, calendar timer 114, sensor connection unit 115 and actuator connection unit 116 based on the setting, and supplies the acquired event information to the master control unit 101.

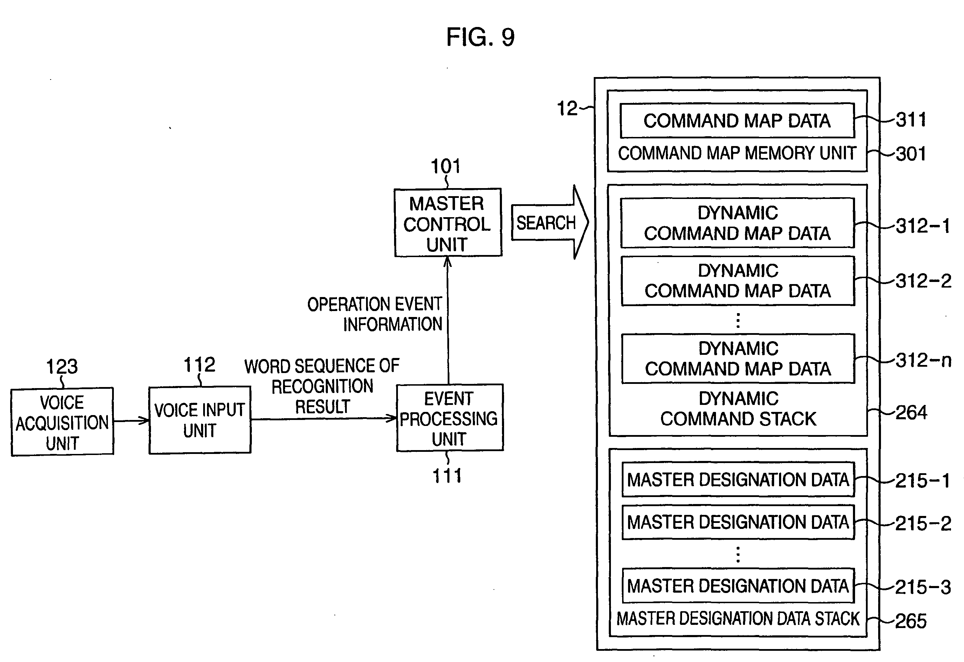

Fig. 9 is a diagram for explaining the reading of the command map data, dynamic command map data and master designation data, and the search of command based on the input event.

Provided with the command map data 311, dynamic command map data 312, or master designation data 215 is a direct designation function for directly designating and selecting the contents 211 or the menu within the contents 211. Stored in the command map data 311, in the case of a voice command, for example, is vocabulary of the voice command and correspondence information of the contents 211 selected thereby.

The dynamic command map data 312 provides a function of exchanging the command partially or entirely for each of the respective contents 211. As a result of this function, even when the constitution of the contents 211 is changed (contents to be output being changed) while the contents 211 are being updated (when the contents 211 are sequentially output), the contents 211 can be directly designated and selected.

The contents 211 stored in the information provision terminal device 1 are contents in which the contents 211 relating to necessary information are organized as a result of the operation of the user 41 theretofore for each user 41 of each information provision terminal device 1. As a result, only the information required by the user 41 will be collected, and the user 41 will be able to arrive at one's desired information with minimal operations without having to perform numerous operations such as making a selection among all of the layered contents 211 stored in the information provision server 2.

The command map memory unit 301 managed by the master core unit 261 and which is a prescribed area of the RAM 12 stores a command map data 311 having stored therein an order against the command. The command map data 311 is ongoingly stored in the command map memory unit 301 while the information provision terminal device 1 is in operation.

The dynamic command stack 264 stores the dynamic command map data 312-1 to 312-n having described therein orders against the command. The dynamic command map data 312-1 to 312-n are stored in the dynamic command stack 264 or deleted from the dynamic command stack 264 when the contents 211 being output are changed.

When the dynamic command map data 312-1 to 312-n do not have to be differentiated separately, they will be simply referred to as dynamic command map data 312 below.

For instance, when the folder 201 storing the contents 211 has a tree structure, which is an example of a layered system, the folder 201 storing the contents 211 being output and the dynamic command map data 312 stored in the folder 201 of the ancestor of the folder 201 storing the contents 211 being output are stored in the dynamic command stack 264, and the dynamic command map data 312 stored in the folder 201 that is not an ancestor of the folder 201 storing the contents 211 being output are deleted from the dynamic command stack 264.

The master designation data stack 265 stores the master designation data 215-1 to 215-n storing orders against the command. The master designation data 215-1 to 215-n is stored in the master designation data stack 265 or deleted from the master designation data stack 265 when the contents 211 being output are changed.

For instance, when the folder 201 storing the contents 211 has a tree structure, which is an example of a layered system, the folder 201 storing the contents 211 being output and the master designation data 215 stored in the folder 201 of the ancestor of the folder 201 storing the contents 211 being output are stored in the master designation data stack 265, and the master designation data 215 stored in the folder 201 that is not an ancestor of the folder 201 storing the contents 211 being output are deleted from the master designation data stack 265.

For example, the voice acquisition unit 123 supplies the acquired signal representing the voice of the user 41 to the voice input unit 112. The voice input unit 112 generates an event based on the setting designated by the event processing unit 111, and supplies this to the event processing unit 111. For instance, the voice input unit 112 performs the voice recognition proccesing responding to noise on a signal indicating the voice of the user 41, and outputs a word sequence of the recognition result recognizing the voice of the user 41 as an event. For example, voice input unit 112 supplies "traffic information, Tokyo, Minato Ward", which is the word sequence of the recognition result represented in text as the event, to the event processing unit 111.

The event processing unit 111 supplies the supplied event to the master control unit 101 as the operational event information. For example, the event processing unit 111 supplies the event of "traffic information, Tokyo, Minato Ward" to the master control unit 101 as the operational event information.

The master control unit 101, for instance, searches for the command for the event in a prescribed order from the command map data 311, dynamic command data 312-1 to 312-n and master designation data 215-1 to 215-n.

For example, the master control unit 101 searches for the command for the event in order from the latest setting regarding the master designation data 215-1 to 215-n, and, when the command for the event could not be found, searches for the command for the event in order from the latest setting regarding the dynamic command data 312-1 to 312-n. The master control unit 101 searches for the command for the event from the command map data 311 when it could not find the command for the event from the master designation data 215-1 to 215-n and dynamic command data 312-1 to 312-n.

The master control unit 101 controls the contents memory unit 18, play list reader 102, communication unit 106 and event processing unit 111 based on the found command.

Incidentally, the order in which the master control unit 101 searches for the command for the event may be set arbitrarily.

The master control unit 101 reads the master designation data 215 and dynamic command map 312 stored in the contents memory unit 18, and controls the reception of contents of the communication unit 106 and the designation regarding the reproduction of contents of the play list reader 102 based on the read master designation data 215 and dynamic command map 312.

The play list reader 102 designates the output of contents 211 stored in the folder 201 storing the play list 214 to the players 103-1 to 103-n based on the play list 214 stored in the contents memory unit 18.

One of the players 103-1 to 103-n reads the contents 211 from the contents memory unit 18 and outputs the read contents 211 based on the designation from the play list reader 102.

Upon activation, the master control unit 101 foremost reads the initial pointer stored in the initial pointer memory unit 108, then reads the master designation data 215 and dynamic command map 312 stored in the folder 201 designated with the initial pointer based on the read initial pointer, and designates the output of the aggregate of contents 211 storing the folder 201 designated with the initial pointer to the play list reader 102.

The play list reader 102 reads the play list 214 stored in the folder 201 designated with the initial pointer as indicated from the master control unit 101, and designates the output of contents 211 described in the read play list 214 to the players 103-1 to 103-n based on the order of contents 211 described in the read play list 214.

One of the players 103-1 to 103-n to output the contents 211 stored in the folder 201 designated with the initial pointer supplies the player event representing the reproduction start of contents to the event processing unit 111 when the reproduction of contents is started.

The event processing unit 111 notifies the event to the master control unit 101.

The master control unit 101 acquires the command corresponding to the event notified from the event processing unit 111, and designates the reproduction of the subsequent aggregate (folder 201) to the play list reader 102 based on the acquired command.

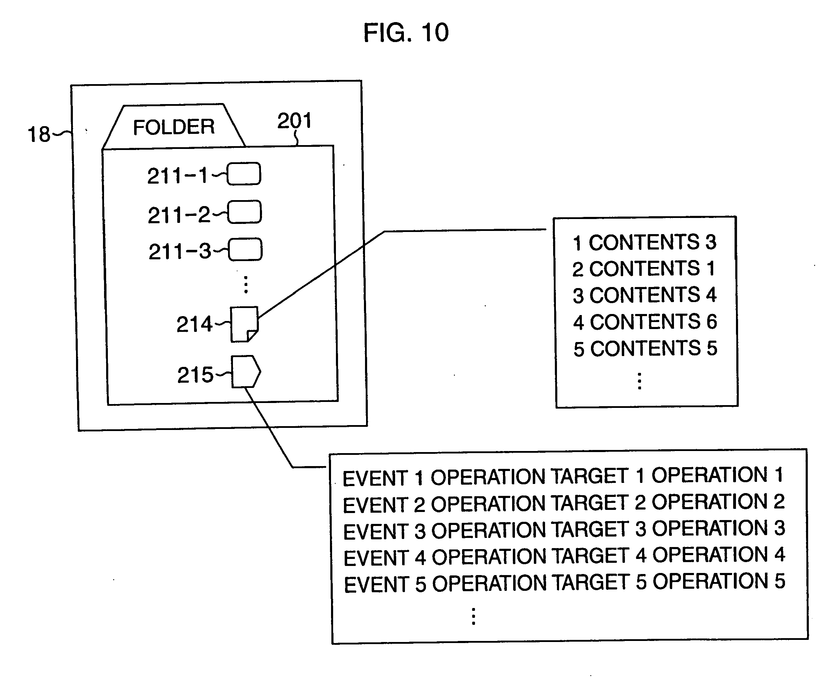

Fig. 10 is a diagram for explaining the relationship between the contents 211, play list 214 and master designation data 215, and the folder 201. In the present invention, the contents 211 are stored in the folder 201. Stored in the folder 201 are the contents 211, the play list 214 relating to the reproduction order of the contents and the master designation data 215 for designating the operation of the contents 211.

Incidentally, the dynamic command map data 312 is stored in the folder 201 as a type of the contents 211. The dynamic command map data 312 has a specific file name, or a specific property.

The contents 211 are the contents data such as sound, image or text, or the folder 201. As a result of a folder 201 being store in the folder 201, a layered system is realized.

Described in the play list 214 is the order of the contents 211 to be output, in the order of contents 3 as the contents 211-3; contents 1 as the contents 211-1; contents 4 as the contents 211-4; contents 6 as the contents 211-6; and contents 5 as the contents 211-5.

Described in the master designation data 215 are the operation target and the operation thereof against the event. For example, described in the master designation data 215 are operation target 1 and operation 1 thereof against event 1; operation target 2 and operation 2 thereof against event 2; operation target 3 and operation 3 thereof against event 3; operation target 4 and operation 4 thereof against event 4; and operation target 5 and operation 5 thereof against event 5.

In the present invention, the various advantages described below can be yielded by the information provision system employing the following characteristic constitution:
1. In the information provision server 2, all contents 211 are provided by being organized in layers in the folder 201, which is a sub-folder of one folder 201;
2. Distribution of the contents 211 is conducted in stages according to the operation of the user 41 made against the completely distributed contents 211;
3. The preceding contents 211 induces the distribution of the subsequent contents 211, and service is provided automatically and continuously;
4. Even if the contents 211 stored in each information provision terminal device 1 are the same in the initial state, the constitution will differ according to the user 41 depending on the log of the information provision terminal device 1 of the user 41;
5. The distribution of the contents 211 can be conducted merely by the information provision terminal device 1 downloading and copying all folders of folder 201 and below designated by the information provision server 2;
6. In the information provision terminal device 1, the layer of the contents 211 is the same layer structure as the information provision server 2, and can be managed by the contents producer;
7. The contents producer is able to designate the behavior in the information provision terminal device 1 of the contents 211 after distribution for each folder 201 by employing the master designation data 215;
8. No person other than the contents producer may modify the contents 211;
9. Based on the plan of the contents producer operation of the user 41, events detected inside and outside the information provision terminal device 1, and the reproduction of contents 211 based on a network event can be automatically controlled;
10. As a result of the user 41 merely performing an operation for using the contents 211, the contents 211 are automatically distributed, and stored in the information provision terminal device 1; and
11. In the information provision terminal device 1, the user 41 is able to handle cumulative-type, broadcasting-type, communication-type and functional-type contents 211 stored in the folder 201 with an integrated operation.

When the user 41 does not engage in operation, the service is automatically continued based on the contents 211 distributed according to the previous operation log.

The user 41 can engage in a simple operation with the contents created by the contents producer 211 with care.

The contents producer can guide the operation by presenting an operation guide to the user 41.

Even when there is not connection to the network 3, the contents 211 can be used by employing the contents 211 distributed in the past.

The foregoing characteristic constitution can be realized with an extremely simple system as represented in the embodiments.

Characteristics of the information provision system according to the present invention are now explained in detail.

Foremost, the scheme for focusing on the main action is explained.

According to the present invention, since the user 41 is able to receive information according to the scene merely by performing operations required only in limited situations while receiving information that is provided in a well-organized manner, the user 41 is able to focus on the main action.
(A) Since the scheme integrates information into a single type of contents 211, the user 41 only has to pay attention to such contents 211;
(B) Since the scheme directly designates information required by the user 41, the user 41 is able to acquire information when one's desired information is definitive;
(C) Since the scheme continuously and automatically provides information, the user 41 is able to obtain information even when operation is not made or when operation cannot be made;
(D) Since separate information relating to the designated information can be induced, the user 41 is able to obtain necessary information; in other words, the user 41 will hardly be provided with unnecessary information;
(E) The operation for reproducing the contents 211, in addition to being controlled by the user, is also controlled based on sensor information, external event, and operation for reproducing the contents; thus, the reproduction of the contents 211 can be automatically controlled;
(F) Since the scheme provides information to the user 41 in stages, the informational relationship is provided in an organized manner;
(G) Since the scheme changes the subject matter of the contents 211 according to the reproduction of a previous program or external event, the subject matter of the contents 211 changes according to the action of the user 41;
(H) Since the information to be notified is notified to the user 41 via the contents 211, the user 41 will not overlook important information; and
(I) The information provision method can be switched according to the status of the user 41; therefore, the editor (contents producer) may employ the optimum method.

Next, the fusion of broadcasting and communication is explained.

As a result of employing the following constitution, enabled is the provision of a service fusing broadcasting and communication in an information provision terminal device 1 comprising a cumulative feature.
● Reproduction control and contents management of the information provision terminal device 1 can be performed based on the information data contained in the contents 211 to be distributed.
● Since the contents 211 can be distributed as a result of duplicating the content of the folder 201 without change in the information provision terminal device 1, distribution is possible via both broadcasting and communication.

In order to achieve the goal of making the user 41 concentrate on the main action, employed is a constitution satisfying requirements (A) to (I). Thus, the user 41 is able to receive an information provision service merely by making simple operations with a remote controller 241 or voice command as in a TV broadcast receiver or a radio broadcast receiver. The user 41 may also change the flow of the continuous provision of information by performing an operation whenever one pleases in order to select and acquired one's desired information.

Information contained in the contents 211 can be used to designate or change the portion to be reproduced within the contents 211, switch the reproduction to separate contents 211, or distribute new contents 211, and this will also enable the use of a communication-type service.

As a result of these characteristics, a service equipped with all characteristics of cumulative, broadcasting and communication can be realized via an integrated user interface of a single information provision terminal device 1.

Next, the distribution of broadcasting-type contents is explained.

In the present invention, provided is a constitution where information used by the user 41 of each information provision terminal device 1 can be selectively distributed from the information provision server 2 in which information is integrated uniformly and collected.

Thus, from the perspective of the contents producer to provide the information distribution service or the information provider providing information to become the source of contents to the contents producer, this implies that information requested by the user 41 can be selectively distributed merely be preparing the same information in relation to all information provision terminal devices 1 and registering such information in the information provision server 2 as with a conventional broadcasting system.

According to the present invention, since the selective distribution of the contents 211 is induced based on the dynamic mutual relational between the user 41 and the information provision terminal device 1, the information provision server 2 for distributing information can have an extremely simple constitution, the operation of providing the information distribution service can be run at low cost, and an extremely significant economic effect can be expected.

Next, the distribution of communication-type contents is explained.

In the present invention, provided is a constitution where the contents 211 can be designated among the options selectable according to the status of each user 41 within the contents distributed pursuant to the distribution of broadcasting-type contents 211.

When it is not necessary in particular for the user 41 to make an operation, and the user 41 wishes to make some kind of operation in the broadcasting-type contents 211, the same contents 211 may be used to provide a communication-type service such as a web browser which provides information selected according to the operation of the user 41.

Further, conventional communication services such as emails and phone calls may be used upon referring to the contents 211 among the contents 211 distributed as the broadcasting-type service.

As a result of comprising the foregoing characteristics, the information provision system pertaining to the present invention is able to realize a service comprising all the characteristics of a broadcasting-type service, a communication-type service, and a cumulative-type service.

As a result of having integrated the schemes relating to provision of information and operation, the service provision system according to the present invention is able to realize the information provision terminal device 1 and the information provision server 2 for providing information in a simple constitution.

As a result of constituting the information distribution system as follows, the present invention is able to yield the various advantages described later even with an extremely simple constitution.
1. Information to be distributed is organized in the folder 201 as the contents 211. Information is collected in the information provision server 2 having a layered constitution integrated in a unique top folder;
2. The productive idea of the contents producer is distributed by being included in the master designation data 215 or the contents 211 storing an order against the command; and
3. Based on the operation of the user 41, the information provision terminal device 1 downloads from the information provision server 2, the contents 211 of the corresponding folder 201 is downloaded thereby, and all folders 201 beyond the designated folder 201 are also downloaded.

In the information provision terminal device 1, information is stored as a data structure formed from a layered folder 201.

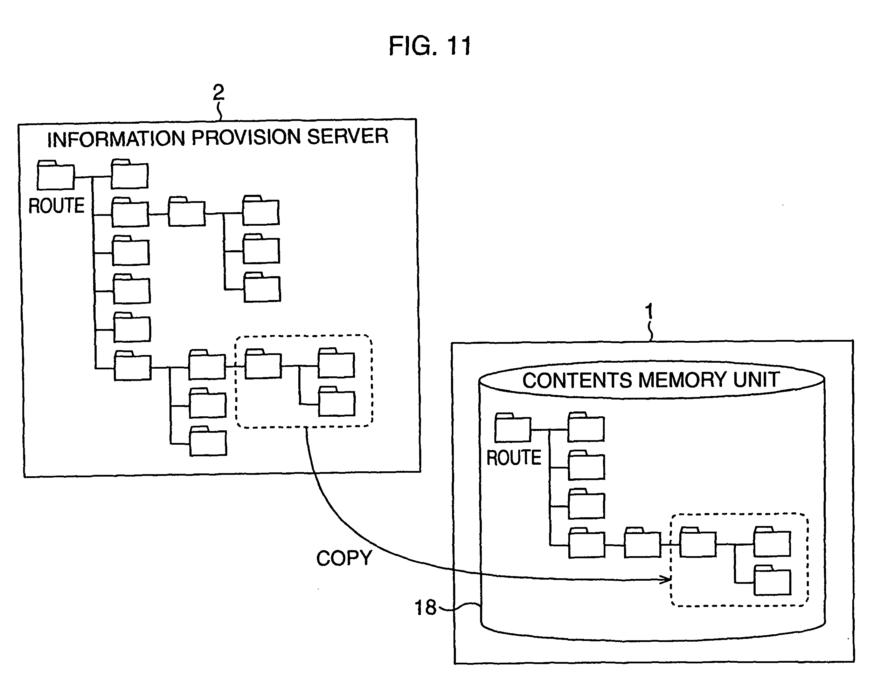

Fig. 11 is a diagram showing the concept of the folder 201. The folder 201 is structured in layers, and differentiates the contents 211 that it stores internally from the contents 211 stored in the other folders 201. In other words, the contents 211 stored in a single folder 201 are mutually associated and constitute an aggregate.

When the folder 201 is transmitted from the information provision server 2 to the information provision terminal device 1, the folder 201 of the descendant of the prescribed folder 201 will also be transmitted from the information provision server 2 to the information provision terminal device 1.

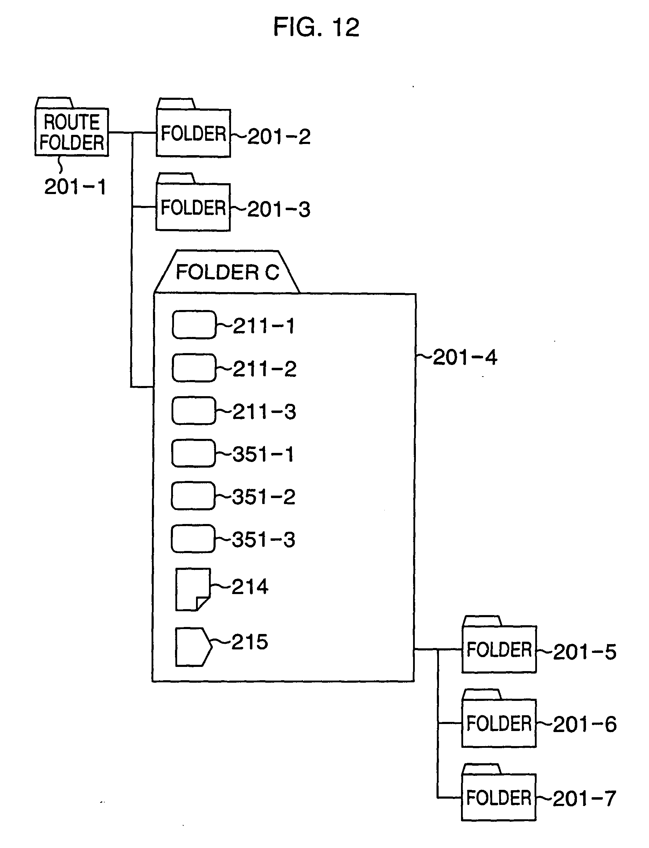

Fig. 12 is a diagram showing the data structure for managing information. In the example shown in Fig. 12, the route folder 201-1 contains folder 201-2, folder 201-3 and folder 201-4. And stored in the folder 201-4 are contents 211-1, contents 211-2, contents 211-3, contents 351-1 representing folder 201-5, contents 351-2 representing folder 201-6, contents 351-3 representing folder 201-7, play list 214 and master designation data 215.

As a result of a scheme having this kind of data structure and master designation data 215, in the present invention, since the distribution of the contents 211 can be conducted merely by reading the folder 201 of the designated folder 201 and below from the contents prepared in the layered system on the information provision server 2, and copying this in the contents memory unit 18 of the information provision terminal device 1.

Even when the contents 211 distributed to the information provision terminal device 1 and stored in the contents memory unit 18 within the information provision terminal device 1 are the contents 211 to be dynamically renewed according to an event, it will be sufficient by merely reading the folder 201 of the designated folder 201 and below from the contents 211 prepared in a layered system on the information provision server 2 and copying all such folders 201 in the contents memory unit 18 of the information provision terminal device 1. This is a significant feature of the present invention, and the contents producer is able to easily create the contents 211 that will be automatically renewed after distribution.

This feature is yielded by the master control unit 101 being able to amend, add and delete the subject matter of the contents 211 in accordance with the master designation data 215 recorded in the contents memory unit 18 of the information provision terminal device 1 created by the contents producer.

The folder 211 can store one of the following:
(a) Play list 214;
(b) Contents (data) 211;
(c) Master designation data 215;
(d) (Contents 351 representing) Folder 201; and
(e) Dynamic command map data 312.

As a result of storing a separate folder 201 inside the folder 201, the layering of the contents 211 can be realized.

In the present embodiment, the command map data 311 is stored in the route folder 201-1 of the information provision terminal device 1, and this is automatically read upon the activation of the information provision terminal device 1. The constitution may be such that the command map data 311 is incorporated in the software of the information provision terminal device 1 in advance.

When the user 41 performs an operation and designates the contents 211 to be reproduced, the master control unit 101 reads the master designation data 215 and dynamic command map data 312 contained in the folder corresponding to the designated contents and designates the folder 201 and designates the reproduction to the play list reader 102.

When the folder 201 is designated from the master control unit 101, the play list reader 102 reads the play list 214 in the folder 201, selects the player 103 for each type of contents 211 in the order described therein, and designates the contents and makes the player 103 reproduce the contents.

The player 103 reproduces the contents 211 designated with the play list reader 102.

When a folder 201, which is a sub-folder, is contained in the folder 201 (when a folder 201, which is a child, is stored in the folder 201), the foregoing processing is performed to such sub-folder in a recursive manner.

The subjects handled as contents by the contents provision system are as follows.

In order to handle a plurality of types of contents 211, the player 103 is installed for each type of required contents 211.

The classification of characters of the player 103 is as follows.

The reproductive data contents 211 are data storing images and sounds. The reproductive data contents 211 are stored in MPEG1, MPEG2, MPEG4, MP3 or other formats. The player 103 is installed for each format.

In an embodiment of the in-car information provision terminal device 1, MP3 is used as the sound contents and MPEG2 or MPEG4 is used as the visual contents.

The coded data contents 212 are data storing encoded images and music. This corresponds to data storing encoded sounds and images such as MIDI (Musical Instrument Digital Interface) or FLASH (trademark). Read-aloud data stored in text format to be reproduced upon being converted into audio with Text to Speech is included therein.

In the embodiment of the in-car information provision terminal device 1, MIDI and Text to Speech are used as the coded data contents 212.

In addition to the above, the functional contents 213 include contents in which information that is not a reproductive image or sound like those described below is converted into visual or audio information. It is also possible to install a player 103 capable of reproducing such functional contents 213.

The following are comparatively simple examples.
● Functional contents 213 for reading aloud the time of reproduction, and the player 103 for reproducing such sound.
● Functional contents 213 for reading aloud the position at the time of reproduction as the longitude and latitude, and the player 103 for reproducing such sound.
● Functional contents 213 for reading aloud the location at the time of reproduction as the address notation, and the player 103 for reproducing such sound.
● Functional contents 213 for reading aloud the battery voltage status at the time of reproduction, and the player 103 for reproducing such sound.
● Functional contents 213 which are the camera image contents showing the front or rear of the vehicle, and the player 103 for displaying such image.
● Functional contents 213 which are the camera image contents showing the driver's seat, and the player 103 for displaying such image.
● Functional contents 213 for displaying images of a camera connected to a network 3, and the player 103 for displaying such image.

Examples of more sophisticated functional contents 213 are described below.
● Functional contents 213 that receives an email with the information provision server 2, converts the received email into a vocalizable format and storing it in a layer of the contents 211, and notifies the incoming email event to the event processing unit 111, and the player 103 for reproducing such functional contents.
● Schedule: Functional contents 213 for reproducing the schedule like an event guide of an FM radio program based on the schedule data of personalized information of the information provision server 2.
● Phone call contents: Functional contents 213 for guiding the method of making a phone call when started, and enabling a phone conversation by performing operations according to such guide.
● Route guide: Functional contents 213 for guiding the route to be run based on the positional information event from the positional information sensor.
● Functional contents 213 for making a malfunction notice based on an event from the sensor 131 for detecting the failure of the vehicle, and sending the event to the center not shown and running the guide contents.
● When there is a fellow passenger, functional contents 213 for making a protection display to protect privacy.
● Functional contents 213 for changing the response operation upon receiving a network event in accordance with the user's convenience.
● Functional contents 213 for enabling hands-free communication with a connected portable phone upon adding a portable phone connection device to the information provision terminal device 1.

The player 103 capable reproducing such functional contents is installed such that it can be controlled from the master control unit 101 with the designation similar to the reproductive data contents 211. As a result, the user 41 employing such functional contents 213 is able to use the contents 211 by performing the entirely same operations as with the reproductive data contents 211.

Since the functional contents 213 can be controlled as with the reproductive data contents 211 and coded data contents 212, the operational feeling of the user 41 will be integrated, the operation corresponding to the event can be matched, and services in relation to all types of contents can be integrated.

Next, the master designation data 215 will be explained.

An important feature in the information provision system pertaining to the present invention is to enable the control of all contents 211 to 213 with the master control unit 101 as described above. As a result of this feature, the contents producer will be able to handle all types of contents among the contents 211 to 213.

The master designation data 215 is used to realize the foregoing scheme.

The designation against the master control unit 101 is described in the master designation data 215 with the following logical structure.

### <When> <What> <How>

The subject matter designated with the master designation data 215 is described in detail below.

The description regarding the portion of <When> is now explained. The master control unit 101 operates based on the event input from the event processing unit 111. Thus, it will operate when one of the events is input. The description regarding the portion of <When> represents an event.

The following are examples of the description regarding the portion of <When>:
1. When the user makes an operation;
2. When the sensor detects an abnormality;
3. When a timer event is generated;
4. When the sensor connected to the network 3 detects and abnormality;
5. When an event is received from another information provision terminal device 1;
6. When the contents 211 generates an event; and
7. When the reproduction of the player 103 is ended.

The description regarding the portion of <What> represents the target to be the subject of processing.

The following are examples of the description regarding the portion of <What>:
1. Contents data;
2. Contents folder;
3. Master designation data 215;
4. Pointer;
5. Pointer stack 110;
6. Event; and
7. Dynamic command map data 312.

The description regarding the portion of <How> represents the content of processing.

The following are examples of contents data, and the processing to be performed to the contents data, master designation data 215 and dynamic command map.
1. Delete;
2. Renew;
3. Newly create;
4. Change the pointer or pointer stack 110; and
5. Generate an event.

The administration of contents 211 in the information provision terminal device 1 is now explained.

In the method pertaining to the present invention, the writing in or deletion of the folder 201, and the creation of a new folder 201 is not conducted with the operation of the user 41, and is characterized in that these are conducted only with the master control unit 101.

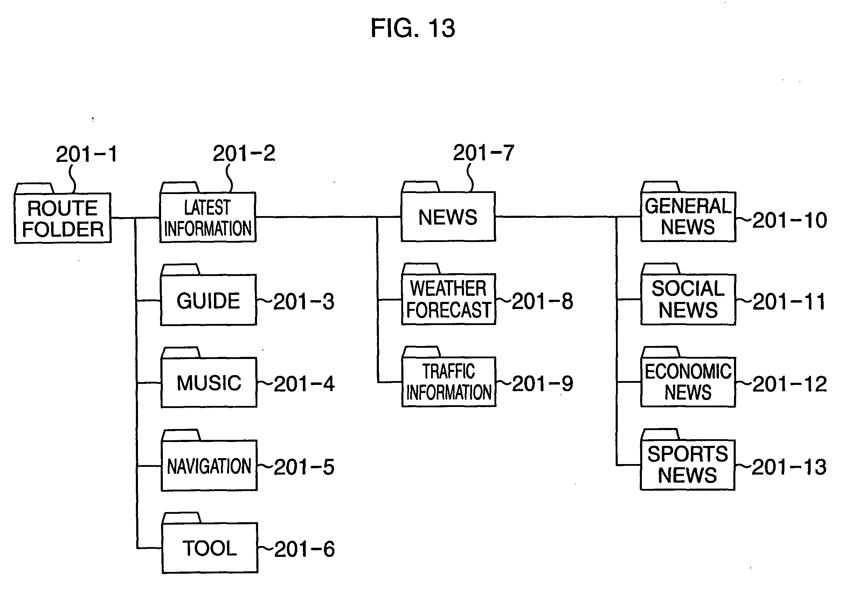

Fig. 13 is a diagram showing an example of the data structure in the information provision terminal device 1. As shown in Fig. 13, data (contents 211) is managed in layers.

Although the data structure in the information provision terminal device 1 is of a layered system reflecting a layered logical structure of the information provision server 2, this is not a copy of all information, and differs in accordance with the usage situation of each information provision terminal device 1.

In the example shown in Fig. 13, the route folder 201-1 contains five folders 201, and these respectively store contents Classified as latest information, guide, music, navigation and tool. The structure of these five folders 201-2 to 201-6 and the information contained as the subject matter thereof are not fixed and set in all information provision terminal devices 1 in advance, and become the data structure as shown in the example as a result of the initial state changing upon the user using the information provision terminal device 1.

Since the folder 201 is administered inside the information provision terminal device 1, there is no need for a name corresponding to the file name used by a person in a personal computer OS. Below, in the explanation of the embodiments of the present invention, the folder 201-2 storing the classified into the latest information is referred to as the latest information folder.

The latest information folder 201-2 contains three folders 201, and contents 211 relating to news, weather forecast and traffic information are stored therein.

The news folder 201-7 contains four folders, and contents 211 relating to general news, social news, economic news and sports news are stored therein.

The tool folder 201-6 has functional contents 213 stored therein.

The navigation folder 201-5 has contents 211 for guiding the user stored therein.

The operation of the user 41 is input from the human interface unit 91 to the master control unit 101 via the event processing unit 111, and conveys the request of the user 41 to the contents 211 to be reproduced with the operation of the master control unit 101.

Next, the operation of designating the contents 211 is explained.

The user 41 designates information organized in a layer in the form of contents 211, and performs an operation for designating one's desired information to the information provision terminal device 1.

In the information provision system pertaining to the present invention, all information can be extracted as the starting point for reproducing the contents 211 of the route folder 201-1. Since there is a direct designation function, the contents 211 may be reproduced from the folder 201 that was directly designated, and not from the route folder 201-1.

When the information to be used is always the same, by registering the (folder 201 of the) contents 211 to be foremost reproduced in the initial pointer memory unit 108, such contents 211 can be made to be constantly reproduced upon the activation of the information provision terminal device 1.

With any one of the above as the starting point, reproduction of the designated contents 211 in the contents memory unit 18 is started.

Stored in the command map data 311 is the correspondence of the operational command and the designated contents 211.

As a result of the dynamic command map data 312, correspondence of the operational command and the contents 211 can be dynamically administered for the respective contents 211. The dynamic command map data 312 may only be used by the contents 211 requiring an addition or change of command.

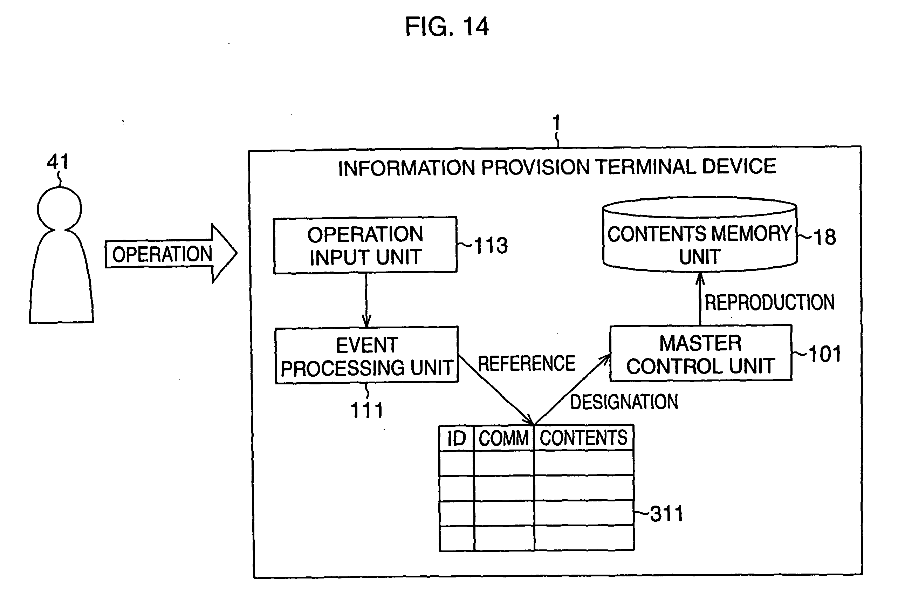

Fig. 14 is a diagram showing the operation of the information provision terminal device 1 when operated by the user 41.

The operation for controlling the reproduction of the contents 211 is now explained.

Reproduction of the contents 211 is started by one of the folders 201 in a layer of the route folder 201-1 and below being designated as a result of the user 41 operating the information provision terminal device 1.

After the user 41 designates the first contents 211, when no operation is made, reproduction of the contents in the folder of the designated contents 211 will be continued until such reproduction of all contents is finished.

When the user 41 performs a reproduction control operation in a timing when contents 211 are being reproduced, the player 103 and play list reader 102 are controlled via the master control unit 101, and reproduction is started or stopped, or jumps to the subsequent contents 211, or returns to the previous contents 211.

In the embodiments of the present embodiment, the following are examples of the reproduction control operation of the contents 211;
1. Start;
2. Stop;
3. Next;
4. Back;
5. Directly designate contents;
6. Help;
7. Explain; and
8. Select.

The direct designation of contents 211 is made with a voice command (command composed of vocalized words), and, for instance, a designation is made such as "weather forecast, Tokyo, Chiyoda Ward".

As a result of using the voice command "help" during the reproduction of the contents 211, contents for explaining the method of using the contents 211 are reproduced.

As a result of using the voice command "guide" during the reproduction of the contents 211, contents 211 for explaining the contents 211 being reproduced are reproduced.

Incidentally, the constitution may integrate "help" and "explain" into the "explain" command.

Further, the constitution may integrate "help" and "explain" into the "detail" command.

Moreover, the constitution may also add a repeat command for repeating the reproduction of the contents 211 to the command.

Incidentally, the constitution may also add the response confirmation command of "yes" and "no" to the command.

In addition, the constitution may also add a "check" command for marking the contents 211 to the command.

Or, a command may be added when new contents 211 are distributed.

Next, the operation in relation to the contents is explained.

Since it is possible to write a designation in relation to the master control unit 101 when an event is input in the master designation data 215, the contents producer will be able to create contents 211 capable of changing the flow of reproducing the contents 211 based on the operation of the user 41.

As a result, when the contents producer creates contents 211 utilizing a human interface event, the reproductive operation of the contents 211 can be changed pursuant to the operation of the user 211.

From the perspective of the user 41, such user 41 will be able to operate the contents 211.

The operation of functional contents 213 is realized with the foregoing scheme, and, since the contents can also be controlled with a network event or sensor event in addition to an event resulting from the operation of the user 41, the contents may be controlled via remote control via the network 3, or the reproduction thereof can be automatically started based on the event detected with the sensor 131.

The operation of designating the order of the contents 211 is now explained.

As a result of employing the following constitution, a voice command may be used to designate the order of the contents 211.

For example, with the following command, contents A, B and C are reproduced in order.

"Designate order" <voice command for designating contents A> <voice command for designating contents B> <voice command for designating contents C> "end"

Here, "designate order" is a command for starting the designation of the order. "End" is a command for ending the designation of the order.

As a result of designating the order as described above, the user 41 is able to receive information in the order of one's request.

As a result of using the individual direct designation commands after the foregoing order designation operation, it is possible to acquire information not contained in contents A, B or C; for instance, contents D. In such a case, when the reproduction of contents D is finished, as a result of returning to a state when the contents D was automatically designated, the provision of information in the order requested by the user 41 is continued.

When providing information in the order requested by the user 41 with the foregoing operation and using different contents upon performing an operation, the present invention performs a characteristic operation enabling the operation at an arbitrary timing.

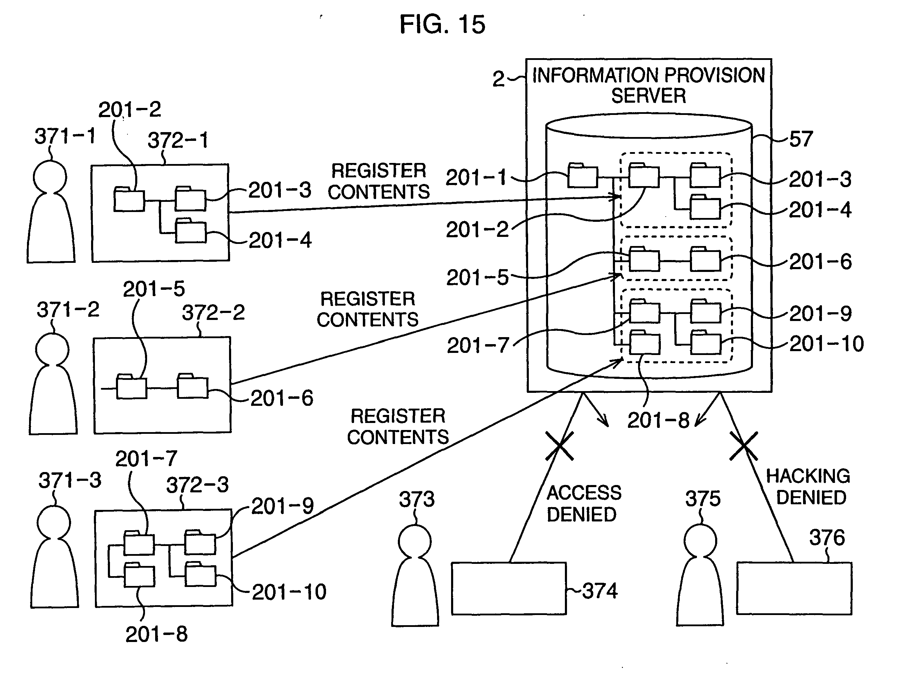

Next, the information provision server 2 is now explained with reference to Fig. 15.

The information provision terminal device 1 downloads information from the information provision server 2 via the network 3.

Stored in the information provision server 2 are contents to be provided to the information provision terminal device 1.

Stored in the information provision server 2 are contents 211 (information) in layers, and the information provision terminal device 1 stores the contents 211 downloaded from the information provision server 2 via the network 3 in the contents memory unit 18.

Since all providable contents 211 are stored in the information provision server 2, typically, many more contents 211 are stored in comparison to the information provision terminal device 1.

In the present invention, since the contents 211 stored in the information provision server 2 are also able to delete the contents stored in the information provision terminal device 1, it is necessary to be particularly careful regarding the security of the information provision server 2.

In the embodiments of the present invention, in order to safely administer the information of the information provision server 2, only the contents registration terminal devices 372-1 to 372-3 are able to register the contents 211 in the information provision server 2. Provided to the respective editors 371-1 to 371-3 are contents registration terminal devices 372-1 to 372-3, and, as a result of only allowing the contents registration terminal devices 371-1 to 371-3 to register, amend, or delete the contents 211, a third party (editor 373 without authorization) that does not possess any one of the contents registration terminal devices 372-1 to 372-3 and that only possesses another information terminal device 374 will not be able to falsify the contents 211. Further, a third party (a person who engages in so-called hacking (hacker, cracker) 375) that only possesses the information terminal device 376 will not be able to falsify the contents 211.

In order to prevent problems among the editors 371-1 to 371-3, it is desirable to designate a separate folder 201 for each editor 371-1 to 371-3 and administer such folder 201 individually.

In the embodiments of the present invention, although the constitution is such that all contents 211 are stored in a single information provision server 2, in a larges-scale information provision center, the constitution may be such that the contents 211 are dispersed to a plurality of servers such as a commercially available load sharing device. According to the present invention, since it will suffice for the information provision server 2 to send the contents 211 requested from information provision terminal device 1 via the network 3, the contents 211 can be dispersed to a plurality of servers with a simple constitution.

Next, the characteristic operation of the information provision terminal device 1 and information provision server 2 is explained.

In the present invention, as a result or providing a scheme for distributing the contents 211 such that the contents 211 are distributed from the information provision server 2 in which information is integrated uniformly and organized in a layered folder, download for distributing the contents 211 is conducted in stages by the information provision terminal device 1 independently from the operation of the user, the contents producer is able to create the contents 211 based on one's productive idea so that such contents 211 will coincide with a part of the contents 211 before the user requires information, and the information provision terminal device 1 automatically controlling the reproduction of contents 211 according to an event inside the information provision terminal device 1 and outside the information provision terminal device 1, the object of the present invention can be achieved.

The operation of continuously extracting information is now explained.

One feature of the present invention is that, when the user 41 designates the contents 211, subsequent contents 211 are automatically extracted from the information provision server 2, and downloaded into the information provision terminal device 1 one after another, and thereby enabling the continuous provision of information.

Thereupon, the following characteristic operation differs significantly from the ordinary contents distribution of downloading the contents 211 and using such downloaded contents 211. In other words, instead of designating the contents to be downloaded and downloading such contents 211, the operation of the user 41 of using the contents 211 that have been distributed and which are readily available will automatically induce, indirectly, the distribution of the subsequent contents 211, and the foregoing sequence being linked to enable the continuous provision of information is a characteristic operation of the information provision system pertaining to the present invention.

By the user 41 making an operation to switch to separate contents 1, or to stop the reproduction of the command via stop of pause, the operation of the continuous contents distribution is automatically stopped. In a scheme of controlling the contents distribution on the transmitting side, a complicated operation between the server and terminal device is required to stop the continuous contents distribution. In the present invention, however, without the contents producer having to make a particular designation, the continuous contents distribution can be automatically stopped with a simple operation that does not require any linkage with the information provision server 2. This aspect is also a significant feature of the present invention.

What the user 41 has to do is an extremely simple operation of selecting the information to be acquired, reproducing or stopping the acquired information, and switching to separate contents 211, and this can be performed without having much effect on the main action. And, with the simple action described above, a significant feature of the present invention is that information required by the user is automatically distributed from the information provision server 2 to the information provision terminal device 1 in an appropriate amount, and automatically layered, organized and stored.

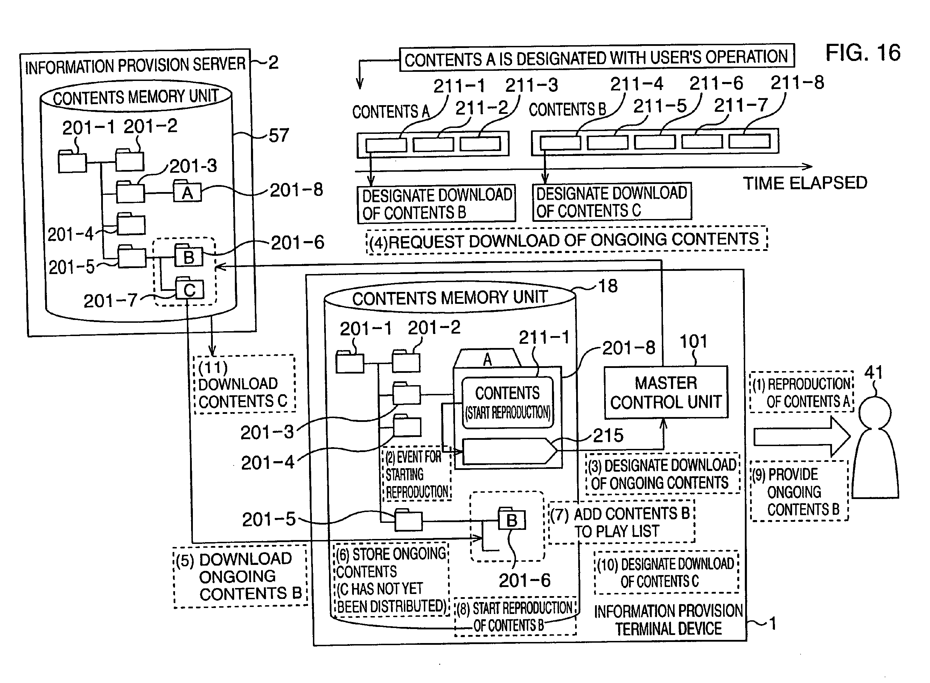

The fundamental form of operation for continuously extracting information is now explained with reference to Fig. 16.

The first layer folder is folder 201-1, and the second layer folder is folder 201-2, folder 201-3, folder 201-4 and folder 201-5. Folder 201-8 is stored in the folder 201-3, and folders 201-6 and 201-7 are stored in the folder 201-5. Folder 201-8 stores contents A, and folder 201-6 stores contents B. Folder 201-7 stores contents C.

Contents A, which are the contents 211 stored in folder 201-8, are composed of contents A1 to A3 which are contents 211-1 to contents 211-3; and contents B, which are the contents 211 stored in folder 201-6, are composed of contents B1 to contents B2 which are contents 211-4 to contents 211-8. The play list 214 of the folder 201-8 represents the order of the contents 211-1, contents 211-2 and contents 211-3. The play list 214 of folder 201-6 represents the order of the contents 211-4, contents 211-5, contents 211-6, contents 211-7 and contents 211-8.

The user 41 directly designates contents 211-1, which have been completely distributed, with a voice command and starts the reproduction thereof.

Let it be assumed that the contents producer of contents A wants the person who listened to contents A to continue listening to contents B. In such a case, the contents producer of contents A may write a designation in the master designation data 215 contained in contents A such that the download of contents B is activated when contents A is reproduced, and, such that the reproduction of contents B is started when the reproduction of contents A is finished.

Specifically, this routine can be described as follows:
1. The download of contents B is started when the reproduction start event of contents 211-1 is generated; and
2. After the download of contents B is completed, contents B is added to the end of the play list 214 of folder 201-8.

As a result of the contents producer creating a master designation data 215 designating "When the reproduction start event of contents 211-1 is generated, start the download of contents B", when the reproduction of contents 211-1 within contents A is started, the master control unit 101 designates the start of download of contents B based on the designated written in the master designation data 215 contained in contents A. Since the play list 214 is in the order of contents 211-1, contents 211-2 and contents 211-3, contents 211-1, contents 211-2 and contents 211-3 will be reproduced in order.

Based on the designation of "When the download of contents B is completed, add contents B to the end of the play list 214 of folder 201-8", when the download of contents B is completed, contents B will be reproduced after contents A3 since the contents subsequent to contents 211-3 of the play list 214 of folder 201-8 will be rewritten to be contents B.

Since folder 201-6 of contents B contains contents 211-4 to contents 211-8, and the play list of contents B is in the order of contents 211-4, contents 211-5, contents 211-6, contents 211-7 and contents 211-8, contents 211-4 will be reproduced subsequent to contents 211-3.

When the reproduction of contents 211-4 is started, if separate contents C is downloaded and added to the play list 214, the reproduction of contents 211 will be conducted with the same procedure.

If the user 41 did not designate contents A, contents B and other contents to be downloaded will not be downloaded. Since the same thing is also possible when the other contents 211 that can be directly designated by the user 41 are reproduced, information stored in the contents memory unit 18 of each information provision terminal device 1 will automatically be a different constitution according to the user's request depending on which contents the user 41 designated.

The user 41 may designate and reproduce separate contents 211 anywhere during the ordinal reproduction of contents A, contents B and contents C. If this is during the reproduction of contents A, contents C will not be distributed. Accordingly, the distribution of contents B and contents C is not conducted in all information provision terminal devices 1 that started the reproduction of contents A.

With the processing described above, until the user 41 considers that information has been acquired sufficiently and switches to separate contents 211, an operation of continuously reproducing the contents 211 designated initially can be realized.

When the reproduction of contents 211-3 is finished but the download of contents B not finished, in this example, since the play list the same as before, reproduction of contents A will finish. When the reproduction of contents is not to be suspended, for example, sufficiently long contents A4 may be reproduced after contents 211-3, and, when the download of contents B is finished, contents B may be added upon deleting contents A4. Or, it is possible to create contents such that the user is notified when the reproduction of contents B is finished, and contents B from the play list of the notified contents may be reproduced.

In this example, since the user 41 selected contents A, when communication is no longer made or when distribution is not in time, the reproduction of contents A and contents B is finished, and the reproduction of the contents 211 prior to being switched to contents A is continued. Therefore, even when communication cannot be made in one of the stages, the reproduction of the previous contents will be automatically continued, and the service will not be discontinued. As described above, even when the contents producer (contents producer of contents A and contents B in this example) does not designate an operation corresponding to the suspension of communication, the operation of automatically continuing the service without having to wait for the operation of the user 41 is a significant feature of the present invention.

When the communication speed of the network 3 for downloading the contents 211 is relatively stable, the situation can be dealt with the simple procedure described above. When it is anticipated that communication may not be made for a long period of time such as in the case of an in-car information provision terminal device 1 or the like, it is desirable to create the contents upon giving consideration to such situation in advance. Since a situation of the vehicle being parked underground for a long period of time can also be expected, although it is difficult in principle to guarantee that communication will be made within a prescribed period of time, in the present invention, as a result of the editor 371 creating contents 211 utilizing an event, it will be possible to deal with the situation flexibly in accordance with the editing policy.

Constitution of the folder 201 and download of the contents 211 are now explained in further detail.

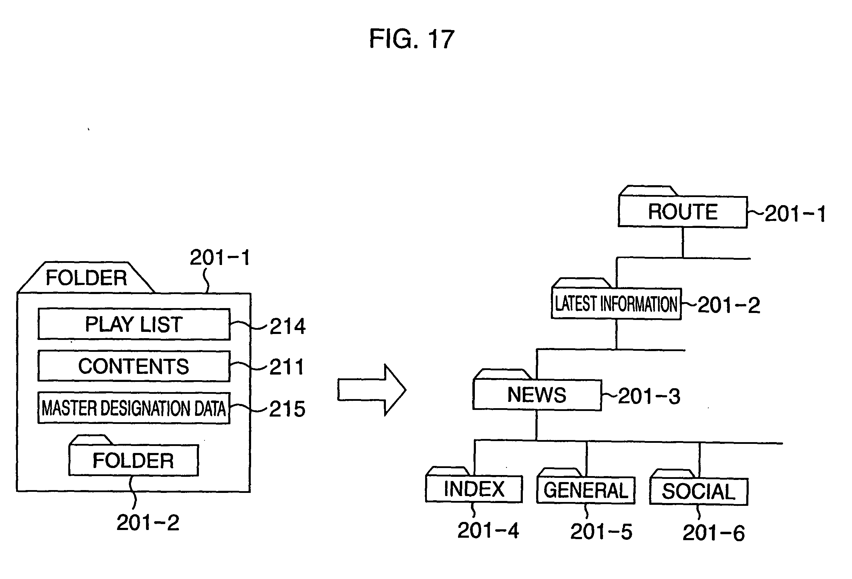

Fig. 17 is a diagram for explaining the basic constitution of the folder 201. As shown on the left side of Fig. 17, for example, logically stored in folder 201-1 are necessary contents 211, necessary play list 214, necessary master designation data 215, and folder 201-2 of the child of folder 201-1 and which is a subordinate layer of folder 201.

As shown on the right side of Fig. 17, the folder 201 has a layered system. For example, the latest information folder 201-2 is positioned as the child of the route folder 201-1. A news folder 201-3 is positioned as the child of the latest information folder 201-2. Arranged as the child of the news folder 201-3 are, for instance, an index folder 201-4, a general folder 201-5 and social folder 201-6.

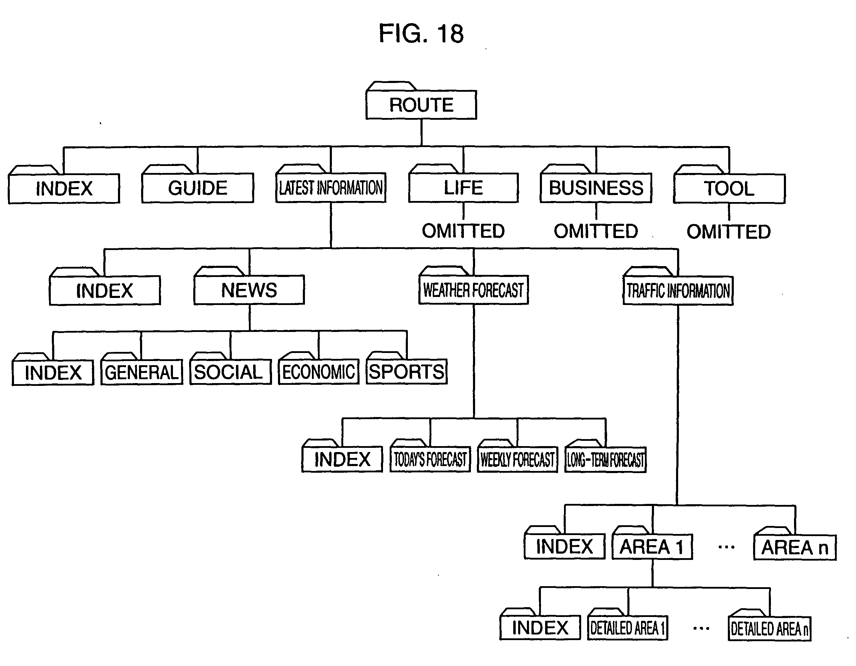

Fig. 18 is a diagram showing an example of the folder 201 having a layered system. The layered system of the folder 201, for example, may be of a tree structure.

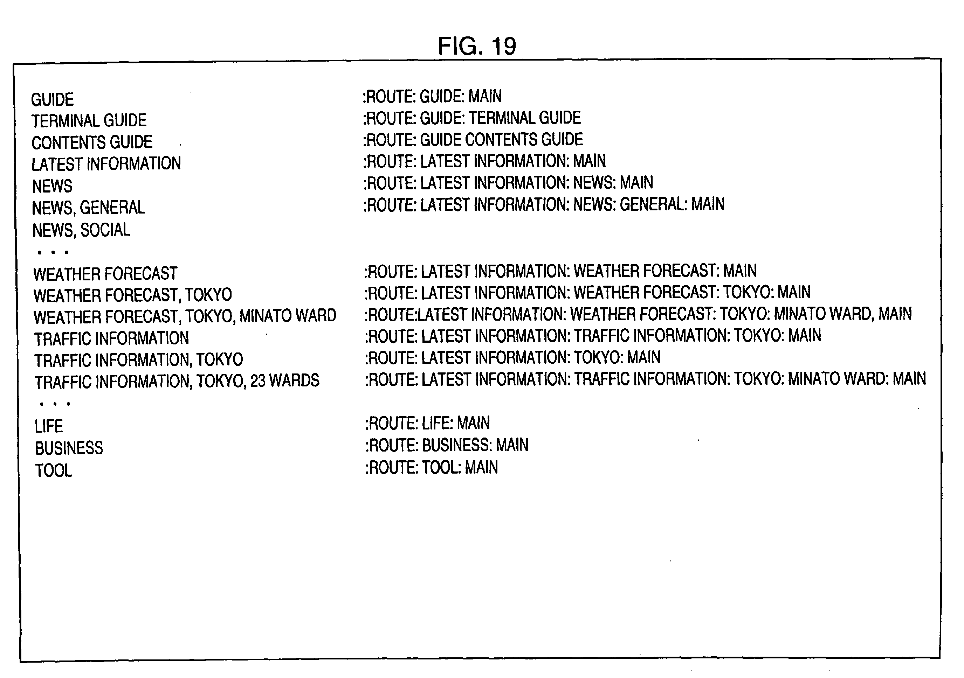

Fig. 19 is a diagram showing and example of the master designation data 215. The dynamic command map data 312 may also adopt the same constitution.

In this example, since the command is only for moving, the description thereof is omitted.

In the example shown in Fig. 19, the words indicated in the vertical row on the left side represent events (commands). In the example shown in Fig. 19, the character string indicated in the horizontal row on the right side represents the destination folder 201.

For example, when the event of "guide" is input with the master designation data 215 shown in Fig. 19, the routine moves to the folder 201 represented with route: guide: main (aggregate of contents 211 stored in the destination folder 201 is reproduced). When the event of "weather forecast, Tokyo" is input with the master designation data 215 shown in Fig. 19, the routine moves to the folder 201 represented with route: latest information: weather forecast: Tokyo: main.

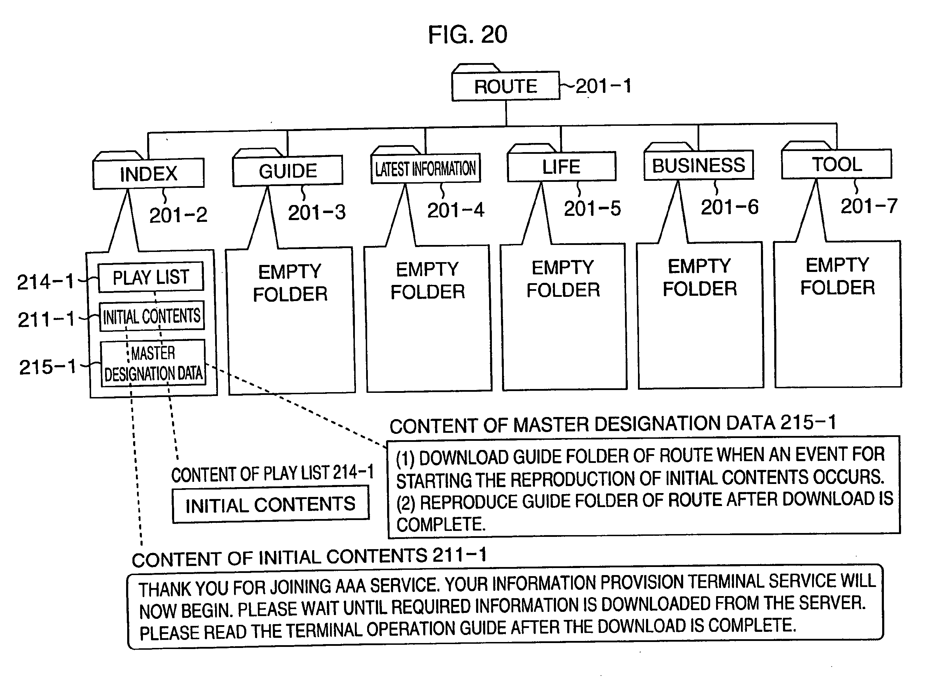

Fig. 20 is a diagram showing an example of the folder 201, play list 214, contents 211, and master designation data 215 stored in the contents memory unit 18 upon activating the information provision terminal device 1.

In the example shown in Fig. 20, stored in the contents memory unit 18 are a route folder 201-1, as well as an index folder 201-2, guide folder 201-3, latest information folder 201-4, life folder 201-5, business folder 201-6 and tool folder 201-7, which are children of the route folder 201-1. And, stored in the index folder 201-2 are a play list 214-1, initial contents 211-1 and master designation data 215-1.

When the information provision terminal device 1 is activated, since data stored in the initial pointer memory unit 108 has designated the index folder 201-2, the master control unit 101 makes the play list reader 102 read the play list 214-1. The play list 214-1 is designated to reproduce the initial contents 211-1.

Described in the master designation data 215-1 is, for example, instructions to download the guide folder 201-3 of the route folder 201-1 when a reproduction start event of the initial contents 211-1 is generated, and, after the download is completed, to reproduce the guide folder 201-3 of the route folder 201-1.

The initial contents 211-1 are, for example, data for outputting a message such as "Thank for joining AAA service. Your information provision terminal service will now begin. Please wait until required information is downloaded from the server. Please read the terminal operation guide after the download is complete."

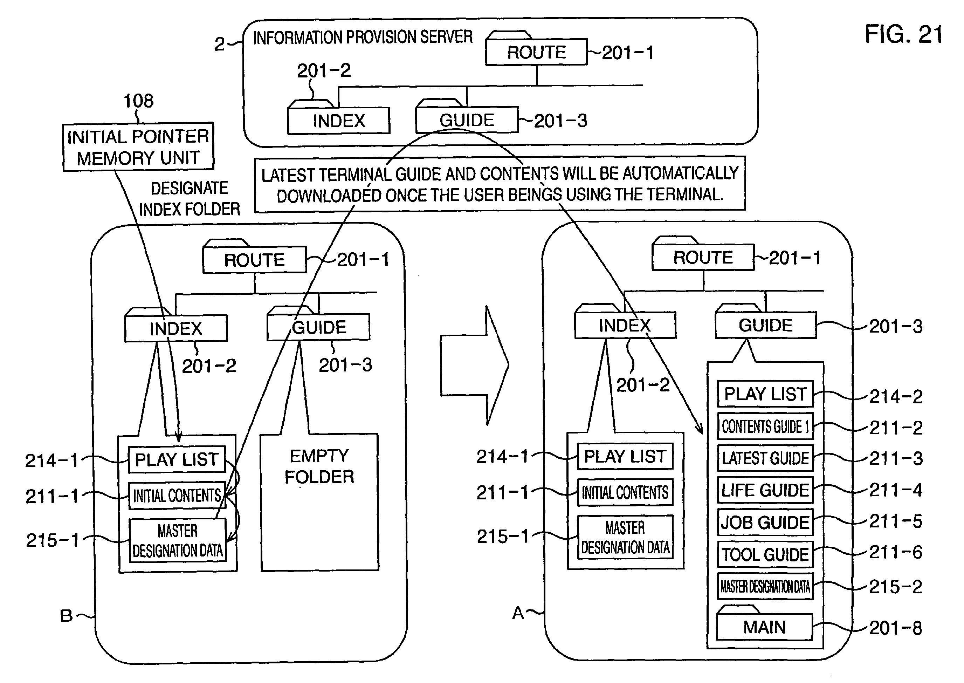

Therefore, as shown in Fig. 21, the information provision terminal device 1 automatically downloads contents of the guide folder 201-3 from the information provision server 2 upon the user 41 activating the information provision terminal device 1.

In other words, when a reproduction start event of the initial contents 211-1 is generated based on the control of the master designation data 215-1, the information provision terminal device 1 downloads the guide folder 201-3 of the route folder 201-1 from the information provision server 2, and, after the download is complete, reproduces the guide folder 201-3 of the route folder 201-1.

Therefore, after the download of the guide folder 201-3 of the route folder 201-1 is complete, stored in the guide folder 201-3 of the contents memory unit 18 are the play list 214-2, contents 211-2 as the contents guide 1, contents 211-3 as the latest guide, contents 211-4 as the life guide, contents 211-5 as the job guide, contents 211-6 as the tool guide, master designation data 215-2, and main folder 201-8 which is the child of the guide folder 201-3.

When the download of the guide folder 201-3 is complete, the master control unit 101 designates the play list reader 102 to reproduce the guide folder 201-3 of the route folder 201-1.

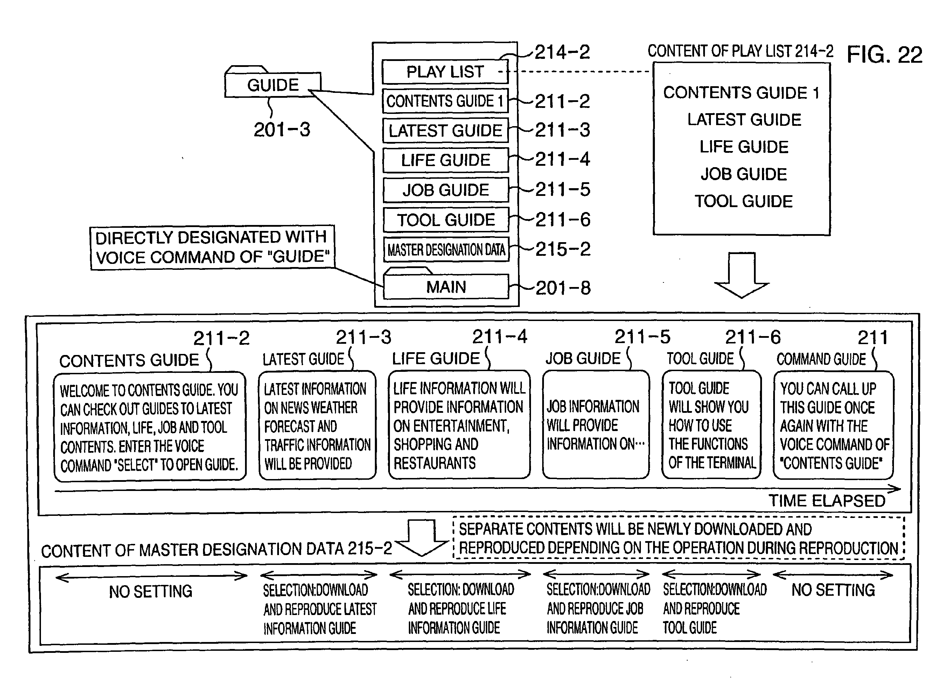

As shown in Fig. 22, when there is a description in the play list 214-2 to reproduce the contents 211-2 as the contents guide 1, contents 211-3 as the latest guide, contents 211-4 as the life guide, contents 211-5 as the job guide, and contents 211-6 as the tool guide in order, the play list reader makes the player 103 reproduce the contents 211-2 as the contents guide 1, contents 211-3 as the latest guide, contents 211-4 as the life guide, contents 211-5 as the job guide, and contents 211-6 as the tool guide in order based on the description in the play list 214-2.

For example, the contents 211-2 as the contents guide 1 are data for outputting a message such as, "Welcome to contents guide. You can check out guides to latest information, life, job and tool contents. Enter the voice command "select" to open guide". For example, the contents 211-3 as the latest information are for outputting a message such as "Latest information on news, weather forecast and traffic information will be provided."

For example, contents 211-4 as the life guide are data for outputting a message such as, "Life information will provide information on entertainment, shopping and restaurants." For example, contents 211-5 as the job guide are data for outputting a message such as, "Job information will provide information on..."

For example, contents 211-6 as the tool guide are data for outputting a message such as, "Tool guide will show how to use the functions of the terminal."

Accordingly, for instance, output from the voice output unit 122 are audio messages such as, "Welcome to contents guide. You can check out guides to latest information, life, job and tool contents. Enter the voice command "select" to open guide"; "Latest information on news, weather forecast and traffic information will be provided"; "Life information will provide information on entertainment, shopping and restaurants"; "Job information will provide information on... "; and "Tool guide will show how to use the functions of the terminal".

Further, after the contents 211-6 as the tool guide are output, it is possible to output the contents as the command guide.

There is a description in the master designation data 215-2 to download and reproduce the contents 211 of the latest information folder 201-4 when the latest guide contents 211-3 are being output and the selection command is input; to download and reproduce the contents 211 of the life information folder 201-5 when the life guide contents 211-4 are being output and the selection command is input; to download and reproduce the contents of the business information folder 201-6 when the job guide contents 211-5 are being output and the selection command is input; and to download and reproduce the contents 211 of the tool folder 201-7 when the tool contents 211-7 are being output and the selection command is input.

Accordingly, from the description in the master designation data 215-2, the master control unit 101 designates the download of the contents 211 of the latest information folder 201-4 when the latest guide contents 211-2 of the contents guide 1 are being output and the selection command is input, and designates the reproduction thereof when the download is complete; designates the download of the contents 211 of the latest information folder 201-4 when the latest guide contents 211-3 are being output and the selection command is input, and designates the reproduction thereof when the download is complete; designates the download of the contents 211 of the life information folder 201-5 when the life guide contents 211-4 are being output and the selection command is input, and designates the reproduction thereof when the download is complete; designates the download of the contents 211 of the business information folder 201-6 when the job guide contents 211-5 are being output and the selection command is input, designates the reproduction thereon when the download is complete; and designates the download of the contents 211 of the tool folder 201-7 when the tool contents 211-7 are being output and the selection command is been input, and designates the reproduction thereof when the download is complete.

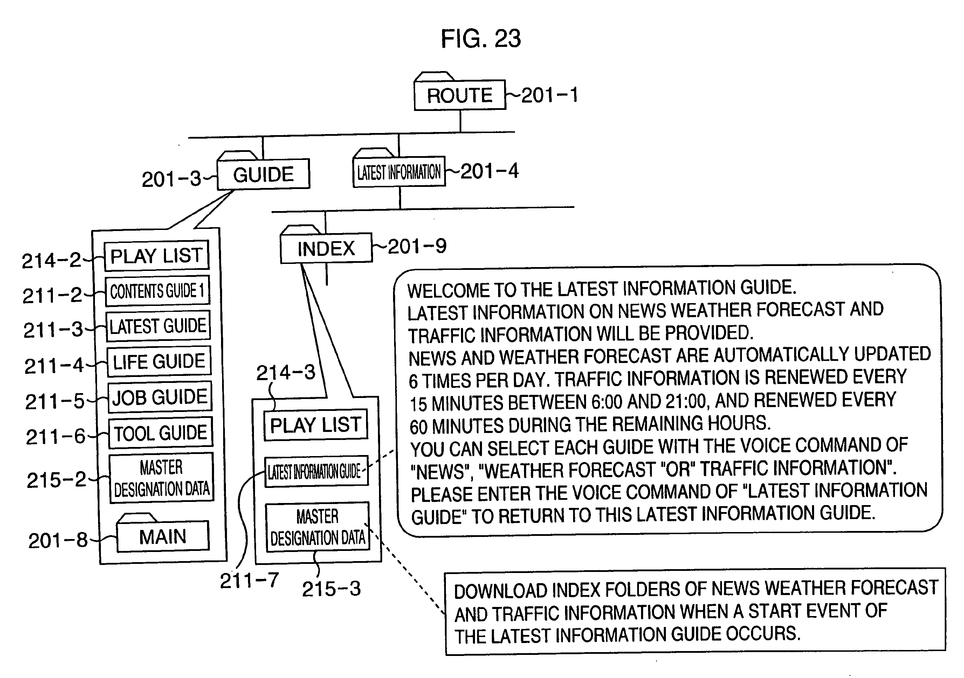

Accordingly, when the latest guide contents 211-3 are being output and the selection command is input, as shown in Fig. 23, the play list 214-3, latest information guide contents 211-7 and master designation data 215-3 stored in the index folder 201-9, which is the child of the latest information folder 201-4, are supplied from the information provision server 2 to the information provision terminal device 1.

The index folder 201-9 storing the play list 214-3, latest information guide contents 211-7 and master designation data 215-3 is stored in the latest information folder 201-4 of the contents memory unit 18.

The latest information guide contents 211-7, for example, makes the player 103 output a message such as, "Welcome to the latest information guide. Latest information on news, weather forecast and traffic information will be provided. News and weather forecast are automatically updated 6 times per day. Traffic information is renewed every 15 minutes between 6:00 and 21:00, and renewed every 60 minutes during the remaining hours. You can select each guide with the voice command of "news", "weather forecast" or "traffic information". Please enter the voice command of "latest information guide" to return to this latest information guide."

It is described in the master designation data 215-3 to download the index folder of news, weather forecast and traffic information, for example, when a start event of the latest information guide is generated.

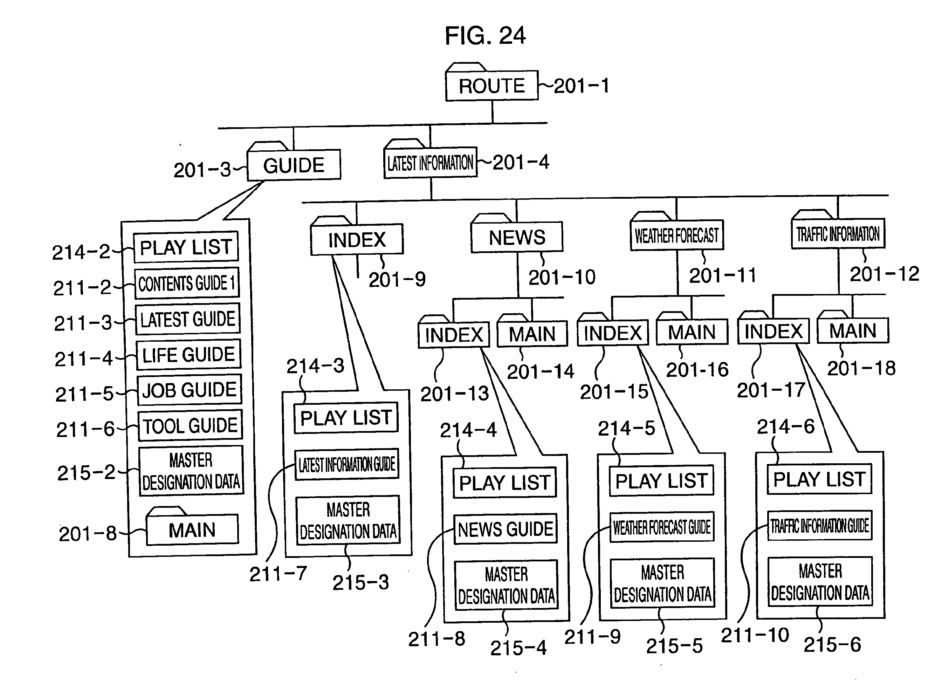

Accordingly, as shown in Fig. 24, from the description in the master designation data 215-3, the master control unit 101 downloads the news index folder 201-13, weather forecast index folder 201-15 and traffic information index folder 201-17 in the communication unit 106 when a start event of the latest information guide is generated.

The news folder 201-10, weather forecast folder 201-11 and traffic information folder 201-12, which are children of the latest information folder 201-4, are generated in the contents memory unit 18, and the news index folder 201-13 which is the child of the news folder 201-10, the weather forecast index folder 201-15 which is the child of the weather forecast folder 201-11, and the traffic information index folder 201-17 which is the child of the traffic information folder 201-12 are recorded therein.

Stored in the index folder 201-13 of the contents memory unit 18 are the play list 214-4, news guide contents 211-8 and master designation data 215-4 downloaded from the information provision server 2.

Stored in the index folder 201-15 of the contents memory unit 18 are the play list 214-5, weather forecast guide contents 211-9 and master designation data 215-5 downloaded from the information provision server 2.

Stored in the index folder 201-17 of the contents memory unit 18 are the play list 214-6, traffic information guide contents 211-10 and master designation data 215-6 downloaded from the information provision server 2.

Further, the main folder 201-14 is arranged as the child of the news folder 201-10. The main folder 201-16 is arranged as the child of the weather forecast folder 201-11. The main folder 201-18 is arranged as the child of the traffic information folder 201-12.

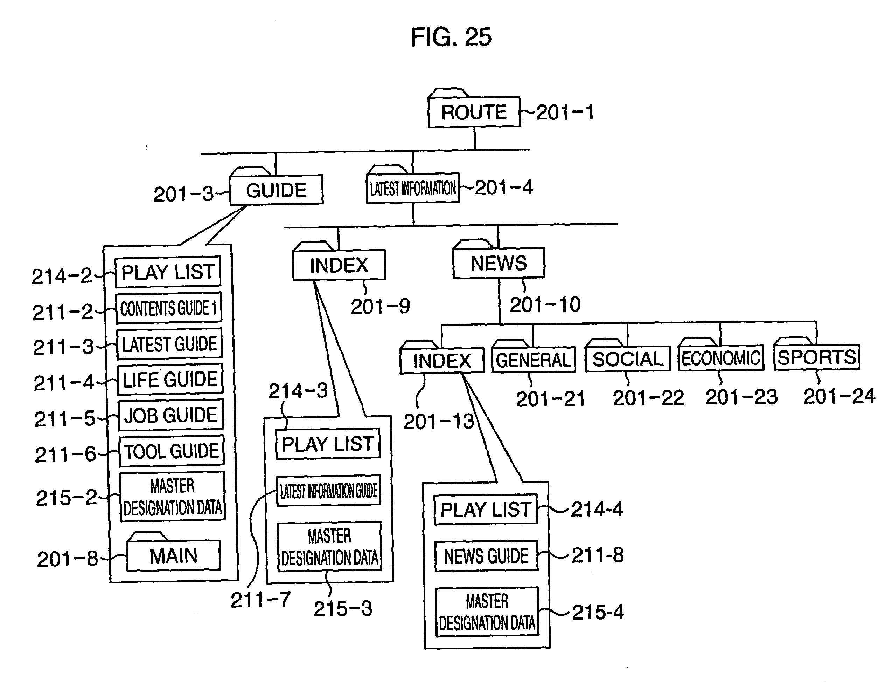

The main folder 201-14 as the child of the news folder 201-10, as shown in Fig. 25, for instance, contains a general folder 201-21, a social folder 201-22, an economic folder 201-23 and a sports folder 201-24.

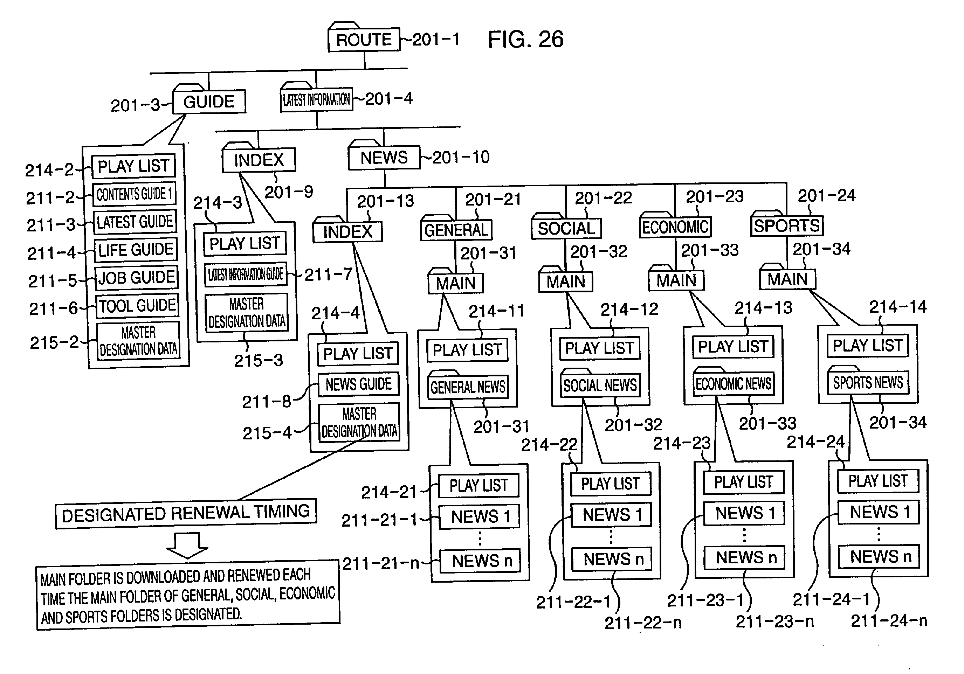

Further, as shown in Fig. 26, based on the master designation data 215, the information provision terminal device 1 downloads the play list 214-11 and general news folder 201-31 stored in the main folder 201-31 which is the child of the general folder 201-21 from the information provision server 2, downloads the play list 214-12 and social news folder 201-32 stored in the main folder 201-32 which is the child of the social folder 201-22, downloads the play list 214-13 and economic news folder 201-33 stored in the main folder 201-33 which is the child of the economic folder 201-23, downloads the play list 214-14 and sports news folder 201-34 stored in the main folder 201-34 which is the child of the sports folder 201-24, and stores these in the contents memory unit 18.

Moreover, based on the master designation data 215, the information provision terminal device 1 downloads the play list 214-21 and news contents 211-21-1 to 211-21-n stored in the general news folder 201-31 from the information provision server 2, and stores these in the contents memory unit 18; downloads the play list 214-22 and news contents 211-22-1 to 211-22-n stored in the social news folder 201-32, and stores these in the contents memory unit 18; downloads the play list 214-23 and news contents 211-23-1 to 211-23-n stored in the economic news folder 201-33, and stores these in the contents memory unit 18; and downloads the play list 214-24 and news contents 211-24-1 to 211-24-n stored in the sports news folder 201-34 and stores these in the contents memory unit 18.

As described above, the information provision terminal device 1 sequentially downloads the contents 211, play list 214 and master designation data 215 from the information provision server 2 via the network 3, and stores the same.

As described above, in the information provision system pertaining to the present invention, the download of information is induced based on the reproduction of contents resulting from the user's operation. Data required in the contents can be designated with a single operation.

Further, the route for designating the folder and the data stored therein, including the sub-folders, are all downloaded (distributed). Moreover, as a result of reproducing the contents, the subsequent contents are automatically distributed, and the service is continuously provided.

In addition, the downloaded contents can be renewed.

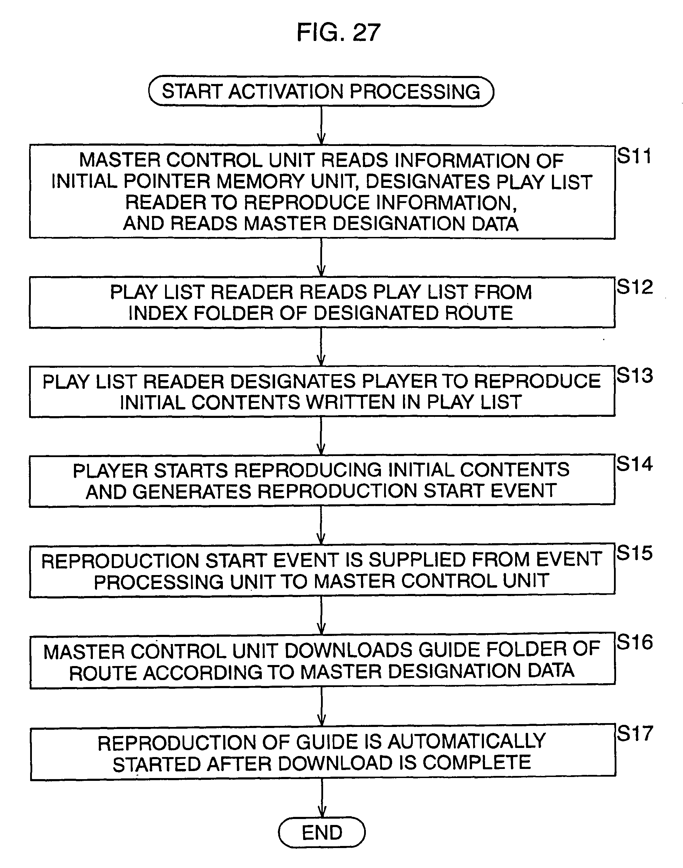

The activation processing of the information provision terminal device 1 is now explained with reference to the flowchart shown in Fig. 27.

At step S11, the master control unit 101 reads information indicating the folder 201 from the initial pointer memory unit 108, designates the reproduction of the folder 201 represented with the read information to the play list reader 102, and reads the master designation data 215 stored in the folder 201 represented with the read information.

At step S12, the play list reader 102 reads the play list 214 from the index folder 201, which is the folder 201 represented with the read information.

At step S13, the play list reader 102 designates the reproduction of the initial contents written in the play list 214 to the player 103. At step S14, the player 103 starts the reproduction of the initial contents 211, and generates a reproduction start event. The reproduction start event is supplied to the event processing unit 111.

At step S15, the event processing unit 111 supplies the reproduction start event to the master control unit 101. At step S16, the master control unit 101, in accordance with the master designation data, downloads the guide folder 201, which is a child of the route folder 201, from the information provision server 2 via the network 3.

At step S17, when the master control unit 101 completes the download of the guide folder 201, it designates the reproduction of the guide folder 201 to the play list reader 102, the contents 211 of the guide folder 201 is reproduced, and the processing is ended thereby. In other words, when the download of the guide folder 201 is completed, reproduction of the guide is automatically started.

Next, details regarding the processing of the master control unit 101 are explained.

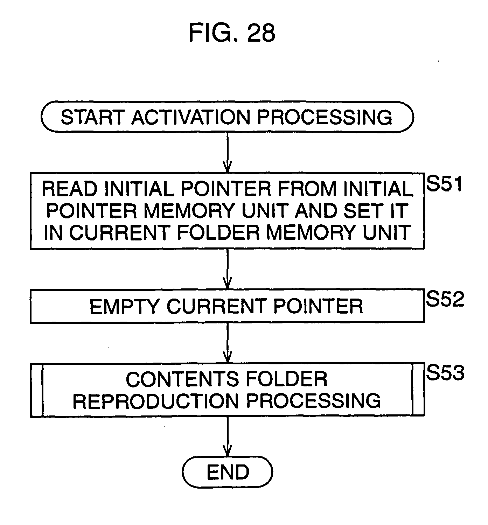

Fig. 28 is a flowchart for explaining the activation processing of the master control unit 101.

At step S51, the master control unit 101 reads the initial pointer from the initial pointer memory unit 108, and sets it in the current folder memory unit 262. At step S52, the master control unit 101 empties the current pointer 109.

At step S53, the master control unit 101 executes the contents folder reproduction processing, and the processing is ended thereby.

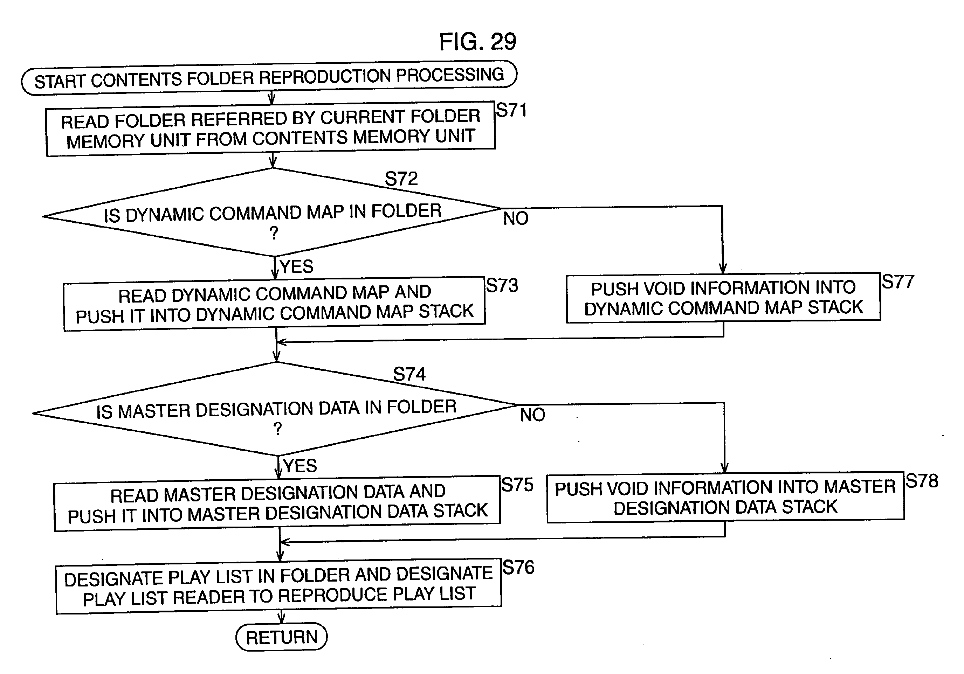

Fig. 29 is a flowchart for explaining the contents folder reproduction processing in detail. At step S71, the master control unit 101 reads the folder 201 referred to by the current folder memory unit 262 from the contents memory unit 18.

At step S72, the master control unit 101 determines whether the folder 201 contains the dynamic command map data 312, and, when it is determined that the folder 201 contains the dynamic command map data 312, the routine proceeds to step S73, and the master control unit 101 reads the dynamic command map data 312, pushes the dynamic command map data 312 into the dynamic command stack 264, and the routine proceeds to step S74.

At step S74, the master control unit 101 determines whether the folder 201 contains the master designation data 215, and, when it is determined that the folder 201 contains the master designation data 215, the routine proceeds to step S75, and the master control unit 101 reads the master designation data 215, pushes the master designation data 215 into the master designation data stack 265, and the routine proceeds to step S76.

At step S76, the master control unit 101 designates the play list 214 contained in the folder 201, designates the reproduction thereof to the play list reader 102, and the processing is ended thereby.

At step S72, when it is determined that the folder 201 does not contain the dynamic command map data 312, the routine proceeds to step S77, the void information (information indicating that it is empty) is pushed into the dynamic command stack 264, and the routine proceeds to step S74. At step S74, when it is determined that the folder 201 does not contain the master designation data 215, the routine proceeds to step S78, the void information is pushed into the master designation data stack 265, and the routine proceeds to step S76.

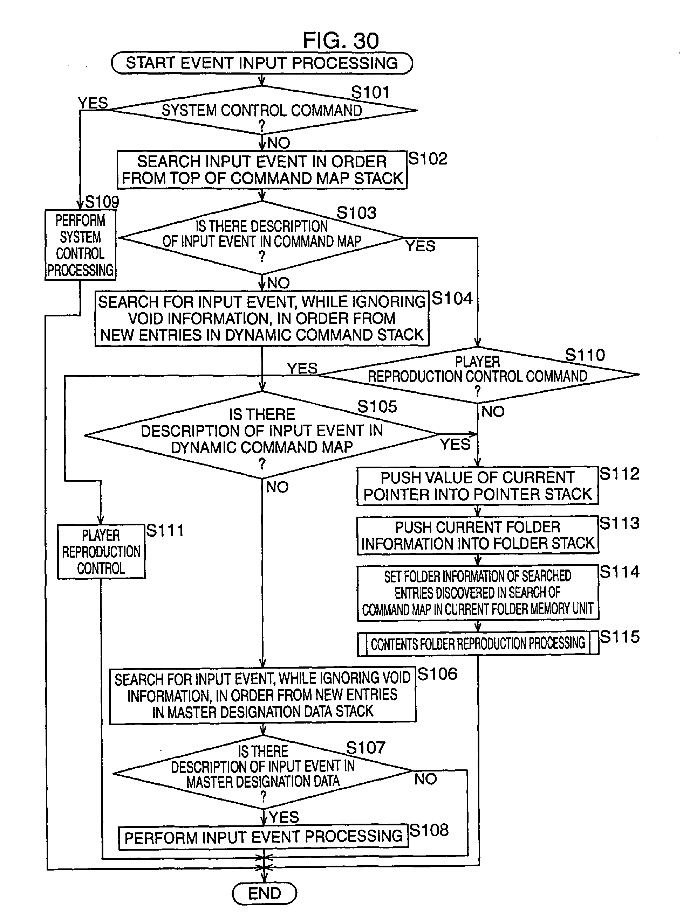

Fig. 30 is a flowchart for explaining the event input processing by the master control unit 101.

At step S101, the master control unit 101 determines whether the input event is a system control command, and, when it is determined that the event is not a system control command, the routine proceeds to step S102, and searches for the input event in order from the top of the command map stack.

At step S103, the master control unit 101 determines whether there is a description of the event input to the command map data 311, and, when it is determined that there is no description of the event input to the command map data 311, the routine proceeds to step S104, and searches for the input event, while ignoring the void information, in the order of new entry of the dynamic command stack 264.

At step S105, the master control unit 101 determines whether there is a description of the event input to the dynamic command map data 312, and, when it is determined that there is no description of the event input to the dynamic command map data 312, the routine proceeds to step S106, and searches for the input event, while ignoring the void information, in the order of new entry of the master designation data stack 265.

At step S107, the master control unit 101 determines whether there is a description of the event input to the master designation data 215, and, when it is determined that there is a description of the event input to the master designation data 215, the routine proceeds to step S108, and executes the processing of the input event based on the command described in correspondence to the event input to the master designation data 215.

At step S107, when it is determined that there is no description of the event input to the master designation data 215, since the input event is not a system control command, and not described in the command map data 311, dynamic command map data 312 and master designation data 215, the processing is ended thereby.

At step S101, when it is determined that the event is a system control command, the routine proceeds to step S109, and the master control unit 101 executes system control processing, and the processing is ended thereby.

At step S103, when it is determined that there is a description of the event input to the command map data 311, the routine proceeds to step S110, and determines whether the input event is a player reproduction control command, and, when the input event is determined to be a player reproduction control command, the routine proceeds to step S111, and the master control unit 101 executes the player reproduction control corresponding to the input event, which is the player reproduction control command, and the processing is ended thereby.

At step S110, when it is determined that the input event is not a player reproduction control command, the routine proceeds to step S112, and the master control unit 101 pushes the value of the current pointer 109 into the pointer stack 110.

At step S113, the master control unit 101 pushes the current folder information stored in the current folder memory unit 262 to the folder stack 263. At step S114, the master control unit 101 sets the entry folder information discovered in the search of the command map data 311 or dynamic command map data 312 in the current folder memory unit 262.

At step S115, the master control unit 101 executes the contents folder reproduction processing, and the processing is ended thereby. Incidentally, the contents folder reproduction processing at step S115 is the same as the processing explained with reference to the flowchart shown in Fig. 29.

At step S105, when it is determined that there is a description of the event input to the dynamic command map data 312, the routine proceeds to step S112, and executes the foregoing processing.

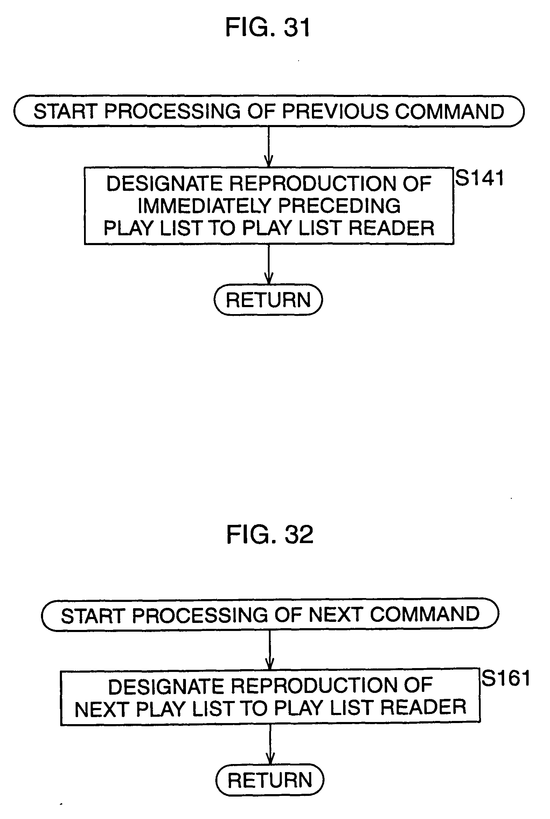

Fig. 31 is a flowchart for explaining the previous command processing.

At step S141, the master control unit 101 makes the player 103 designate the reproduction of the immediately preceding contents described in the play list 214 to the play list reader 102, and the processing is ended thereby.

Fig. 32 is a flowchart for explaining the subsequent command processing.

At step S161, the master control unit 101 makes the player 103 designate the reproduction of the subsequent contents described in the play list 214 to the play list reader 102, and the processing is ended thereby.

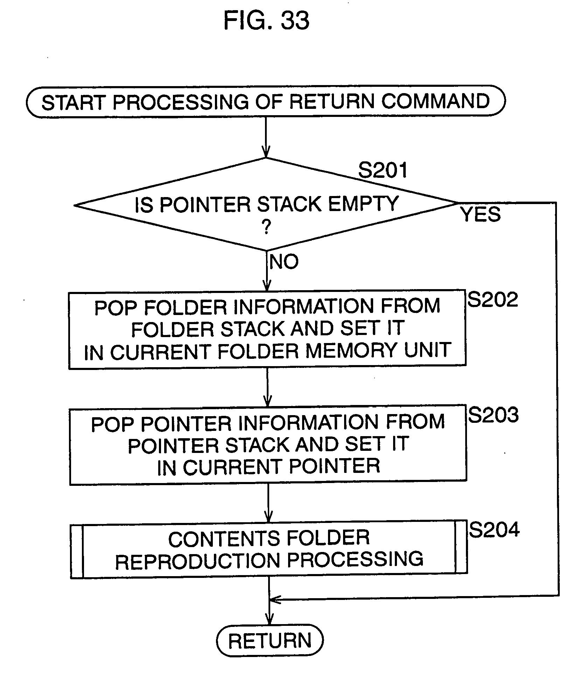

Fig. 33 is a flowchart for explaining the return command processing.

At step S201, the master control unit 101 determines whether the pointer stack 110 is empty, and, when the pointer stack 110 is not empty; that is, when the pointer information is stored in the pointer stack 110, the routine proceeds to step S202, and the master control unit 101 pops the folder information from the folder stack 263, and sets the popped folder information in the current folder memory unit 262.

At step S203, the master control unit 101 pops the pointer information from the pointer stack 110, and sets it in the current pointer 109. At step S204, the master control unit 101 executes the contents folder reproduction processing, and the processing is ended thereby. Incidentally, the contents folder reproduction processing at step S204 is the same as the processing explained with reference to the flowchart shown in Fig. 29.

At step S201, when it is determined that the pointer stack 110 is empty, the processing will end.

As described above, when a return command is input, the master control unit 101 is able to reproduce the contents 211 stored in the folder 201 reproduced previously.

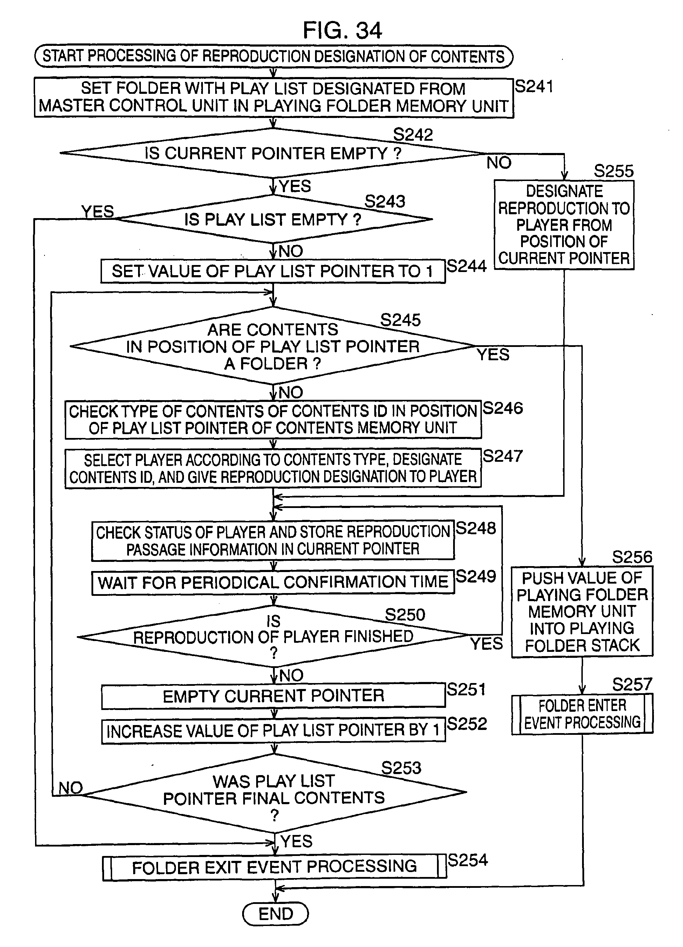

Fig. 34 is a flowchart for explaining the processing of reproduction designation of contents by the play list reader 102.

At step S241, the play list reader 102 sets the folder 201 containing the play list 214 designated from the master control unit 101 in the playing folder memory unit.

At step S242, the play list reader 102 determines whether the current pointer 109 is empty, and, when it is determined that the current pointer 109 is empty, the routine proceeds to step S243, and further determines whether the play list 214 is empty. At step S243, when it is determined that the play list 214 is not empty, the routine proceeds to step S244, and the play list reader 102 sets the value of the play list pointer to 1.

At step S245, the play list reader 102 determines whether the contents 211 of the play list position is a folder 201; in other words, whether the contents 211 in a position designated with the play list pointer in the play list 214 is a folder 201, and, when it is determined that it is not a folder 201, the routine proceeds to step S246.

At step S246, the play list reader 102 checks the type of contents 211 of the contents ID in the play list pointer position of the contents memory unit 18. In other words, the play list reader 102 acquires information indicating the type of contents 211 in a position designated with the play list pointer in the play list 214 stored in the contents memory unit 18.

At step S247, the play list reader 102 selects the player 103 according to the type of contents 211, designates the contents ID, and designates the reproduction thereof to the player 103. At step S248, the play list reader 102 checks the state of the player 103, and stores the reproduction passage information in the current pointer 109.

At step S249, the play list reader 102 waits for a periodical confirmation time. At step S250, the play list reader 102 determines whether the reproduction of the player 103 has finished, and, when it is determined that the reproduction of the player 103 has not finished, the routine returns to step S248, and repeats the foregoing processing.

At step S250, when it is determined that the reproduction of the player 103 has finished, the routine proceeds to step S251, and the play list reader 102 empties the current pointer 109.

At step S252, the play list reader 102 increases the value of the play list pointer by 1. At step S253, the play list reader 102 determines whether the play list pointer was the final contents 211; that is, whether the contents 211 in a position designated with the play list pointer in the play list 214 are the final contents 211, and, when it is determined that is was not the final contents 211, the routine returns to step S245, and repeats the foregoing processing.

At step S253, when it is determined that it is the final contents 211, the routine proceeds to step S254, requests the folder exit event processing to the master control unit 101, and the processing is ended thereby. Details of the folder exit event processing will be described later.

At step S242, when it is determined that the current pointer 109 is not empty, the routine proceeds to step S255, and the play list reader 102 designates the reproduction from the indication of the current pointer 109 to the player 103, and the routine proceeds to step S248. At step S245, when it is determined to be a folder 201, the routine proceeds to step S256, and the play list reader 102 pushes the value of the playing folder memory unit into the playing folder stack.

At step S257, the play list reader 102 requests the folder enter event processing to the master control unit 101, and the processing is ended thereby.

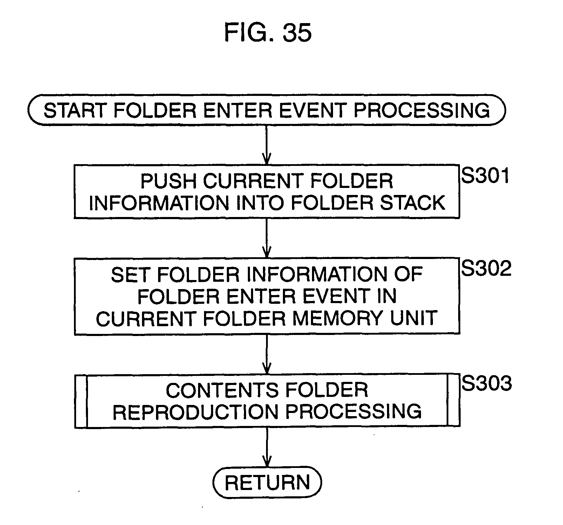

Fig. 35 is a flowchart for explaining the folder enter event processing corresponding to step S257.

At step S1, the master control unit 101 pushes the current folder information stored in the current folder memory unit 262 into the folder stack 263. At step S2, the master control unit 101 sets the folder information of the folder enter event in the current folder memory unit 262.

At step S3, the master control unit 101 executes the contents folder reproduction processing, and the processing is ended thereby. Incidentally, the contents folder reproduction processing at step S3 is the same as the processing explained with reference to the flowchart shown in Fig. 29.

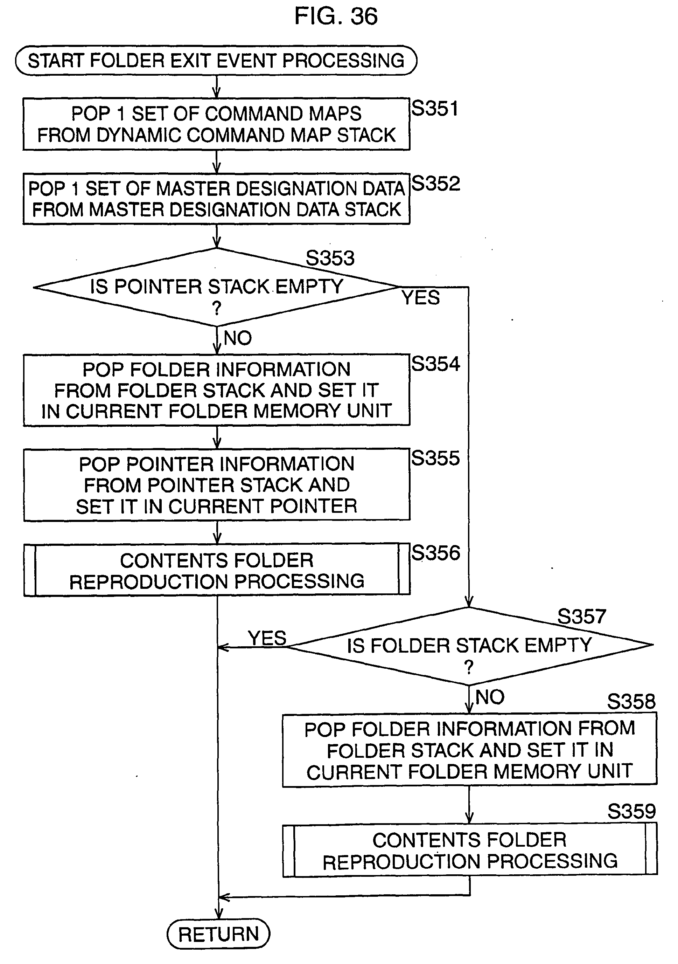

Fig. 36 is a flowchart for explaining the folder exit event processing corresponding to step S254.

At step S351, the master control unit 101 pops 1 set of command map data 311 from the dynamic command stack 264.

At step S352, the master control unit 101 pops 1 set of master designation data from the master designation data stack 265.

At step S353, the master control unit 101 determines whether the pointer stack 110 is empty, and, when it is determined that the pointer stack 110 is not empty, the routine proceeds to step S354, pops the folder information from the folder stack 263, and sets the folder information in the current folder memory unit 262.

At step S355, the master control unit 101 pops the pointer information from the pointer stack 110, and sets it in the current pointer 109. At step S356, the master control unit 101 executes the contents folder reproduction processing, and the processing is ended thereby. Incidentally, the contents folder reproduction processing at step S356 is the same as the processing explained with reference to the flowchart shown in Fig. 29.

At step S353, when it is determined that the pointer stack 110 is empty, the routine proceeds to step S357, and the master control unit 101 determines whether the folder stack 263 is empty, and, when it is determined that the folder stack 263 is empty, the processing is ended thereby.

At step S357, when it is determined that the folder stack 263 is not empty, the routine proceeds to step S358, and the master control unit 101 pops the folder information from the folder stack 263, and sets the folder information in the current folder memory unit 262.

At step S359, the master control unit 101 executes the contents folder reproduction processing, and the processing is ended thereby. Incidentally, the contents folder reproduction processing at step S359 is the same as the processing explained with reference to the flowchart shown in Fig. 29.

As described above, when information is output, information can be provided to a user.

Further, when the event response control program associated with an aggregate containing information being output is read, the output of such aggregate is controlled based on the read event response control program and in correspondence with an event, and the output of information containing the aggregate is controlled based on the ordinal data associated with the aggregate for which the output thereof has been designated, this will enable the continuous output of required information at an appropriate timing and in appropriate order with minimal operation.

When information is to be received, the received information can be output.

Moreover, when the reception of the aggregate is controlled based on an event response control program associated with the aggregate, which contains the information being output, among the event response control programs having described therein a command for an event and associated with each of the aggregates, and in correspondence with the event; and the transmission of the request of the aggregate, for which the reception thereof was designated at the aggregate reception control step, to the information provision device for providing the information is controlled, and the reception of the information belonging to the requested aggregate and the event response control program associated with the requested aggregate provided by the information provision device is controlled, this will enable the continuous reception of required information at an appropriate timing and in appropriate order with minimal operation.

In addition, when the memory of the information having a layered system with an aggregate of the information as the unit thereof and the memory of the event response control program having described therein a command for an event on the reception side associated with each of the aggregates are stored; and the transmission of the information belonging to the requested aggregate and the event response control program associated with the requested aggregate to the information reception device when the aggregate is requested from the information reception device for receiving the information is transmitted, this will enable the continuous reception of required information at an appropriate timing and in appropriate order with minimal operation.

When the program is associated with a first aggregate, which is an aggregate among the aggregates; the program is read into the computer for controlling the output or reception of the information when the information belonging to the first aggregate or the information belonging to the aggregate of the descendant of the first aggregate is being output; and the program makes the computer execute the processing in relation to at least the output of a second aggregate, which is another aggregate among the aggregates, or the reception of the second aggregate when a prescribed event occurs, it will be possible to enable the continuous output of required information at an appropriate timing and in appropriate order with minimal operation, or enable the continuous reception of required information at an appropriate timing and in appropriate order with minimal operation.

Further, in addition to information being stored, when the event response control program having described therein a command for an event on the reception side associated with each of the aggregates is stored; information belonging to the requested aggregate and the event response control program associated with the requested aggregate to the information reception device when the aggregate is requested from the information reception device for receiving the information are transmitted; reception of the aggregate is controlled based on an event response control program associated with the aggregate, which contains the information being output, among the event response control programs having described therein a command for an event and associated with each of the aggregates, and in correspondence with the event; request of the aggregate, for which the reception thereof was designated, to the information provision device is transmitted, and information belonging to the requested aggregate and the event response control program associated with the requested aggregate provided by the information provision device is received, this will enable the continuous output of required information at an appropriate timing and in appropriate order with minimal operation in the information reception device.

Next, the business support system as the information provision system pertaining to the present invention is explained. In other words, a business support system adopting the information provision system having the characteristics explained with reference to Fig. 1 to Fig. 36 for supporting business is explained.

With the business support system according to the present invention, by adopting the constitution of adding a function of controlling the transmission of the contents and information comprehended (acquired) with the terminal device according to the business condition, it will be possible to support the business operation without having to increase the user's operations.

Instead of providing a business application program in which the user needs to focus one's attention of the screen or operation when giving instructions or supporting the user, by providing such instructions or support with voices, sound effects or images that are automatically reproduced ongoingly, such user will not have to focus one's attention on the business support terminal device, and, as a result of automatically controlling the reproduction of contents according to the business condition and automating the transmission operation of information from the user to the other party, the user will hardly have to perform any operations.

In other words, with the business support system described below, added to the information provision system having the characteristics explained with reference to Fig. 1 to Fig. 36 are a function for detecting the business condition, a function for comprehending the business condition based on the reproduction of the contents 211, an automatic reporting function according to the event input in relation to the contents 211, and a function for controlling the external equipment based on the reproduction of the contents 211 for supporting business.

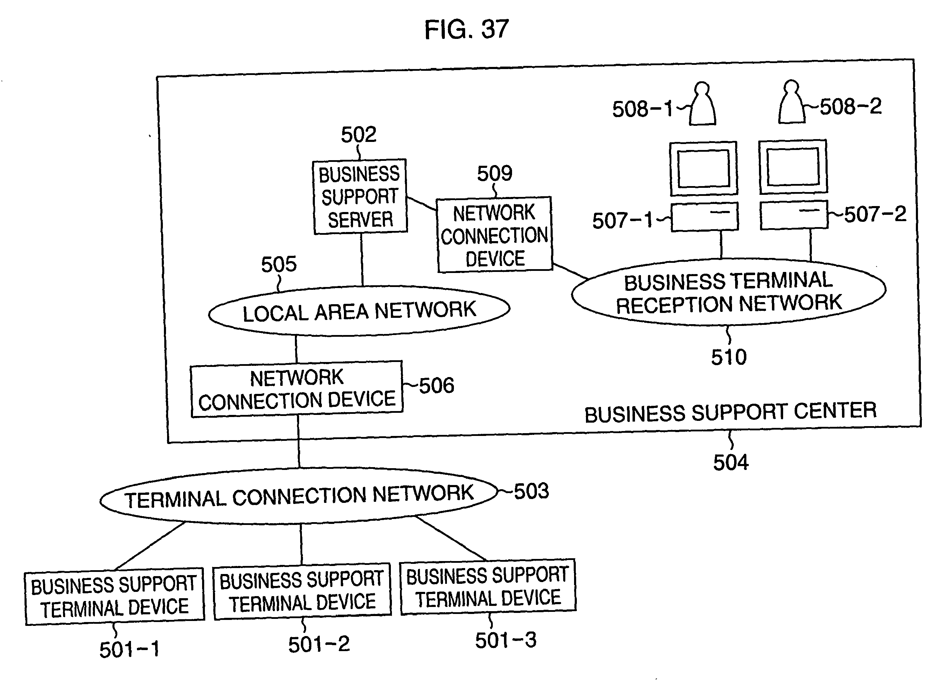

Fig. 37 is a block diagram for explaining the constitution of an embodiment of the business support system as the information provision system pertaining to the present invention.

The business support terminal devices 501-1 to 501-3 are connected to the business support server 502 via the terminal connection network 503, local area network 505 of the business support center 504, and the network connection device 506.

The business support terminal devices 501-1 to 501-3 support the implementation of business of the user 41 by reproducing the contents 211. The business support terminal devices 501-1 to 501-3 have the same constitution as the information provision terminal device 1 illustrated in Fig. 2, and the explanation thereof is omitted.

The business support server 502 provides the contents 211 for supporting the implementation of business to the business support terminal devices 501-1 to 501-3 via the terminal connection network 503. The business support server 502 has the same constitution as the information provision server 2 illustrated in Fig. 3, and the explanation thereof is omitted.

To explain the outline, the business support terminal devices 501-1 to 501-3 have a constitution of adding a business condition information memory unit described later to the constitution of the information provision terminal device 1 illustrated in Fig. 4, and the master control unit 101 stores an ID for identifying the contents 211 to be reproduced, description of the event that arose during the reproduction of the contents, time information and so on in the business condition information memory unit, and transmits such stored ID, description, and time information to the business support server 502 via the communication unit 106 based on the designation of the master designation data 215.

The terminal connection network 503 connects the business support terminal devices 501-1 to 501-3 and the business support center 504.

The business support center 504 includes a business support server 502, local area network 505, a network connection device 506, business terminal devices 507-1 and 507-2, a network connection device 509, and a business terminal reception network 510.

The business support server 502 is connected to the terminal connection network 503 via the terminal connection network 503 and local area network 505 in the business support center 504, and is also connected to the business terminal devices 507-1 and 507-2 via the network connection device 509 and business terminal reception network 510.

The business support server 502 stores the business guide contents as the contents 211 in the foregoing information provision server 2, and is installed in a business support center 504, which is one of the bases for providing business support. When the operators 508-1 and 508-2 are installed in the business support center 504, the operators 508-1 and 508-2 will perform their business with the business terminal device 507-1 or 507-2. The operator 508-1 and 508-2 may be one person, or several persons.

The business terminal device 507-1 is operated by the operator 508-1, uploads to the business support server 502 the contents for supporting the implementation of business to the business support server 502 via the connection device 509 and business terminal reception network 510, and manages the progress of business of the user 41 using the business support terminal device 501-1 to 501-3.

The business terminal device 507-2 is operated by the operator 508-2, supplies an event for managing clients to the business support server 502, and, by supplying the event for managing clients to the business support terminal device 501-1 to 501-3, designates business in accordance with the event to the user 41 using the business support terminal device 501-1 to 501-3.

The local area network 505 is connected to a device for providing information to the business support terminal devices 501-1 to 501-3 via the terminal connection network 503, or receiving information from the business support terminal devices 501-1 to 501-3.

The network connection device 506 is a gateway or router, and connects the local area network 505 and terminal connection network 503. The network connection device 509 is a gateway or route, and connects the business support server 502 and business terminal reception network 510.

The business terminal reception network 510 connects the business terminal device 507-1 and business terminal device 507-2, and the business support server 502 via the network connection device 509.

Incidentally, when providing all business support automatically with the business support server 502, the constitution may omit the business terminal device 507-1 and business terminal device 507-2, and the business terminal reception network 510.

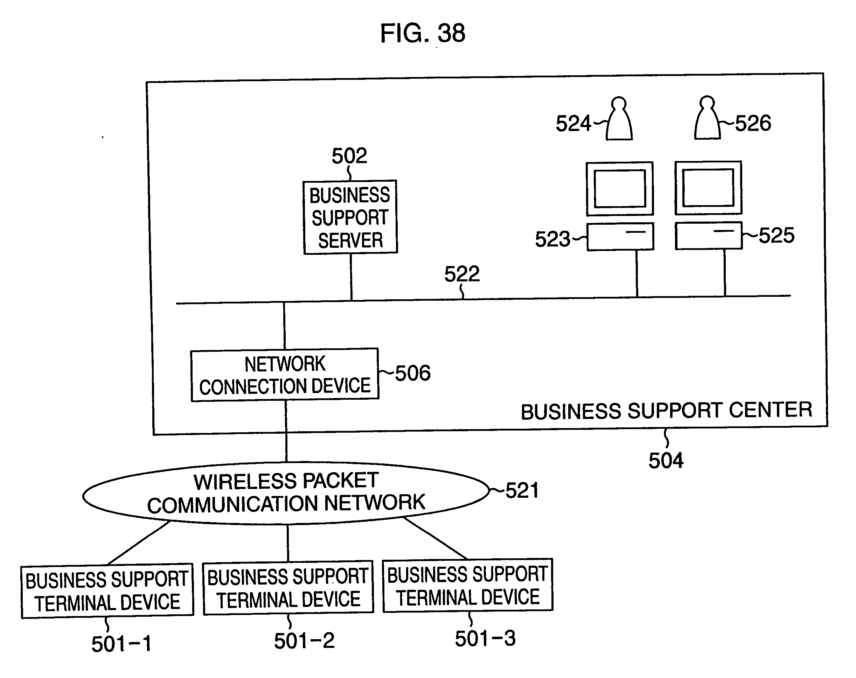

Fig. 38 is a block diagram showing a further specific example of the business support system. Components that are the same as those shown in Fig. 37 are given the same reference numeral, and the explanation thereof is omitted.

The terminal connection network 503 may be a wireless packet communication network 521 which conducts wireless communication via a packet. The LAN 522 is a network that connects the local area network 505 and business terminal reception network 510 illustrated in Fig. 37.

In other words, the business support server 502, and the business management terminal device 523 as the specific example of the business terminal device 507-1, and the business management terminal device 525 as the specific example of the business terminal device 507-2 are mutually connected via the LAN 522.

The business management terminal device 523 is operated by the operation management operator 524, and manages the progress of business of the user 41 using the business support terminal devices 501-1 to 501-3 based on the information indicating the progress of business uploaded from the business support terminal devices 501-1 to 501-3 to the business support server 502.

The business management terminal device 525 is operated by a client response operator 526, supplies an event for managing the client according to the client's request to the business support server 502, and, by supplying the event for managing the client to the business support terminal devices 501-1 to 501-3, designates business according to the client's request to the user 41 using the business support terminal devices 501-1 to 501-3 according to the event.

When the business support terminal devices 501-1 to 501-3 do not have to be differentiated separately, they will be simply referred to as a business support terminal device 501 below.

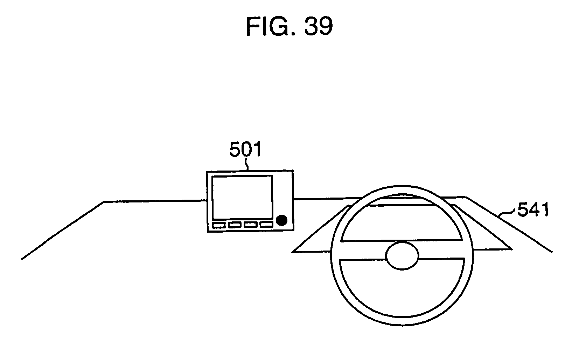

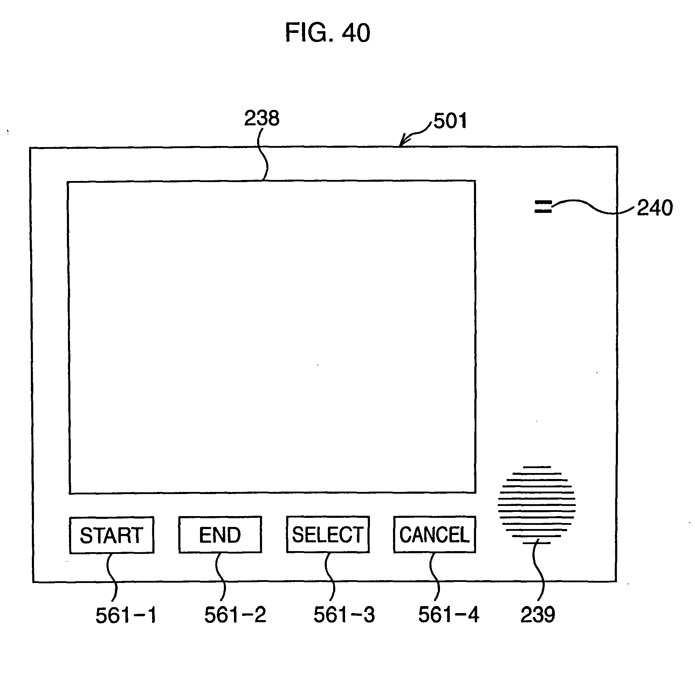

Referring to Fig. 39 and Fig. 40, the an example of the state of use and external appearance of the business support terminal device 501 is now explained. The business support terminal device 501, for example, is mounted on a delivery vehicle 541 as shown in Fig. 39 for supporting the user 41 driving such vehicle for business. Here, for example, the business support terminal device 501 designates the delivery route or delivery destination.

For example, the business support terminal device 501 is mounted on the instrumental panel (dashboard) of the vehicle 541 so that the user 41 can view the display screen thereof.

The business support terminal device 501 is provided with a liquid crystal display unit 238, a speaker 239, and a microphone 240. Further, operation buttons 561-1 to 561-4 as the human interface unit 91 are provided to the business support terminal device 501. By the user 41 pressing the operation buttons 561-1 to 561-4, or speaking a voice command, to operate the business support terminal device 501, such user 41 is able to use the contents 211 for supporting business provided by the business support terminal device 501.

While driving, since it is dangerous to gaze at the screen, it is desirable that the business support terminal device 501 displays information such that it can be recognized at a glance, or, for example, presents information only with sound without displaying the information.

The word "Start" is displayed on the operation button 561-1. When this operation button 561-1 is pressed, an event, which is a command for designating start, is supplied to the event processing unit 111. The word "End" is displayed on the operation button 561-2. When this operation button 561-2 is pressed, an event, which is a command for designating end, is supplied to the event processing unit 111.

The word "Select" is displayed on the operation button 561-3. When this operation button 561-3 is pressed, an event, which is a command for designating select, is supplied to the event processing unit 111. The word "Cancel" is displayed on the operation button 561-4. When this operation button 561-4 is pressed, an event, which is a command for designating cancel, is supplied to the event processing unit 111.

Fig. 41 is a block diagram showing the detailed constitution of the business support system pertaining to the present invention. Components that are the same as those shown in Fig. 6 are given the same reference numeral, and the explanation thereof is omitted.

With the business support system shown in Fig. 41, in place of the environment information detection unit 92 illustrated in Fig. 6, a business condition information detection unit 581 is provided. Various sensors are provided to the business condition information detection unit 581.

With the business support system shown in Fig. 41, in place of the contents provision system 94 illustrated in Fig. 6, a business support system 582 formed from a business support server 502 and wireless packet network 521. The business support system 582 is connected to the wireless packet communication unit 232.

The business support terminal device 501, in addition to the master control unit 101 and play list reader 102, image output unit 104 to communication unit 106, initial pointer memory unit 108 to actuator connection unit 116, and hard disk 231 to voice synthesizing unit 236, is provided with a business condition information memory unit 591. The business condition information memory unit 591 stores the business condition information indicating the progress of business supplied from the master control unit 101, and, in accordance with the request from the master control unit 101, supplies the stored business condition information to the master control unit 101. The master control unit 101 stores the business condition information supplied from the business condition information memory unit 591 on the hard disk 231, or makes the communication unit 106 supply this to the business support server 502 via the wireless packet network 521.

Further, the master control unit 101 makes the communication unit 106 supply the business condition information stored on the hard disk 231 to the business support server 502 via the wireless packet network 521.

The business condition information detection unit 581 detects the business condition information, and enables the business support terminal device 501 or business support center 504 to comprehend how the business is being performed via the contents 211 based on the detected business condition information.

The business condition information detection unit 581 is provided with an acceleration sensor 242, sound pressure sensor 243, GPS antenna 244, CCD camera 246, speed sensor 592, package condition sensor 593, and diagnosis sensor 594.

The acceleration sensor 242 detects the operating status of the vehicle 541. The acceleration sensor 242 detects the acceleration of the advancing direction, and detects whether the vehicle 541 is running or parked, whether it is accelerating wastefully, or whether it applied sudden braking.

With the acceleration sensor 242 for detecting the acceleration in the lateral direction, it is possible to comprehend whether the driving condition during cornering is safe. With the vertical direction acceleration sensor 242, it is possible to comprehend the vibration or shock applied to the cargo or vehicle from the state of the road surface.

The sound pressure sensor 243, for example, detects the abnormal state accompanying the large impact noise such as from an accident by detecting such impact noise. Further, the sound pressure sensor 243, for example, detects the unauthorized opening and closing of the closed space; that is, the cabin or luggage compartment by detecting the opening and closing thereof. Further, the sound pressure sensor 243, for example, detects the start or stop of the engine by detecting the engine sound.

The GPS antenna 244 detects the position information indicating the current position. The GPS antenna 244 is able to detect the position information, and the location where the business performed according to the support of the contents 211 can be comprehended thereby. Further, the business support terminal device 501 will enable the provision of support employing the position information within the contents for supporting business. Moreover, the business support terminal device 501 will also be able to output an event based on the position information and control the contents 211.

The CCD camera 246 detects visual information. The CCD camera 246 detects visual information such as the front image, rear image, driver's cabin image, luggage compartment image, cargo image and so on. The business support terminal device 501 records the visual information of the CCD camera 246, and automatically reports to the business support center 504 the visual information as the business condition information pursuant to the control of the contents 211. The visual information reported as the business condition information from the business support terminal device 501 may be used as the material of the contents 211.

The speed sensor 592 detects the speed of the vehicle 541. The speed sensor 592 detects the rotation of the wheel, axle or drive shaft. The business support terminal device 501 is able to seek the speed of the vehicle 541 from the rotation of the wheel.

The business support terminal device 501 may detect the speed of the vehicle 541 by inputting and counting the vehicle speed pulse being detected with the vehicle 541.

The package condition sensor 593 detects the condition of packages on board the vehicle 541. The package condition sensor 593, for example, may be a fluid level sensor for detecting the load capacity of the liquid load, an impact sensor for detecting the impact applied to the luggage compartment, a camera for filming the condition inside the luggage compartment, a temperature sensor for detecting the temperature of the luggage compartment, a sensor provided on the floor of the luggage compartment for detecting the weight of the packages, a supersonic sensor or photoelectric tube provided at the entrance of the luggage compartment for detecting the carrying in and out of the packages, or a humidity sensor for detecting the humidity of the luggage compartment, or a gas sensor for detecting concentration of specific molecules distributed in the luggage compartment.

As a result of providing a package condition sensor 593 as the wireless ID tag reader, the business support terminal device 501 will be able to detect the quantity of packages, removal of the packages, or loading of packages provided with a wireless ID tag. Here, the wireless ID tag has stored therein an ID for specifying the package, and the wireless ID tag transmits the ID for specifying the package to the wireless ID tag reader.

Incidentally, in addition to storing the ID for specifying the package in the wireless ID tag, information relating to the business such as the delivery destination, telephone number of the delivery destination or delivery time may also be stored therein, and the wireless ID tag may transmit, together with the ID for specifying the package, information relating to the business to the wireless ID tag reader.

The diagnosis sensor 594 diagnoses the vehicle 541, car-mounted devices, packages or the user 41 as the passenger, and outputs diagnosis information of the vehicle 541, car-mounted devices, packages or the user 41 as the passenger.

A part of the business condition information described later may also be acquired by using the information from the sensor mounted on the vehicle 541 or flowing in the car-mounted LAN.

The business condition information detection unit 581 may be constituted upon omitting a component that is not required for business among the acceleration sensor 242, sound pressure sensor 243, GPS antenna 244, CCD camera 246, speed sensor 592, package condition sensor 593 and diagnosis sensor 594. The business condition information detection unit 581 may also be constituted upon adding a fuel consumption sensor, shipment load sensor, vehicle information sensor or other sensors.

Further, as the external equipment 93, a barcode reader 595, a printer 596 and a portable telephone 597 are provided.

As the external equipment 93, electrical components such as lights, car-mounted devices such as a radio, lock devices for doors or the vehicle 541, indicators, alarm devices, remote control function for gates and shutters may also be provided.

The business support terminal device 501 has a function of controlling the external equipment 93 based on the reproduction of the contents 211 for supporting business. As a result of controlling the external equipment 93 based on the reproduction of the contents 211 for supporting business, operations of the user 41 can be considerably reduced.

The case of using the barcode reader 595, printer 596 and portable telephone 597 as the external equipment 93 in the present embodiment of this invention is now explained.

The barcode reader 595 reads the barcode printed on business slips such as invoices, labels, products or item list pursuant to the control of the contents 211. As a result of the contents 211 for supporting business guiding the timing of reading by the barcode reader 595, mistakes in timing or forgetting the reading procedure altogether can be prevented.

The printer 596 prints the business designation form, delivery destination map, business bills such as a delivery slip, invoice or receipt pursuant to the control of the contents 211 for supporting business. Since printing will be conducted pursuant to the control of the contents 211, such printing will be conducted at an appropriate timing according to the business condition. It is desirable that the contents 211 for supporting business guide the handling of the printed business bills.

The automatic calling or reception of calls of the portable telephone 597 is controlled according to the reproduction of the contents 211 for supporting business. For example, based on the execution of the functional contents 213, the automatic calling or reception of calls of the portable telephone 597 is controlled. Distribution of the contents 211 and communication related to business may be performed with the data communication function of the portable telephone 597.

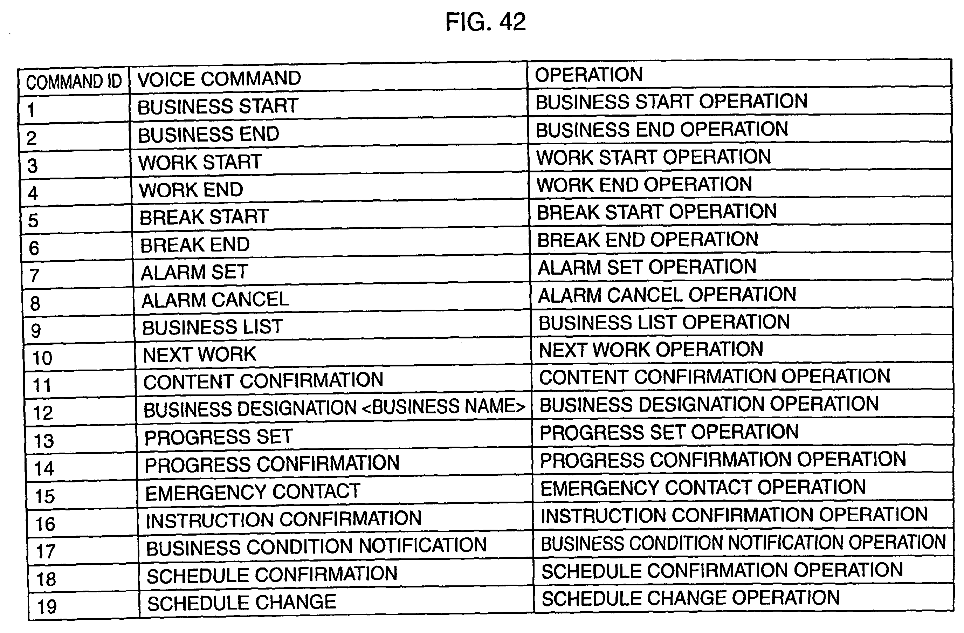

Fig. 42 is a diagram showing an example of the voice command as an event of the business support terminal device 501. For example, voice commands of "BUSINESS START", "BUSINESS END", "WORK START", "WORK END", "BREAK START", "BREAK END", "ALARM SET", "ALARM CANCEL", "BUSINESS LIST", "NEXT WORK", "CONTENT CONFIRMATION", "BUSINESS DESIGNATION <BUSINESS NAME>", "PROGRESS SET", "PROGRESS CONFIRMATION", "EMERGENCY CONTACT", "INSTRUCTION CONFIRMATION", "BUSINESS CONDITION NOTIFICATION", "SCHEDULE CONFIRMATION", and "SCHEDULE CHANGE" are adopted.

The voice command of "BUSINESS START" is a command for designating the start of business. The voice command of "BUSINESS END" is a command for designating the end of business. The voice command of "WORK START" is a command for designating the start of work. The voice command of "WORK END" is a command for designating the end of work. The voice command of "BREAK START" is a command for designating the start of break. The voice command of "BREAK END" is a command for designating the end of break.

The voice command of "ALARM SET" is a command for designating the setting of an alarm. The voice command of "ALARM CANCEL" is a command for designating the canceling the alarm. The voice command of "BUSINESS LIST" is a command for designating the display of the business list. The voice command of "NEXT WORK" is a command for designating the confirmation of the next work. The voice command of "CONTENT CONFIRMATION" is a command for designating the confirmation of the content of business.

The voice command of "BUSINESS DESIGNATION" is a command for designating the business. The voice command of "PROGRESS SET" is a command for designating the setting of the business progress. The voice command of "PROGRESS CONFIRMATION" is a command for designating the confirmation of the business progress. The voice command of "EMERGENCY CONTACT" is a command for designating emergency contact. The voice command of "INSTRUCTION CONFIRMATION" is a command for designating the confirmation of instructions. The voice command of "BUSINESS CONDITION NOTIFICATION" is a command for designating the notification of the business condition.

The voice command of "SCHEDULE CONFIRMATION" is a command for designating the confirmation of schedule. The voice command of "SCHEDULE CHANGE" is a command for designating the change of schedule.

Incidentally, the constitution may be such that a plurality of conditions is set for work, break or alarm. The business designation operation may be conducted by designating the business ID specifying the business.

Further, the voice command may be specified with the command ID containing an event.

The voice command shown in Fig. 42 may also be input by operating the operation buttons 561-1 to 561-4 or a touch panel not shown. For example, when the operation button 561-1 is pressed, the operation input unit 113 designates the start of business to the master control unit 101 by supplying an event containing a command ID of 1 to the master control unit 101. When the operation button 561-2 is pressed, the operation unit 113 designates the end of business to the master control unit 101 by supplying an event containing a command ID of 2 to the master control unit 101.

In the business support system, the master designation data 215 is additionally provided with a business condition comprehension function, business condition detection function, business condition recording function, and automatic business reporting function in addition to the master designation data 215 of the information provision system having the characteristics explained with reference to Fig. 1 to Fig. 36.

With the business condition comprehension function, when the master control unit 101 receives event information relating to the operation of the user 41 output from the operation input unit 113 according to the operation of the user 41, event information output from the business condition information detection unit 581, and event information arising from the external equipment 93, it controls the reproduction of the contents 211 for supporting business based on the master designation data 215 containing the contents 211. Therefore, it will be possible to know which business is being supported based on the contents 211 being reproduced, and the master control unit 101 will be able to comprehend the business condition thereby. The master control unit 101 temporarily stores the comprehended information in the contents reproduction condition memory unit described later constituted on the RAM 12 such that the comprehended information can be used subsequently.

With the business condition detection function, when there is a designation for detecting the business condition in the master designation data 215, the master control unit 101 detects the condition information of the sensor representing the business condition according to such designation, and temporarily stores the comprehended information in the sensor information memory unit described later constituted on the RAM 12 such that the comprehended information can be used subsequently.

With the business condition recording function, when there is a designation for storing the business condition in the master designation data 215, the master control unit 101 stores the business condition information temporarily stored on the RAM 12 in the folder 201 designated to record the business condition in the contents memory unit 18 according to such designation.

With the automatic business reporting function, the business support terminal device 501 reports the business condition information by uploading the stored business information to the business support server 502. The business condition information stored in the business support server 502 is accessed from the business terminal devices 507-1 or 507-2 via the business terminal reception network 510, and used for business management.

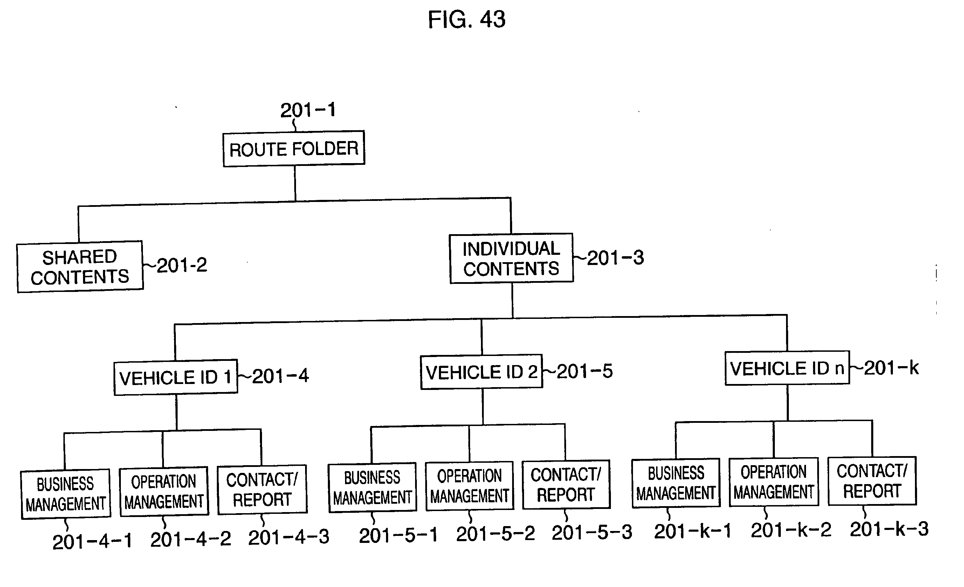

Fig. 43 is a diagram showing the constitution of a folder 201 in the business support system. As child of the route folder 201-1, the shared contents folder 201-2 and individual contents folder 201-2 are disposed.

As the child of the individual contents folder 201-2, folder 201-4, folder 201-5, ···folder 201-k corresponding to the ID of the respective vehicles 1 to n are disposed. As the child of the folder 201-4, the business management folder 201-4-1, operation management folder 201-4-2 and contact/report folder 201-4-3 are disposed. As the child of the folder 201-5, the business management folder 201-5-1, operation management folder 201-5-2 and contact/report folder 201-5-3 are disposed.

Similarly, as the child of the folder 201-k, the business management folder 201-k-1, operation management folder 201-k-2 and contact/report folder 201-k-3 are disposed.

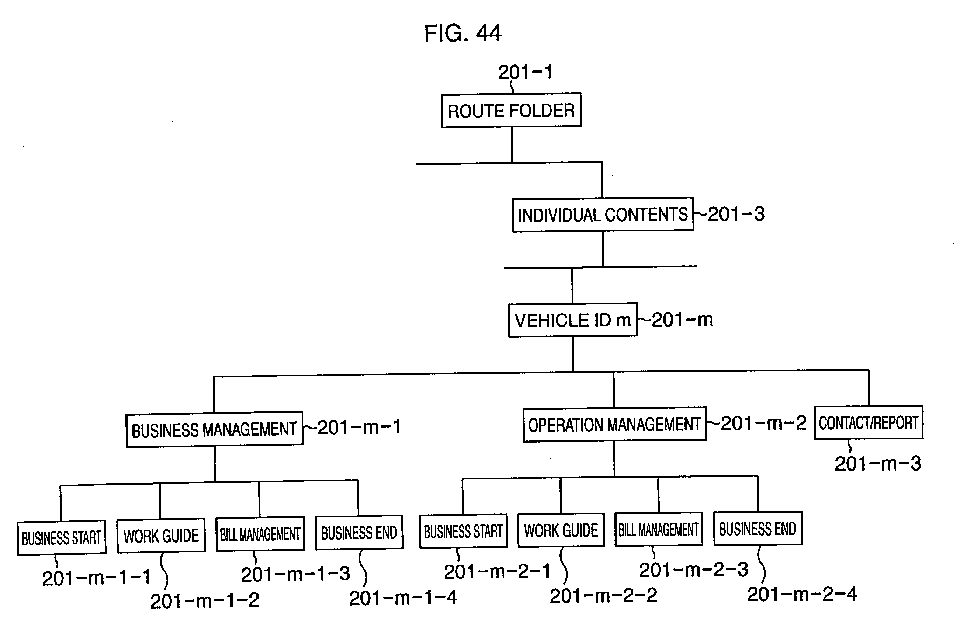

Fig 44 is a diagram for explaining the folder 201 disposed as the descendant of the folder 201-m corresponding to the vehicle ID, which is m, in detail. As the childe of the folder 201-m, the business management folder 201-m-1, operation management folder 201-m-2 and contact/report folder 201-m-3 are disposed.

Further, as the child of the business management folder 201-m-1, the business start folder 201-m-1-1, work guide folder 201-m-1-2, bill management folder 201-m-1-3 and business end folder 201-m-1-4 are disposed.

As the child of the operation management folder 201-m-2, the business start folder 201-m-2-1, work guide folder 201-m-2-2, bill management folder 201-m-2-3 and business end folder 201-m-2-4 are disposed.

In the business support system pertaining to the present invention, for example, the contents 211 for conveying the business designation, contents 211 for comprehending the business condition, contents 211 for recording the business condition, contents 211 for automatically reporting the business, contents 211 for confirming the progress of business, contents 211 for designating phone calls, or contents 211 for calling someone are created and used.

In the following explanation, in order to clarify the role and function of the contents 211, although the respective contents 211 are constituted to realize a single function, one of the contents 211 may used to employ a plurality of functions.

The contents 211 for conveying the business designation are the contents 211 for explaining the description of the business designation distributed from the business support server 502, and, when reproduction is activated, the description of the business designation will be sequentially reproduced. Thus, the user 41 will be able to confirm the description of the business designation without having to operate the business support terminal device 501.

The contents 211 for conveying the business designation, for example, may be business designation contents 211 for conveying the business designation at the start of business, contents 211 for conveying additional designations, or business designation contents 211 for conveying the business designation at the end of business.

Desirably, the contents 211 for conveying the business designation, for example, are automatically reproduced with the following procedures.

When the user 41 is designated to start business with the "Business Start" command, the contents for conveying the business designation are activated from among the business start guide, and conveys the description of the business designation at such time. When additional designation is necessary, the business support center 504 issues a network event, and makes the business support terminal device 501 download the new designation contents 211.

Incidentally, the designation contents 211 may be created for each business.

When the contents 211 for comprehending the business condition are being reproduced, if the comprehension of the business condition is described in the master designation data 215, the master control unit 101 comprehends the business condition according to the reproduction of the contents 211.

Since the business condition is detected with the business condition information detection unit 581, as a result of describing the designation of the sensor of the business condition information detection unit 581 in the master designation data 215, the master control unit 101 is able to comprehend the desired business condition.

By the user 41 performing a business condition notification operation with the voice command of "Business Condition Notification", the business support terminal device 501 is able to convey the business condition to the business support center 504. Even for business conditions that cannot be automatically detected, such as changes in the person's decision, it is desirable to create the contents 211 that may be comprehended as much as possible with the "Business Condition Notification".

When the contents 211 storing the business condition is being reproduced, if the storage of the business condition is described in the master designation data 215, the master control unit 101 comprehends the business condition according to the reproduction of the contents 211, and stores the business condition in the contents memory unit 18 based on the description in the master designation data 215.

When the contents 211 for automatically reporting business is being reproduced, if reporting is described in the master designation data 215, the master control unit 101 transmits to the business support server 502 the business condition stored with the contents 211 storing the business condition. The business condition report (business condition information) received from the business support server 502 transmitted from the business support terminal device 501 is stored in the business support server 502.

The business condition report (business condition information) stored in the business support server 502 is made to be accessible from the business terminal devices 507-1 or 507-2.

As a result of employing the foregoing constitution, the operators 508-1 and 508-2 managing the business will be able to conduct business management upon using the business terminal devices 507-1 or 507-2, and the business condition report (business condition information) will be automatically collected in the business support server 502 business support terminal device 501 without the user 41 having to perform hardly any operations, and this may be used for business management.

The business progress confirmation contents 211 are retrieved with the voice command of "Progress Confirmation". Since the description of the progress comprehended with the contents 211 will be reproduced, the user 41 will be able to confirm the business progress by merely speaking the voice command of "Progress Confirmation", without having to engage in complex operations.

As a result of describing the designation of making phone calls in the master designation data 215 corresponding to the phone call designation contents 211, it will be possible to make a designation of making a phone call when the contents 211 are reproduced.

When there is a designation to make a phone call, the master control unit 101 sends a control signal to the portable phone 597 connected via the actuator connection unit 116, and notifies the portable telephone 597 of the calling number (phone number). Thereby, the portable telephone 597 will make a call to the designated phone number. Since the call will automatically be made from the contents 211, the user 41 will not have to perform any calling operations of the portable telephone 597.

Incidentally, communication may employ a scheme of an IP phone via the wireless packet network 521.

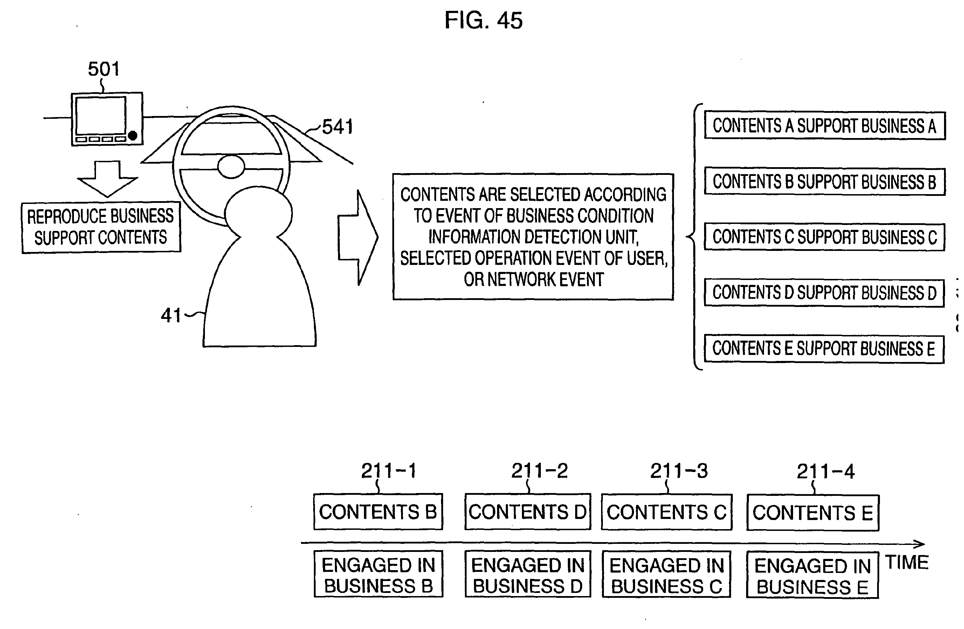

Fig. 45 is a diagram for explaining the processing of selecting the contents 211 for supporting the business. The business support terminal device 501 selects the contents 211 to be output in correspondence with the event generated with the sensor connection unit 115 based on the detection results of the acceleration sensor 242 to CCD camera 246 and speed sensor 592 to diagnosis sensor 594 of the business condition information detection unit 581; the event (voice command) generated with the voice input unit 112 based on the signal from the microphone 240, the event (selection operation event) created with the operation input unit 113 based on the signal representing the operation of the button 561, or the network event supplied from the business support server 502 (business support center 504).

As described above, the contents selected with the business support terminal device 501 are contents for supporting the implementation of business of the user 41. For example, the contents 211 A are contents for supporting business A. The contents 211-1 B are contents for supporting business B. The contents 211-3 C are contents for supporting business C. The contents 211-2 D are contents for supporting business D. The contents 211-4 E are contents for supporting business E.

The contents 211-1 B are output during the performance of business B by the user 41. The contents 211-2 D are output during the performance of business D by the user 41. The contents 211-3 C are output during the performance of business C by the user 41. The contents 211-4 E are output during the performance of business E by the user 41.

As described above, the business support terminal device 501 comprehends the business condition based on the reproduction of the contents 211. Since the master control unit 101 is able to comprehend the entire reproduction condition of the contents 211, it is able to comprehend the business condition.

For example, by the business support terminal device 501 controlling the business condition information detection unit 581 from the contents 211 for supporting business, it is able to detect the business condition according to the use of the contents 211.

For example, as a result of the business support terminal device 501 using the voice command of "Business Start" command for retrieving guide contents upon starting business, the user 41 will be able to comprehend the start of business.

The business support terminal device 501, as a result of the "Business List" command being used, is able to comprehend that the user 41 confirmed the list of business.

The business support terminal device 501, when the "Content Confirmation" command is used while the business list is being confirmed with the "Business List", is able to comprehend that the user 41 confirmed the content relating to such business.

The business support terminal device 501 is able to comprehend the work start time, work end time or working hours with the "Work Start" command or the "Work End" command. The business support terminal device 501 is able to comprehend the break start time, break end time or break hours with the "Break Start" command or the "Break End" command.

The business support terminal device 501 is able to comprehend the alarm condition of the driver's seat or luggage compartment with the "Alarm Set" command or "Alarm Cancel" command, and may be used as a sensor for detecting the abnormal condition of the business condition information detection unit 581 after the alarm is set.

The business support terminal device 501 is able to comprehend how the barcode was read under what kind of business condition based on the barcode reader 595 according to the control of the contents 211. For example, the business support terminal device 501 will be able to comprehend, in a state of the alarm being cancelled and the work designation guide contents are being reproduced at a location specified with customer ID11294857, that the slip of slip ID223843736 attached to the package was read according to the work designation guide contents, the delivery slip was printed and delivered together with the package, but was taken back since the addressee was unavailable.

For example, if it is necessary to set an alarm condition upon leaving the vehicle 541, after the operation of the barcode reader 595 is finished, the business support terminal device 501 can prevent the user 41 from forgetting to set the alarm by providing a guide such as, "Please set the alarm when leaving the vehicle."

If a command is used in the foregoing example, needless to say, it will be possible to comprehend that the user has not performed an operation such as confirming the description of the business list, for instance.

In the foregoing example, as a result of using the position information detected with the GPS antenna 244 the business support terminal device 501 will be able to comprehend the place where the comprehended business condition information occurred.

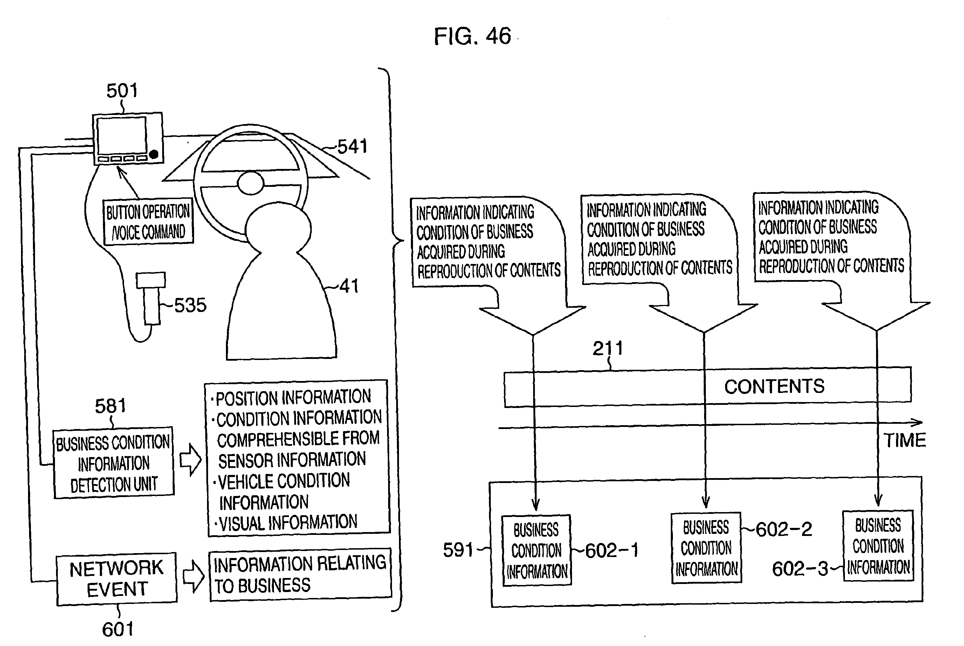

Fig. 46 is a diagram for explaining the processing of comprehending the business condition in correspondence with the contents 211 being reproduced. Detection results of the acceleration sensor 242 to CCD camera 246 and speed sensor 592 to diagnosis sensor 594 of the business condition information detection unit 581 are, for example, the position information showing the position of the vehicle, vehicle condition information indicating the condition of the vehicle 541, or visual information. Further, the network event 601 supplied from the business support server 502 (business support center 504) is information relating to the business; for instance, information indicating the client's request.

Further, information obtained from the microphone 240 or button 561 of the human interface unit 91, or information read with the barcode reader 595 as the external equipment 93 is information showing the business condition.

The business support terminal device 501 stores the information acquired with the acceleration sensor 242 to CCD camera 246 and speed sensor 592 to diagnosis sensor 594 of the business condition information detection unit 581, the business condition information 602 formed from the likes of a network event 601 in the business condition information memory unit 591.

In other words, the business support terminal device 501 ordinally stores in the business condition information memory unit 591 the business condition information 602-1, 602-2 and 602-3 acquired during the reproduction of the contents 211 output during the implementation of the business subject to support.

When the business condition information 602-1, 602-2 and 602-3 do not have to be differentiated separately, they will be simply referred to as a business condition information 602 below.

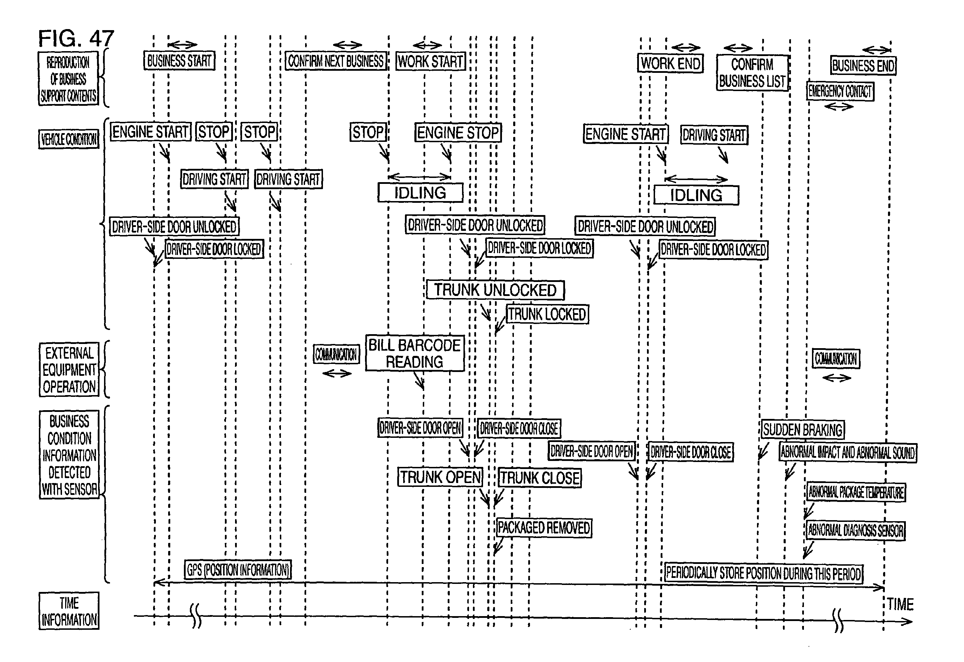

Fig. 47 is a diagram for explaining a detailed example of the business condition in a time series in the business of delivering packages.

When starting business, the user 41 unlocks the door lock on the driver's seat side of the vehicle 541, and, after the user 41 gets on the vehicle 541, the door on the driver's seat side of the vehicle 541 is locked. And, the user 41 starts the engine of the vehicle 541.

When the door lock on the driver's seat side of the vehicle 541 is unlocked, the business condition information detection unit 581 (not shown, network communication function such as CAN (Controller Area Network)) mounted on the vehicle 541 detects the unlocking of the door lock on the driver's seat side, and the sensor connection unit 115 creates an event regarding the unlocking of the door lock on the driver's seat side. The business support terminal device 501 mounted on the vehicle 541 acquires the event regarding the unlocking of the door lock on the driver's seat side, and, upon acquiring the event, starts acquiring the position information indicating the position of the vehicle 541 supplied from the GPS antenna 244 via the sensor connection unit 115. The business support terminal device 501 stores the position information indicating the position of the vehicle 541 as the business condition information 602. Processing for acquiring the position information indicating the position of the vehicle 541 is continued until the contents 211 for supporting the end of business are performed.

The business support terminal device 501, separate from the event corresponding to the time, acquires the current time information indicating the current time supplied from the calendar timer 114. The business support terminal device 501 stores the current time information as the business condition information 602. Processing of acquiring the current time information is ongoingly implemented when the business support terminal device 501 is being operated. Incidentally, processing of acquiring the current time information may be started or ended based on a prescribed event.

When the user 41 inputs the voice command of "Business Start", which is a command for designating the start of business, in the business support terminal device 501, the contents 211 for supporting the start of business are reproduced.

Incidentally, when the engine of the vehicle 541 is started, business condition information detection unit 581 mounted on the vehicle 541 detects the start of the engine, the operation input unit 113 creates an event regarding the start of the engine, and the business support terminal device 501 mounted on the vehicle 541 acquires the event regarding the start of the engine, and, upon acquiring the event, the reproduction of the contents 211 for supporting the start of business may be commenced.

Pursuant to the traveling of the vehicle 541, when parking the vehicle 541 or starting the vehicle 541, the sensor connection unit 115 generates an event regarding the parking of the vehicle, or the event regarding the starting of the vehicle.

And, prior to implementing an individual business (work) (herein, delivery of 1 package), the user 41 inputs to the business support terminal device 501 the voice command of "Next Business" as the command for designating the confirmation of the next business, and the business support terminal device 501 which acquired the voice command of "Next Business" reproduces the contents 211 for supporting the confirmation of the next business. Here, as necessary, the user 41 may speak with the operator 508 of the business support center 504 via the portable telephone 597.

Upon arriving at the delivery destination of the package, the vehicle 541 is parked. The engine of the vehicle 541 will enter an idling state. When the user 41 inputs to the business support terminal device 501 the voice command of "Work Start" as the command for designating the start of work, and reproduces the contents 211 for supporting work. The business support terminal device 501 designates to the user 41 to read the slip barcode of the delivery package based on the contents for supporting work.

When the user 41 uses the barcode reader 595 to read the slip barcode of the delivery package, the business support terminal device 501 acquires information described in the slip barcode of the delivery package via the actuator connection unit 116.

The user 41, in order to deliver the package, stops the engine of the vehicle 541, unlocks the door lock on the driver's seat side, opens the door on the driver's seat side, gets off the vehicle 541, closes the door on the driver's seat side, and locks the door on the driver's seat side. And, the user 41 unlocks the door lock of the luggage compartment, opens the door of the luggage compartment, and removes the package to be delivered from the luggage compartment. The user 41 closes the door of the luggage compartment, and locks the door of the luggage compartment. Thereafter, the user 41 delivers the package removed from the luggage compartment to the delivery address.

Pursuant to the execution of the series of the foregoing operations, when the door on the driver's seat side of the vehicle 541 is opened, the business condition information detection unit 581 mounted on the vehicle 541 detects that the door on the driver's seat side has been opened, the sensor connection unit 115 creates an event regarding the opening of the door on the driver's seat side, and the business condition information 602 representing the opening of the door on the driver's seat side is generated. When the door on the driver's seat side of the vehicle 541 is closed, the business condition information detection unit 581 detects the closing of the door on the driver's seat side, and the sensor connection unit 115 creates an event of the closing of the door on the driver's seat side, and the business condition information 602 showing the closing of the door on the driver's seat side is generated.

Similarly, when the door of the luggage compartment of the vehicle 541 is opened, the business condition information detection unit 581 mounted on the vehicle 541 detects that the door of the luggage compartment has been opened, the sensor connection unit 115 creates an event regarding the opening of the door of the luggage compartment, and the business condition information 602 representing the opening of the door of the luggage compartment is generated. When the package to be delivered is removed from the luggage compartment, the package condition sensor 593 of the business condition information detection unit 581 detects the removal of the package from the luggage compartment, and the sensor connection unit 115 generates an event regarding the removal of the package, and the business condition information 602 representing the removal of the package is generated.

When the door of the luggage compartment of the vehicle 541 is closed, the business condition information detection unit 581 detects the closing of the door of the luggage compartment, and the sensor connection unit 115 creates an event of the closing of the door of the luggage compartment, and the business condition information 602 showing the closing of the door of the luggage compartment is generated.

After the delivery of the package is complete, the user 41 unlocks the door on the driver's seat side, opens the door on the driver's seat side, gets on the vehicle 541, closes the door on the driver's seat side, and locks the door on the driver's seat side. And, the user 41 starts the engine of the vehicle 541. The engine of the vehicle 541 will enter an idling state.

Here as well, when the door on the driver's seat side of the vehicle 541 is opened, the business condition information detection unit 581 detects the opening of the door on the driver's seat side, and the sensor connection unit 115 generates an event regarding the opening of the door on the driver's seat side, and the business condition information 602 representing the opening of the door on the driver's seat side is generated. When the door on the driver's seat side vehicle 541 is closed, the business condition information detection unit 581 detects the closing of the door on the driver's seat side, the sensor connection unit 115 generates an event regarding the closing of the door on the driver's seat side, and the business condition information 602 representing the closing of the door on the driver's seat side is generated.

When the user 41 inputs to the business support terminal device 501 the voice command of "Work End" as the command for designating the end of work, the contents 211 for supporting the end of work are reproduced. The business support terminal device 501 will be able to know that one individual business (work) (here, the delivery of 1 package) based on the reproduction of the contents 211 for supporting the end of work has finished.

When the user 41 inputs to the business support terminal device 501 the voice command of "Business List" as the command for designating the display of the business list, the business list is displayed, and the contents 211 for supporting the business are reproduced.

For example, when a sudden brake is applied to the vehicle 541, and an abnormal shock and abnormal sound are generated, the temperature in the luggage compartment becomes abnormal, and an abnormality arises in the vehicle 541, the business condition information 602 representing such conditions will also be created. In other words, when a sudden brake is applied, the acceleration sensor 242 of the business condition information detection unit 581 detects that a sudden brake has been applied, the sensor connection unit 115 creates an event regarding sudden braking, and business condition information 602 representing sudden braking is generated. When an abnormal shock and abnormal sound are generated, the acceleration sensor 242 and sound pressure sensor 243 of the business condition information detection unit 581 detect the generation of the abnormal shock and abnormal sound, the sensor connection unit 115 creates an event of the abnormal shock and abnormal sound, and the business condition information 602 representing the abnormal shock and abnormal sound is generated.

When the temperature of the luggage compartment becomes abnormal, the package condition sensor 593 of the business condition information detection unit 581 detects the generation of an abnormal temperature in the luggage compartment, the sensor connection unit 115 creates a luggage compartment abnormal temperature event, and business condition information 602 representing the luggage compartment abnormal temperature is generated. Further, when an abnormality arises in the vehicle 541, the diagnosis sensor 594 of the business condition information detection unit 581 detects the generation of the abnormality in the vehicle 541, the sensor connection unit 115 creates an event of the diagnosis sensor abnormality, and the business condition information 602 of the diagnosis sensor abnormality is generated.

When the user 41 inputs to the business support terminal device 501 the voice command of "Emergency Contact" as the command for designating the emergency contact when an emergency situation occurs. When the voice command of "Emergency Contact" is input, the business support terminal device 501 connects the portable telephone 597 of the external equipment 93 to the business support center 504. Thereby, the user 41 will be able to promptly speak with the business support center 504 with the portable telephone 597.

When the user 41 inputs to the business support terminal device 501 the voice command of "Business End" as the command for ending the business, the contents 211 for supporting the end of business are reproduced.

As described above, the business support terminal device 501 is able to support business based on the reproduction of the contents 211, and know the business condition based on the contents 211 being reproduced. Further, the business support terminal device 501 creates the business condition information 602 representing the business condition, an acquires the generated business condition information 602. The business support terminal device 501 stores or records the acquired business condition information 602, and transmits this to the business support server 502 as described later.

Thereby, in the business support center 504, since the business condition information 602 representing the business condition is transmitted from the respective business support terminal devices 501 to the business condition information 602, it will be possible to know the business condition of the user 41 using the respective business support terminal devices 501.

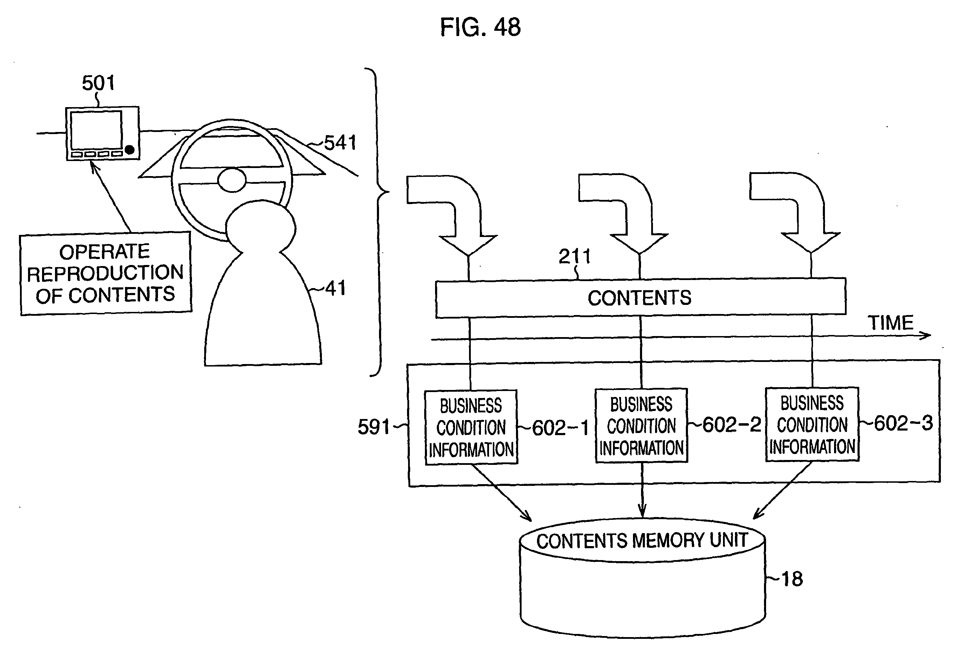

In other words, as described above, when the contents 211 for supporting business are being reproduced, the business support terminal device 501 sequentially acquires the business condition information 602-1 to 602-3 representing the business condition, and, as shown in Fig. 48, stores the acquired business condition information 602-1 to 602-3 in the contents memory unit 18.

As described above, by the master control unit 101 storing the business condition information 602 comprehended from the reproduction state of the contents 211, it will be possible to comprehend the business condition information 602 from the reproduction condition of the contents according to the operation of the user 41 or events.

The master control unit 101 creates different folders 201 distinguished pursuant to the reproduction start time in the folder 201 that is the same as the respective contents 211, and stores the operation of the master control unit being reproduced based on the master designation data 215.

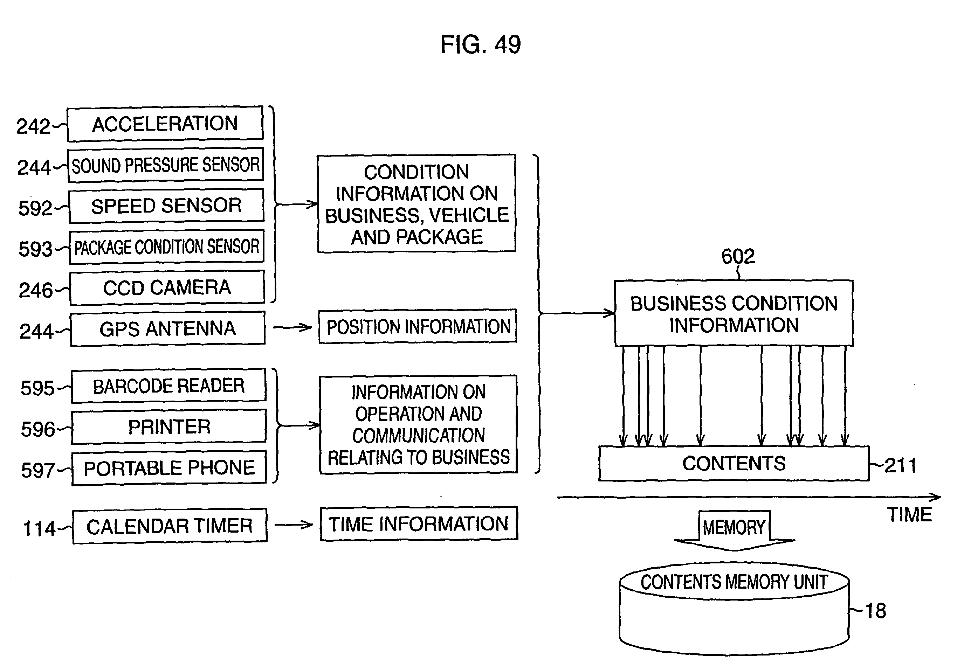

Fig. 49 is a diagram for explaining an example of the business condition information 602. For example, the business condition information 602 relating to business, the vehicle 541 or packages is acquired with the acceleration sensor 242, sound pressure sensor 243, speed sensor 592, package condition sensor 593, or CCD camera 246 of the business condition information detection unit 581.

The business condition information 602 as the position information showing the position of the vehicle 541 is acquired with the GPS antenna 244 of the business condition information detection unit 581.

The business condition information 602 as the operation relating to business or communication information is acquired with the barcode reader 595, printer 596 or portable telephone 597 as the external equipment 93 of the business condition information 602. Further, the business condition information 602 as the time information indicating the current time is acquired with the calendar timer 114.

The business condition information 602 relating to business, the vehicle 541 or packages acquired with the acceleration sensor 242, sound pressure sensor 243, speed sensor 592, package condition sensor 593, or CCD camera 246 of the business condition information detection unit 581; the business condition information 602 as the position information showing the position of the vehicle 541 acquired with the GPS antenna 244 of the business condition information detection unit 581; the business condition information 602 as the operation relating to business or communication information is acquired with the barcode reader 595, printer 596 or portable telephone 597 as the external equipment 93 of the business condition information 602; and the business condition information 602 as the time information indicating the current time is acquired with the calendar timer 114 all change in a time series while the contents 211 are being reproduced.

As a result of acquiring the business condition information 602 that changes in a time series while the contents 211 are being reproduced, it will be possible to know when, where and how the business is being supported, or when, where and what kind of condition it is in.

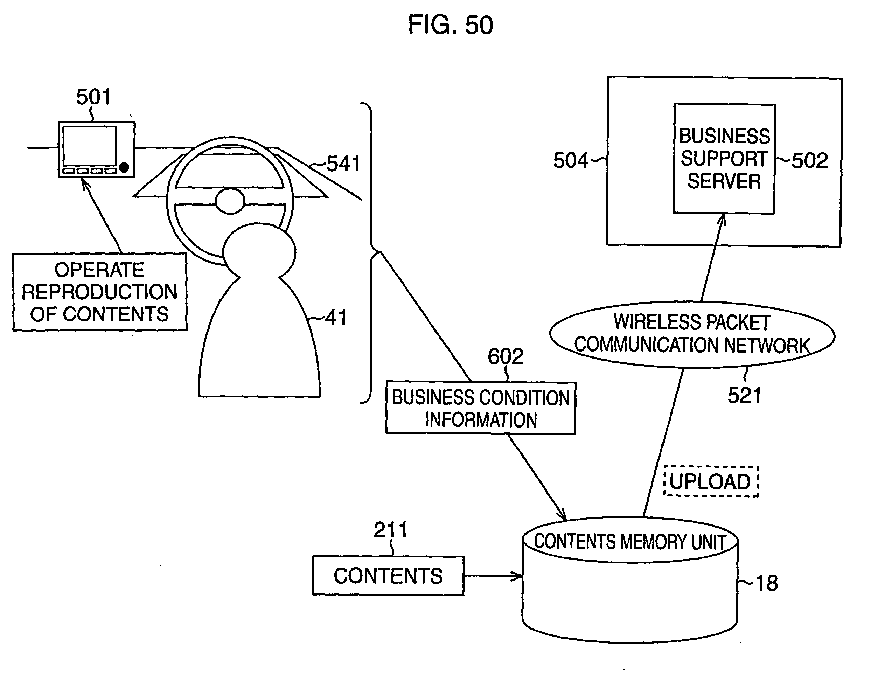

As shown in Fig. 50, the business condition information 602 that changes in a time series while the contents 211 stored in the contents memory unit 18 are being reproduced is uploaded to the business support server 502 of the business support center 504 via the wireless packet communication network 521.

In other words, in correspondence with the event generated with the sensor connection unit 115 based on the detection results of the acceleration sensor 242 to CCD camera 246 and speed sensor 592 to diagnosis sensor 594 of the business condition information detection unit 581; the event (voice command) generated with the voice input unit 112 based on the signal of the microphone 240; the event (selection operation event) generated with the operation input unit 113 based on the signal representing the operation of the button 561, or the network event supplied from the business support server 502 (business support center 504), the business condition information 602 is acquired based on the description in the master control data 215 corresponding to the contents 211 being reproduced, and the acquired business condition information 602 is stored in the contents memory unit 18.

When an event described in the master control data 215 is input based on the description of the master control data 215, the master control unit 101 transmits the business condition information 602 stored in the contents memory unit 18 to business support server 502 of the business support center 504 via the wireless packet communication network 521.

Thereby, in the business support center 504, based on the business condition information 602 uploaded to the business support server 502, it will be possible to know when, where and how the business is being supported, or when, where and what kind of condition it is in.

As described above, the business support terminal device 501 has an automatic reporting function according to the event input to the contents 211.

As an event for activating the automatic reporting function, for instance, an operation event from the user 41, a report designation report from the business support center 504, an event relating to the business condition detected by the business condition information detection unit 581, and event from the actuator connection unit 116 and so on may be used.

According to the "Business Start" command as an operation event from the user 41, the contents as the business start guide are reproduced, and the business designation contents 211 or the contents 211 for conveying messages are reproduced.

According to the "Business End" command, the contents 211 as the business end guide are reproduced, and reporting is provided automatically based on the contents 211 as the business end guide.

The business support terminal device 501 is able to make emergency calls by implementing the contents 211 for emergency contact. In other words, it is possible to automate most of the emergency contact operations via the contents for emergency contact.

When the "Emergency Contact" command is input, the emergency contact contents that have been distributed and downloaded in advance are reproduced, and the guide for emergency contact is provided. Since the contents 211 for selecting the type of emergency contact will be reproduced, upon responding thereto, contents 211 of the individual emergency contacts corresponding to the respective types will be activated.

The automatic reporting function may be operated with the reporting designation event from the business support center 504. When the business support center 504 issues a network event as the reporting designation event, the business support terminal device 501 acquiring such event will activate the contents 211 corresponding thereto, and, by making the description of the activated contents 211 the reporting designation contents, the business management terminal device 523 of the business support center 504 will be able to designate a report of the designated business to a specific business support terminal device 501.

The automatic reporting function can be operated with the event relating to the business condition detected with the business condition information detection unit 581.

When the business condition information detection unit 581 detects some kind of business condition, a corresponding event is generated. When a business condition event is generated, the business condition event reaches the master control unit 101 via the event processing unit 111, and the master control unit 101 performs the corresponding operation based on the master designation data 215.

The automatic reporting function can be operated with the event from the actuator connection unit 116.

When the actuator connection unit 116 is operated based on the use of the external equipment 93, an event is generated from the actuator connection unit 166, and the event information is conveyed to the master control unit 101.

For example, when the barcode reader 595 is used to read the barcode of the slip, or the printer 596 is used to print the instructions, or the portable telephone 597 is used to make or receive calls, and event will be generated based on the operation of the actuator.

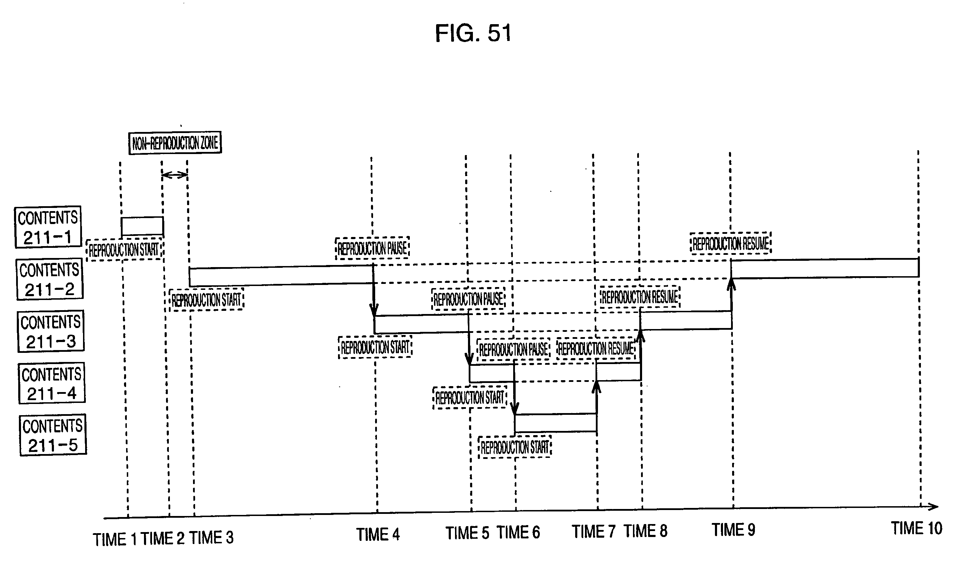

Fig. 51 is a diagram for explaining the reproduction of contents 211 in the business support terminal device 501. For example, in the support of business at the start of business, the contents 211-1 supporting the start of business are reproduced from time 1 in which the voice command of "Business Start", and the reproduction is ended after designating the work contents necessary at the start of business (time 2). In other words, the business support terminal device 501 does not reproduce the contents, and waits for the input of the next command, from time 2 until the preparation of business is complete.

At time 3, when the voice command of "Work Start" or the like is input (time 3), the business support terminal device 501 resumes the reproduction of the next contents 211-2.

The business support terminal device 501 is able to reproduce other contents 211 when one of the contents 211 is being reproduced.

For example, when the business support terminal device 501 is reproducing the contents 211-2, if a command or event requesting the reproduction of other contents such as contents 211-3 is input at time 4, it discontinues the reproduction of the contents 211-2 at time 4, and starts the reproduction of the contents 211-3.

When the master control unit 101 designates the output of the folder 201 of the contents 211-3, the pointer information as the value of the current pointer 109 representing the contents 211-2 is pushed to the pointer stack 110, and data specifying the folder 201 storing the contents 211-2 is pushed to the folder stack 263.

Further, when the business support terminal device 501 is reproducing the contents 211-3, if a command or event requesting the reproduction of other contents such as contents 211-4 is input at time 5, it discontinues the reproduction of the contents 211-3 at time 5, and starts the reproduction of the contents 211-4.

When the master control unit 101 designates the output of the folder 201 of the contents 211-4, the pointer information as the value of the current pointer 109 representing the contents 211-3 is pushed to the pointer stack 110, and data specifying the folder 201 storing the contents 211-3 is pushed to the folder stack 263.

Further, when the business support terminal device 501 is reproducing the contents 211-4, if a command or event requesting the reproduction of other contents such as contents 211-5 is input at time 6, it discontinues the reproduction of the contents 211-4 at time 6, and starts the reproduction of the contents 211-5.

When the master control unit 101 designates the output of the folder 201 of the contents 211-5, the pointer information as the value of the current pointer 109 representing the contents 211-4 is pushed to the pointer stack 110, and data specifying the folder 201 storing the contents 211-4 is pushed to the folder stack 263.

When the reproduction of the contents 211-5 is ended at time 7, the business support terminal device 501 resumes the reproduction of the contents 211-4. In other words, pointer information indicating the contents 211-4 is popped from the pointer stack 110, and data specifying the folder 201 storing the contents 211-4 is popped from the folder stack 263. The business support terminal device 501 resumes the reproduction of the contents 211-4 based on the pointer information indicating the contents 211-4 popped from the pointer stack 110, and the data specifying the folder 201 storing the contents 211-4 popped from the folder stack 263.

Similarly, when the reproduction of the contents 211-4 is ended at time 8 based on the information stored in the pointer stack 110 and folder stack 263, the business support terminal device 501 resumes the reproduction of the contents 211-3.

And, when the reproduction of the contents 211-3 is ended at time 9 based on the information stored in the pointer stack 110 and folder stack 263, the business support terminal device 501 resumes the reproduction of the contents 211-2.

As described above, since the business support terminal device 501 is able perform multiple activation of the contents 211 according to the business progress of the user 41, it will be possible to provide the user 41 support according to the change of conditions based on the reproduction of the contents 211.

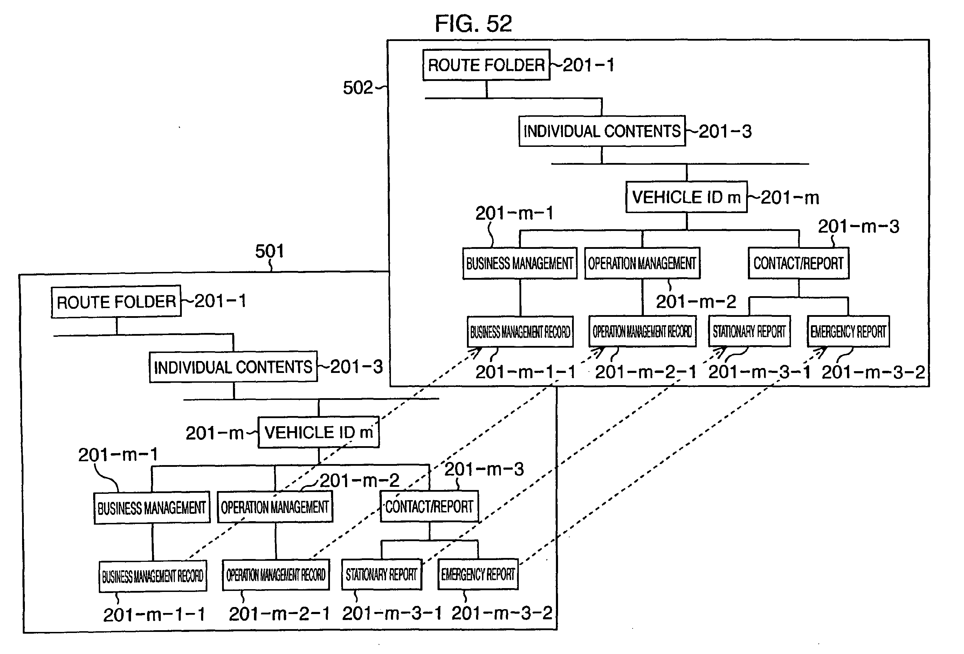

Fig. 52 is a diagram for explaining the upload of the business condition information 602 from the business support terminal device 501 to the business support server 502. As shown in Fig. 52, in the business support terminal device 501, the business condition information 602 stored in the folder 201-m-1-1 of the business management record as a child of the business management folder 201-m-1 is uploaded to and stored in the folder 201-m-1-1 of the business management record as the child of the business management folder 201-m-1 in the business support server 502.

In the business support terminal device 501, the business condition information 602 stored in the folder 201-m-2-1 of the operation management record as a child of the operation management folder 201-m-2 is uploaded to and stored in the folder 201-m-2-1 of the operation management record as the child of the operation management folder 201-m-2 in the business support server 502.

In the business support terminal device 501, the business condition information 602 stored in the stationary report folder 201-m-3-1 as a child of the contact/report folder 201-m-3 is uploaded to and stored in the stationary report folder 201-m-3-1 as the child of the contact/report folder 201-m-3 in the business support server 502. In the business support terminal device 501, the business condition information 602 stored in the emergency report folder 201-m-3-2 as a child of the contact/report folder 201-m-3 is uploaded to and stored in the emergency report folder 201-m-3-2 as the child of the contact/report folder 201-m-3 in the business support server 502.

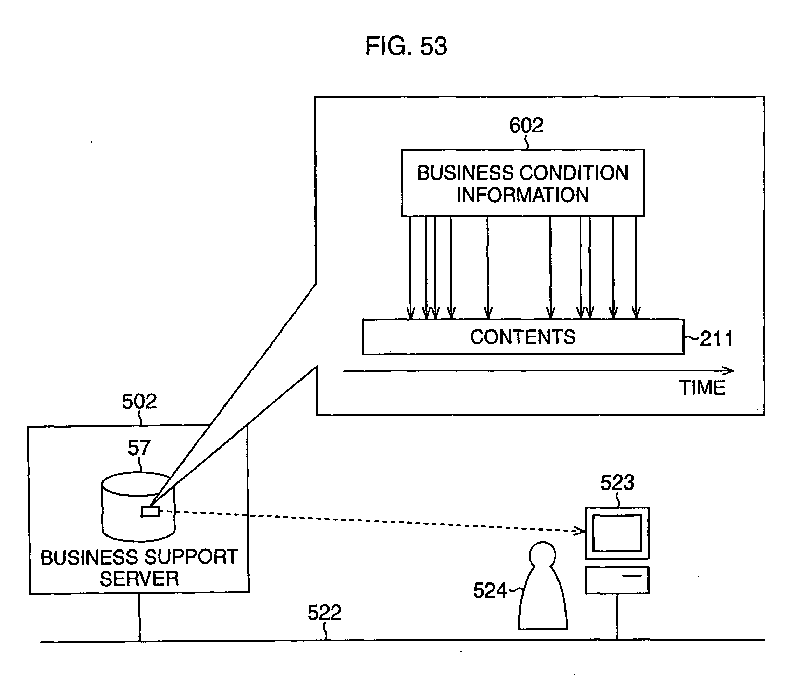

As shown in Fig. 53, the business condition information 602 stored in the contents memory unit 57 of the business support server 502 is read out by the business management terminal device 523 via the LAN 522. Based on the business condition information 602 is read out by the business management terminal device 523, the operation management operator 524 will be able to know when, where and how the business is being supported, or when, where and what kind of condition it is in.

The business condition information 602, as described above, is not only information input by the operation of the user 41, it is also information acquired by the business support terminal device 501 during the reproduction of the contents 211 for supporting business of the user with the business support terminal device 501.

Therefore, without having to increase the burden of the user 41, the operation management operator 524 will be able to manage business by using the business condition information 602, which extremely detailed information regarding the individual business.

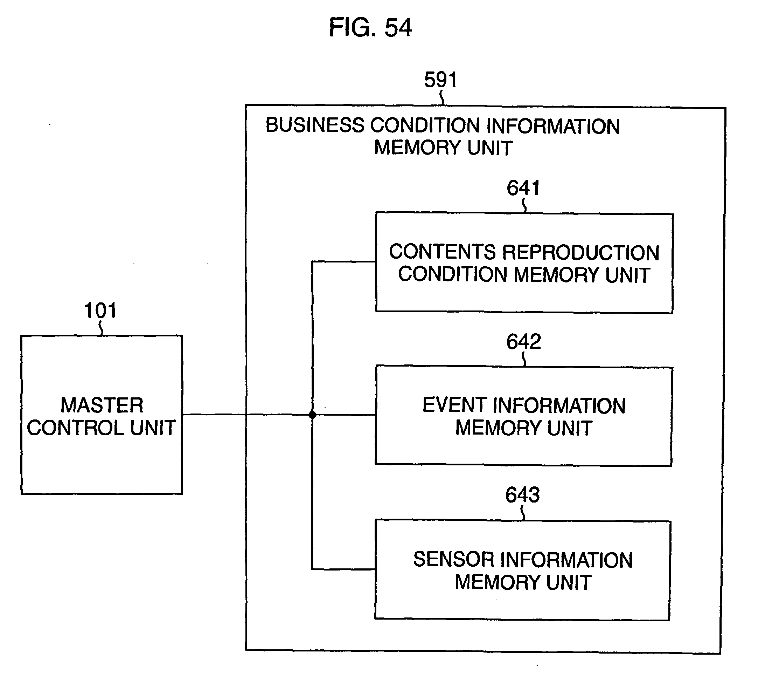

Next, the business condition information 602 is explained in detail with reference to Fig. 54 to Fig. 57. As shown in Fig. 54, the business condition information memory unit 591 is provided with a contents reproduction condition memory unit 641, and event information memory unit 642 and a sensor information memory unit 643.

When the master control unit 101 acquires the contents reproduction condition information indicating the reproduction condition of the contents 211 among the business condition information 602, it stores the contents reproduction condition information in the contents reproduction condition memory unit 641. When the master control unit 101 acquires event information indicating the generated event among the business condition information 602, it stores the event information in the event information memory unit 642. When the master control unit 101 acquires sensor information acquired with the respective sensors of the business condition information detection unit 581 among the business condition information 602, it stores the sensor information in the sensor information memory unit 643.

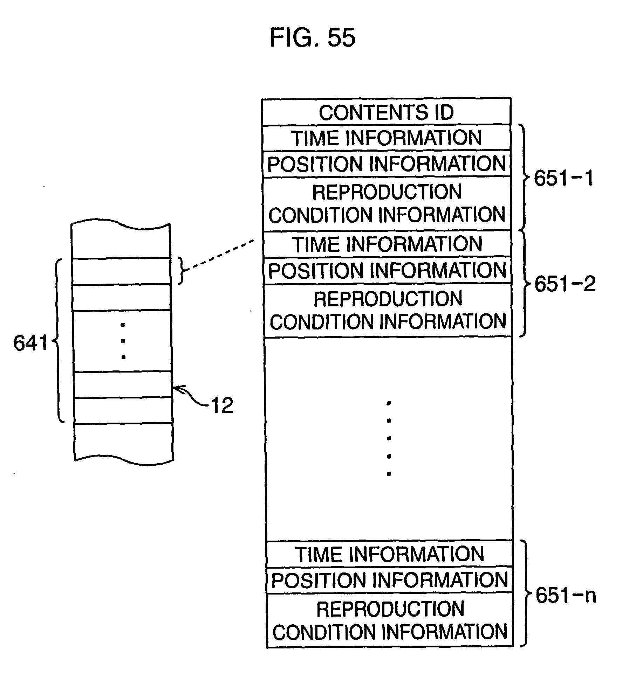

As shown in Fig. 55, the contents reproduction condition memory unit 341 is secured in a prescribed memory area of the RAM 12 of the business support terminal device 501. The contents reproduction condition information is stored in the contents reproduction condition memory unit 341 in correspondence with the contents ID for specifying the contents 211 being reproduced when the contents 211 reproduction condition information were acquired. For example, when one of the contents 211 is being reproduced, and an n-number of contents reproduction condition information 651-1 to 651-n is acquired, one contents ID specifying the contents 211 is stored in the contents reproduction condition memory unit 341, and, in correspondence therewith, n-number of contents reproduction condition information 651-1 to 651-n is stored therein.

The contents reproduction condition information 651-1 to 651-n, for example, includes time information indicating the acquired time, position information indicating the position of the vehicle 541, and reproduction condition information indicating the reproduction condition of the contents 211.

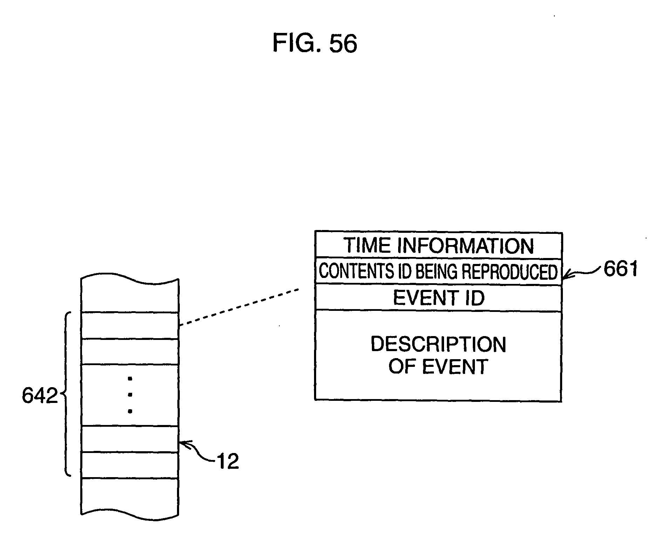

As shown in Fig. 56, the event information memory unit 642 is secured in another memory area of the RAM 12 of the business support terminal device 501. The event information 661 stored in the event information memory unit 642, for example, includes time information indicating the time when the event information 661 was acquired, contents ID for specifying the contents 211 that was being reproduced when the event information 661 was acquired, event ID specifying the event, and information indicating the description of the event.

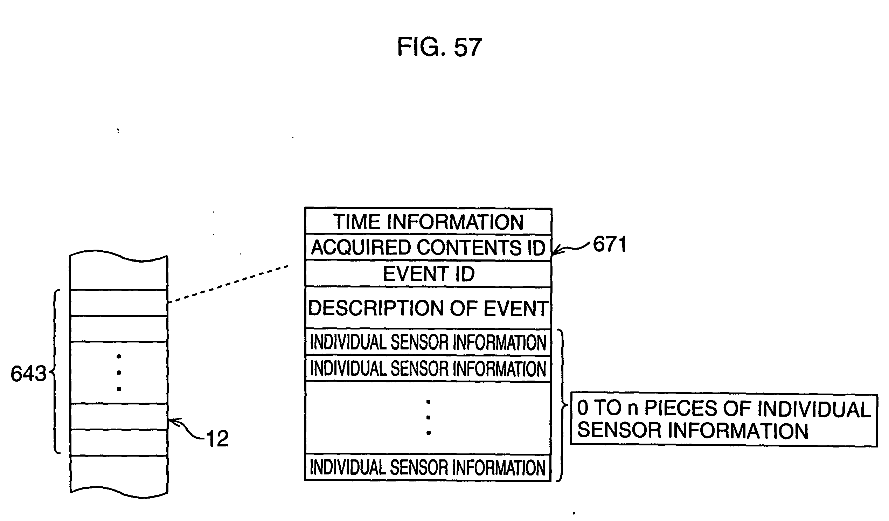

As shown in Fig. 57, the sensor information memory unit 643 is secured in another memory area of the RAM 12 of the business support terminal device 501. The sensor information 671 stored in the sensor information memory unit 643, for example, includes time information indicating the time when the event information 671 was acquired, contents ID for specifying the contents 211 that was being reproduced when the sensor information 671 was acquired, event ID specifying the event, information indicating the description of the event, and a certain number of individual sensor information of 0 to n. Individual sensor information is information acquired by the respective sensors.

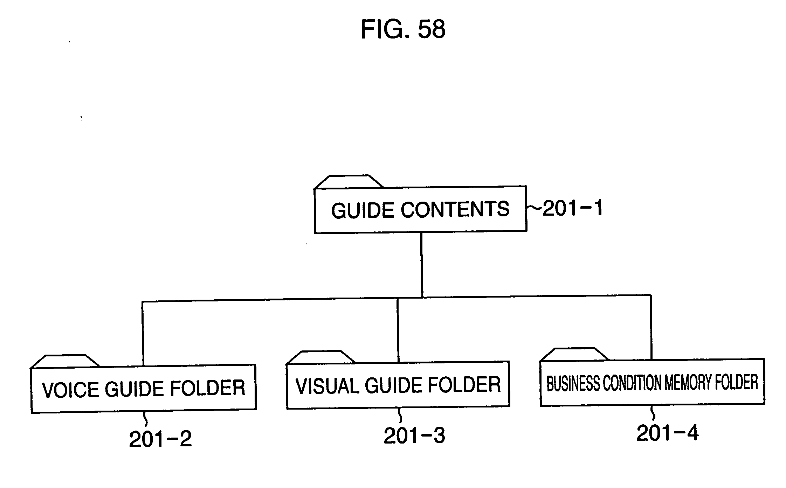

Fig. 58 is a diagram showing another example of the constitution of a folder 201 storing the contents 211 and business condition information 602 for supporting business. The folder 201-2 storing the contents 211 as the sound guide; the folder 201-3 storing the contents 211 as the visual guide; and the folder 201-4 storing the business condition information 602 as the child of the folder 201-1 storing the contents as the guide contents are disposed.

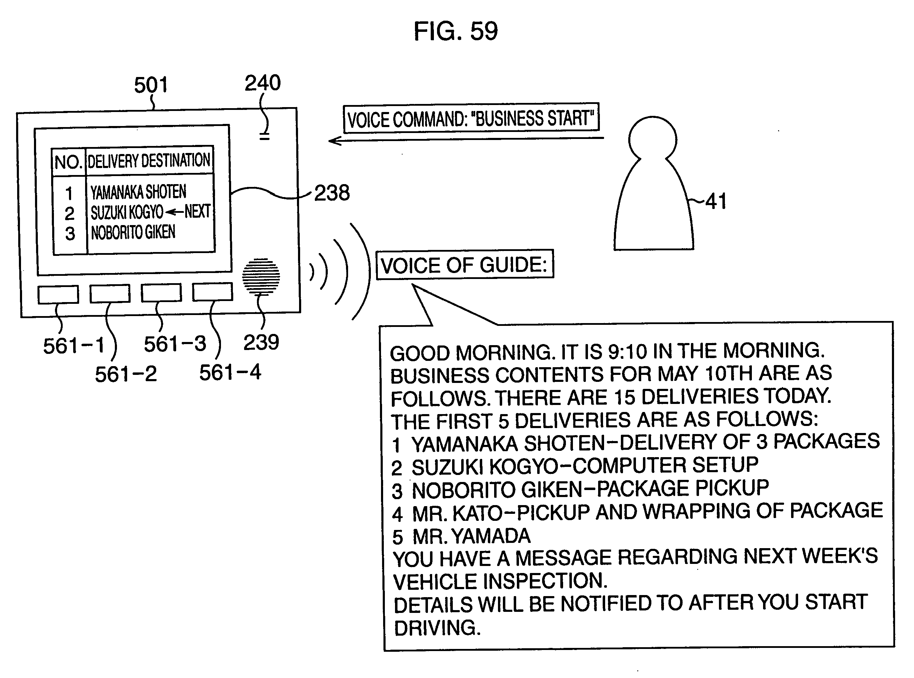

Fig. 59 is a diagram showing an example of the contents 211 for supporting the start of business. When the voice command of "Business Start" is input, the business support terminal device 501 starts reproducing the contents 211 for supporting the start of business. The business support terminal device 501, as a result of the contents 211 for supporting the support of business being reproduced, makes an output from the speaker 239 such as "GOOD MORNING. IT IS 9:10 IN THE MORNING. BUSINESS CONTENTS FOR MAY 10^{TH} ARE AS FOLLOWS. THERE ARE 15 DELIVERIES TODAY. THE FIRST 5 DELIVERIES ARE AS FOLLOWS: 1 YAMANAKA SHOTEN - DELIVERY OF 3 PACKAGES; 2 SUZUKI KOGYO - COMPUTER SETUP; 3 NOBORITO GIKEN - PACKAGE PICKUP; 4 MR. KATO - PICKUP AND WRAPPING OF PACKAGE; 5 MR. YAMADA. YOU HAVE A MESSAGE REGARDING NEXT WEEK' S VEHICLE INSPECTION. DETAILS WILL BE NOTIFIED TO AFTER YOU START DRIVING" and supports business by providing the user 41 with information that such user should know upon starting the business.

The business support terminal device 501 displays on the liquid crystal display unti 238 a list of delivery destinations such as "1 YAMANAKA SHOTEN 2 SUZUKI KOGYO ← NEXT 3 NOBORITO GIKEN", and supports business by letting the user 41 know of the delivery destinations.

In the state shown in Fig. 59, when the voice command of "Next Business" is input, the business support terminal device 501 starts the reproductin of the contents 211 for supporting the delivery to 1. YAMANAKA SHOTEN, which is the next business.

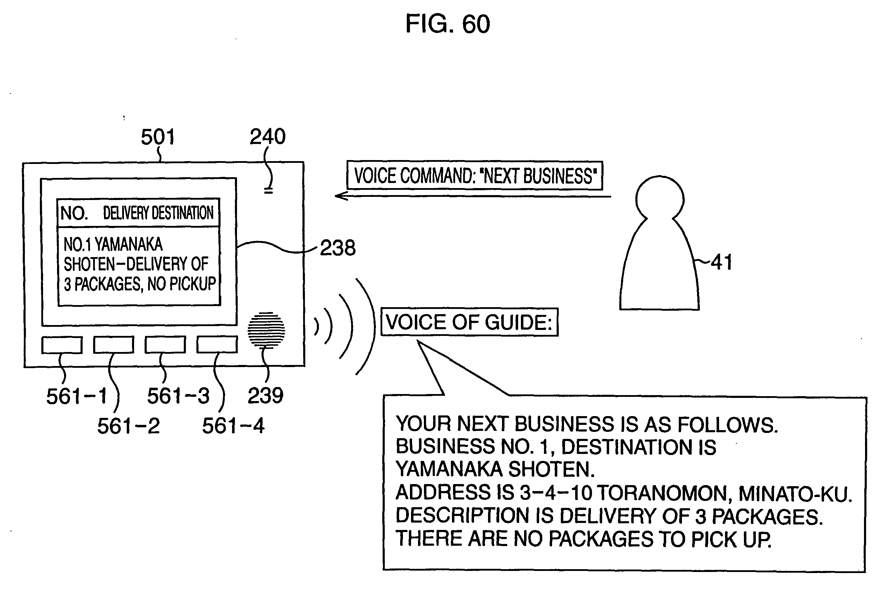

For example as shown in Fig. 60, as a result of reproducing the contents 211 for supporting the next business, a message such as "YOUR NEXT BUSINESS IS AS FOLLOWS. BUSINESS NO. 1, DESTINATION IS YAMANAKA SHOTEN. ADDRESS IS 3-4-10 TORANOMON, MINATO-KU. DESCRIPTION IS DELIVERY OF 3 PACKAGES. THERE ARE NO PACKAGES TO PICK UP" from the speaker 239, and supports business by letting the user 41 know of information that such user should know upon performing the next business. Here, the business support terminal device 501 displays on the liquid crystal display unit 238 a list of business contents at the delivery destination such as "1 YAMANAKA SHOTEN - DELIVERY OF 3 PACKAGES, NO PICKUP", and supports business by letting the user 41 know of the business contents.

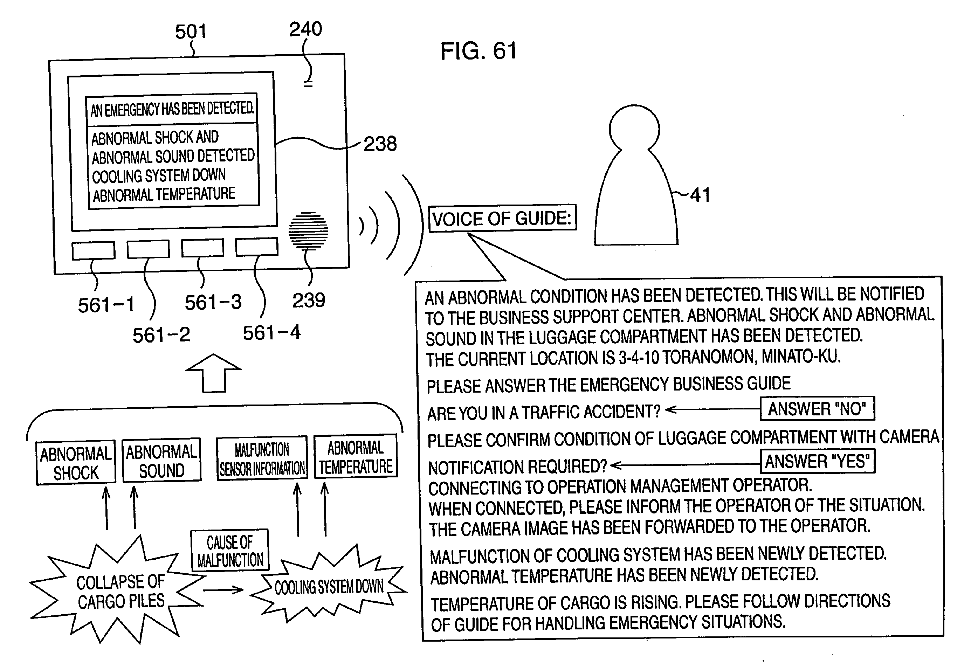

Fig. 61 is a diagram for explaining an example of the contents 211 for supporting emergency business. For example, when the there is a collapse of cargo files in the luggage compartment of the vehicle 541, an abnormal shock is detected with the acceleration sensor 242 of the business condition information detection unit 581, an abnormal sound is detected with the sound pressure sensor 243, the cooling system of the luggage compartment malfunctions due to the collapse of the cargo files is detected with the diagnosis sensor 594, and the rise in temperature in the luggage compartment is detected with the package condition sensor 593, the business support terminal device 501 starts the reproduction of the contents 211 for supporting the emergency business with an event of the abnormal shock and abnormal sound, or an event of malfunction detection.

For example, when an abnormal shock is detected with the acceleration sensor 242 of the business condition information detection unit 581, and abnormal sound is detected with the sound pressure sensor 243, based on an event of abnormal shock and abnormal sound, the business support terminal device 501 reproduces the contents 211 for supporting the emergency business by outputting a message such as "AN ABNORMAL CONDITION HAS BEEN DETECTED. THIS WILL BE NOTIFIED TO THE BUSINESS SUPPORT CENTER. ABNORMAL SHOCK AND ABNORMAL SOUND IN THE LUGGAGE COMPARTMENT HAS BEEN DETECTED. THE CURRENT LOCATION IS 3-4-10 TORANOMON, MINATO-KU. PLEASE ANSWER THE EMERGENCY BUSINESS GUIDE. ARE YOU IN A TRAFFIC ACCIDENT?" and supports the emergency business by notifying the user 41 of the abnormal state and giving suggestions for measures to take.

When the voice of "ARE YOU IN A TRAFFIC ACCIDENT?" is output , and the user 41 answers "NO", the business support terminal device 501 acquires the voice of "NO" of the user 41, and, based on the voice of "NO" of the user 41, reproduces the next contents 211, and outputs a message from the speaker 239 such as "PLEASE CONFIRM CONDITION OF LUGGAGE COMPARTMENT WITH CAMERA. NOTIFICATION REQUIRED?" and supports the emergency business by confirming the contents during such emergency. When the voice of "NOTIFICATION REQUIRED?" is output, and the user 41 answers "YES", the business support terminal device 501 acquires the voice of "YES" of the user 41, and, based on the voice of "YES" of the user 41, makes the portable telephone 597 call operation management operator 524. The business support terminal device 501, based on the voice of "YES" of the user 41, may further select and reproduce the next contents 211, and output from the speaker 239 a message such as "CONNECTING TO OPERATION MANAGEMENT OPERATOR. WHEN CONNECTED, PLEASE INFORM THE OPERATOR OF THE SITUATION. THE CAMERA IMAGE HAS BEEN FORWARDED TO THE OPERATOR" to support emergency business by confirming the contents during such emergency.

Further, when a malfunction is detected with the diagnosis sensor 594, and the rise of temperature in the luggage compartment is detected with the package condition sensor 593, which is a temperature sensor, based on the malfunction detection event and temperature rising event, the business support terminal device 501 reproduces the contents 211 for supporting emergency business for handling malfunctions and outputs a message from the speaker 239 such as "MALFUNCTION OF COOLING SYSTEM HAS BEEN NEWLY DETECTED. ABNORMAL TEMPERATURE HAS BEEN NEWLY DETECTED. TEMPERATURE OF CARGO IS RISING. PLEASE FOLLOW DIRECTIONS OF GUIDE FOR HANDLING EMERGENCY SITUATIONS" to support emergency business by confirming the contents during such emergency and notifying the user 41 of the abnormal situation.

Here, the business support terminal device 501 displays on the liquid crystal display unit 238 a messages such as "AN ABNORMAL CONDITION HAS BEEN DETECTED. ABNORMAL SHOCK AND ABNORMAL SOUND IN THE LUGGAGE COMPARTMENT HAS BEEN DETECTED. COOLING SYSTEM DOWN. ABNORMAL TEMPERATURE" for notifying the abnormal state.

As described above, when the business support terminal device 501 is activated, the business condition information 602 detected with the business condition information detection unit 581 will be automatically stored, and the business condition information 602 is sent to the business support center 504 as necessary with the terminal connection network 503 or memory card not shown.

When the business start operation is performed, the contents 211 for making a business designation are reproduced. As a result of designating the type of business, the designated type of business is comprehended, and the contents 211 for supporting business corresponding to such type of business are reproduced.

The business condition and condition of the user are comprehended based on the response of the user 41 in relation to the contents 211 for supporting business.

For example, when the engine of the vehicle 541 is started, the time such engine was started is automatically recorded. When the vehicle starts running, the description of travel is automatically stored. While the vehicle is running, when the user 41 designates the reproduction of contents relating to a different business, if the reproduction of the contents 211 reproduced previously is finished, the contents 211 relating to another business are newly reproduced, and, if the reproduction of the contents 211 reproduced previously is still being reproduced, the contents 211 relating to another business will interrupt and be reproduced. When the reproduction of the contents being reproduced by being newly interrupted is finished, the reproduction of the interrupted contents 211 is resumed.

Upon arriving at the registered location, an event is generated and the contents 211 are reproduced. The user response contents 211 are activated from the guide contents 211.

As a result of the business support terminal device 501 reproducing the user response contents 211, it is able to guide the response of the user 41, store such response as response information, and send the stored response information to the business support center 504 as necessary. At the business support center 504, the business application program performs business management with the response information of the user 41. The business terminal devices 507-1 and 507-2 display the position, condition and business progress of the vehicle 541 on the management screen, and gives instructions to the user 41 of each vehicle 541.

When a designation event is sent from the business support center 504, the business support terminal device 501 reproduces the contents 211 corresponding to the designation event.

When the user 41 performs the business designation operation, the contents 211 relating to the designated business are switched and reproduced.

After the user performs a certain business designation operation, if such user performs a new business designation operation during the reproduction of the contents 211, the contents 211 corresponding to the new business designation operation are reproduced, and, when that is finished, reproduction of the previous contents 211 is resumed.

Business is supported with the previously distributed contents 211, and, when new contents 211 become necessary, the contents 211 are further distributed, and business is supported with such distributed contents 211.

The recorder contained in the contents 211 creates a report, and such report is automatically uploaded to the business support center 504. When response information in a person's voice is necessary, a person's voice as the response information is recorded, and the recorded voice is uploaded.

When the designation contents 211 are distributed in advance to each vehicle 541 from the business support center 504, and the conditions designated by the contents 211 are satisfied, even if other contents 211 are being used, a message requesting a report will be automatically output, and, when the responds to the contents, the response information and condition information of the user 41 are combined based on the master designation data 215, subject to automatic reporting processing, and sent to the business support center 504.

When the operation for ending the business is performed, if the daily report data stored based on the contents 211 employed in the business during such day is uploaded to the business support center 504, the input processing of the daily report will be automatically performed.

In the present invention, when providing business support, in addition to yielding a general effect in that it is easy to understand the description of the support obtained from the sound or image constituting the contents, there are the following advantages.

In the present invention, since the business support is conducted with the contents to be automatically reproduced and not with the screen of the business application program, the user 41 merely has to perform the operation of reproducing the guide contents.

Further, since the business support is provided via sound or a combination of sound and image, the user 41 will be able to constantly comprehend the status of the business support terminal device 501 while such user is receiving the support, there is no need to operate the business support terminal device 501 for confirming the condition of the business support terminal device 501.

According to the above, since the user 41 will not have to focus on the operation of the business support terminal device 501, the user 41 will be able to focus on the performance of the original business at hand.

Operations while gazing the screen will not long be required since the contents will automatically be reproduced. In the present invention, since it will be possible to automatically comprehend the condition or business progress of the user 41 or the vehicle 541 based on the reproduction condition of the contents, the designation will not be given unilaterally from the business support center 504, and will be given according to the business condition of the user 41.

In the present invention, all conditions that may arise can be dealt with by exchanging the description of the contents, and it is not necessary to change the business application program on a case-by-case basis. It is also possible to record the verbal designation in real time and download it in the business support terminal device 501, and it will be possible to deal with a new situation that arises.

Since the reproduction of the support contents 211 is conducted based on the operation of the user 41 and the event input from the business condition information detection unit 581, the master control unit 101 is able to comprehend the business condition based on the master designation data 215, and precise business support corresponding to the progress of business or the condition of the user 41 can be provided. Since the comprehension of the condition is conducted automatically from the reproduction condition of the contents 211, the user 41 will merely have to perform operations for using the contents 211, and the number of operations will not increase significantly.

The transmission of the business condition information 602 from the business support terminal device 501 to the business support center 504 is controlled with the master control unit 101 managing the reproduction of the contents 211. Since the master control unit 101 is able to handle events transmitted via the terminal connection network 503, it is able to flexibly respond to unforeseen incidents such as a change in schedule.

Since the acquisition of the business condition information 602 is automatically conducted with the business support terminal device 501, the business condition information 602 is transmitted from the business support terminal device 501 to the business support center 504 at an appropriate timing without having to spend time for operations such as inputting or transmitting necessary data. When the user 41 is engaging in an operation other than the business support terminal device 501; such as driving, the contents 211 will only be reproduced in a state when the business support terminal device 501 can be operated, and the user 41 will not have to worry about forgetting to make an operation since the guide for transmitting the business condition information 602 is conducted with the contents 211.

In the present invention, since the business support is provided with the contents 211, the description of the business support can be recognized by the user by reproducing the contents 211, and the description of the guide is conveyed to the user 41 when such guide is performed. Therefore, it is highly unlikely that the user 41 will not know what to do in subsequent situations. Further, when the user 41 wishes to know the procedures for a certain operation, such user 41 will hardly be troubled since he/she merely has to designate the target and reproduce the guide contents.

Since the business support of the business support terminal device 501 is automatically performed with the support contents 211, the user 41 will only have to perform operations when it is necessary to change the order or reproducing the support contents 211.

While the support contents 211 are being reproduced, it is possible to activate new support contents 211, and, when the reproduction of the new contents 211 is finished, reproduction of the previous contents 211 is resumed. As described above, since the multiple activation of the contents 211 is enabled, it will be possible to perform multiple processing of business support.

When a new support is provided by interrupting the support being processed, after the completion of the newly interrupting support, the previous support is resumed.

Incidentally, when a response is requested when the user 41 is unavailable, since the business support terminal device 501 will provide an automatic reply, it will be possible to reduce the number of operations to be performed by the user 41.

Next, the processing of the master control unit 101 of the business support terminal device 501 is explained in detail.

The activation processing of the master control unit 101 of the business support terminal device 501 is the same as the processing explained with reference to the flowchart depicted in Fig. 28, the explanation thereof is omitted.

Processing of the contents folder reproduction processing of the master control unit 101 of the business support terminal device 501 is the same as the processing explained with reference to the flowchart depicted in Fig. 29, the explanation thereof is omitted.

Fig. 62 and Fig. 63 are flowcharts for explaining the event input processing based on the master control unit 101 of the business support terminal device 501. At step S501, the master control unit 101 stores the event information 661 representing the input event in the event information memory unit 642.

The processing of step S502 to step S511 is the same as the processing of step S101 to step S110 depicted in Fig. 30, and the explanation thereof is omitted.

At step S511, when the input event is judged as a player reproduction control command, the routine proceeds to step S512, and the master control unit 101 stores the contents reproduction condition information 651 representing the reproduction state of the contents 211 in the contents reproduction condition information memory unit 641, and proceeds to step S513.

The processing of step S513 to step S517 is the same as the processing of step S111 to step S115 depicted in Fig. 30, and the explanation thereof is omitted.

As described above, when an event is input, the event information 661 representing the input event is stored, and the contents reproduction condition information 651 representing the reproduction condition of the contents 211, in which the reproduction thereof is controlled base on the input event, is stored.

Processing of the contents folder reproduction processing of the master control unit 101 of the business support terminal device 501 is the same as the processing explained with reference to the flowchart of Fig. 29, and the explanation thereof is omitted.

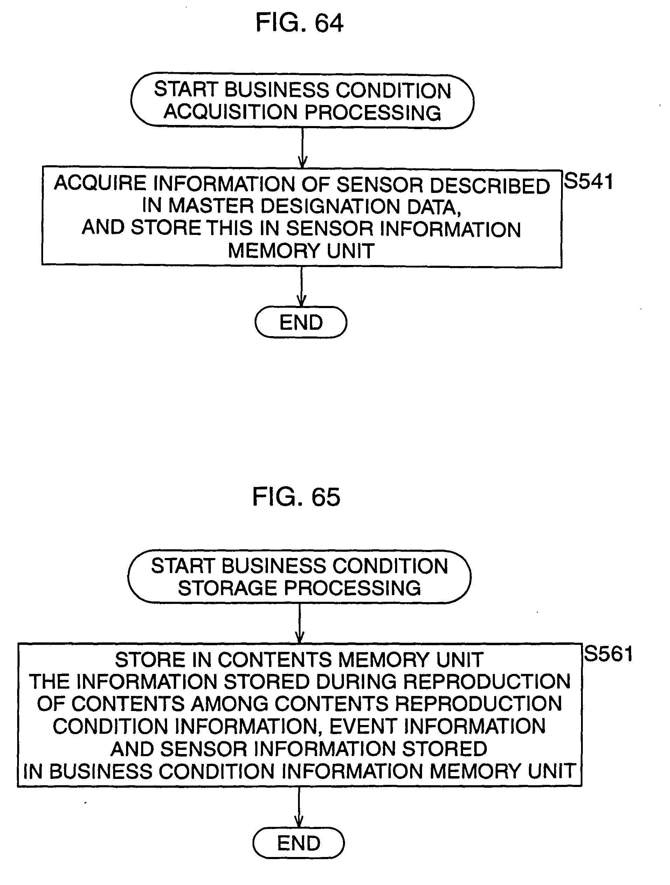

Fig. 64 is a flowchart for explaining the business condition acquisition processing of the master control unit 101 of the business support terminal device 501. At step S541, the master control unit 101 acquires the individual sensor information indicating the condition detected with the sensor from the sensor described in the master designation data 215, and stores the sensor information 671 containing the acquired individual sensor information in the sensor information memory unit 643, and the processing is ended thereby.

Fig. 65 is a flowchart for explaining the business condition memory processing of the master control unit 101 of the business support terminal device 501. At step S561, among the contents reproduction condition information 651, event information 661 and sensor information 671 stored in the business condition information memory unit 591, the master control unit 101 stores the business condition information 602 stored during the reproduction of the contents 211 in the contents memory unit 18, and the processing is ended thereby.

Fig. 66 is a flowchart for explaining the business condition reporting processing of the master control unit of the business support terminal device 501. At step S561, the master control unit 101 transmits the business condition information 602 stored during the reproduction of the contents 211 to the folder 201 corresponding to the business support server 502 via the communication unit 106, and the processing is ended thereby.

Fig. 67 and Fig. 68 are flowcharts for explaining the processing of reproduction designation of the contents based on the master control unit 101 and play list reader 102 of the business support terminal device 501. The processing of step S601 to step S607 is the same as the processing of step S241 to step S247 depicted in Fig. 34, and the explanation thereof is omitted.

At step S608, the master control unit 101 stores the contents reproduction condition information 651 representing the start of reproduction of the contents in the contents reproduction condition memory unit 641, and proceeds to step S609.

The processing of step S609 to step S611 is the same as the processing of step S248 to step S250 depicted in Fig. 34, and the explanation thereof is omitted.

At step S612, the master control unit 101 stores the contents reproduction condition information 651 representing the end of reproduction of contents in the contents reproduction condition memory unit 641, and proceeds to step S613.

The processing of step S613 to step S619 is the same as the processing of step S251 to step S257 depicted in Fig. 34, and the explanation thereof is omitted.

Incidentally, after the processing at step S617, the routine proceeds to step S608.

Processing of the folder enter event of the play list reader 102 of the business support terminal device 501 is the same as the processing explained with reference to Fig. 35, and the explanation thereof is omitted.

Processing of the folder exit event of the play list reader 102 of the business support terminal device 501 is the same as the processing explained with reference to Fig. 36, and the explanation thereof is omitted.

As described above, when the contents are reproduced, it will be possible to designate business to the user.

Further, when the output of the aggregate is controlled based on an event response control program associated with the aggregate, which contains the contents being reproduced, among the event response control programs having described therein a command for an event and associated with each of the aggregates, and in correspondence with the event, and the reproduction of the contents contained in the aggregate is controlled based on ordinal data associated with the aggregate, for which the output thereof has been designated by the aggregate output control means, among the ordinal data having described therein the reproduction order of the contents associated with each of the aggregates, and the transmission of the business condition information indicating the condition of the business to a contents provision device for providing the contents is controlled based on the event response control program associated with the aggregate containing the contents being reproduced, and in correspondence with the event, the continuous designation of appropriate business at an appropriate timing and in appropriate order with minimal operation is enabled, and the management side is able to comprehend the business condition.

When the reception of the business condition information indicating the condition of business transmitted from the terminal device is controlled, it will be possible to comprehend the business condition.

Further, when the contents containing a layered system with an aggregate of the contents as the unit thereof and having the designation of the business described therein are controlled, and the memory of an event response control program having described therein a command for an event to a terminal device for reproducing the contents associated with each of the aggregates, and ordinal data having described therein the order of reproducing the contents are controlled, the transmission to the terminal device, when the aggregate is requested from the terminal device, of the contents belonging to the requested aggregate as well as the event response control program and the ordinal data associated with the requested aggregate is controlled, and the reception of the business condition information indicating the condition of the business to be transmitted from the terminal device is controlled, the terminal device side is able to continuously designate the appropriate business at an appropriate timing and in appropriate order with minimal operation, as well as comprehend the business condition.

Further, when the contents are controlled, and the memory of an event response control program having described therein a command for an event to a terminal device for reproducing the contents associated with each of the aggregates, and ordinal data having described therein the order of reproducing the contents is controlled; and the transmission to the terminal device, when the aggregate is requested from the terminal device, of the contents belonging to the requested aggregate as well as the event response control program and the ordinal data associated with the requested aggregate is controlled. Further, the reception of the contents, the event response control program, and the ordinal data transmitted from the contents provision device is controlled; the output of the aggregate is controlled based on the event response control program associated with the aggregate containing the contents being reproduced among the received event response control programs, and in correspondence with the event; and the reproduction of the contents contained in the aggregate is controlled based on the ordinal data associated with the aggregate, for which the output thereof has been designated with the aggregate output control means, among the received ordinal data. And, the transmission of the business condition information indicating the condition of the business to the contents provision device is controlled based on the event response control program associated with the aggregate containing the contents being reproduced, and in correspondence with the event, and the reception of the business condition information to be transmitted from the terminal device is controlled, the terminal device side is able continuously designate the appropriate business at an appropriate timing and in appropriate order with minimal operation, and the management side is able to comprehend the business condition.

The foregoing series of processing may be executed with hardware, and may also be executed with software. When executing series of processing with software, the program constituting such software is installed from a recording medium into a computer built in dedicated hardware, or into a versatile personal computer capable of executing the various functions.

As shown in Fig. 2 and Fig. 3, this recording medium is constituted from a package media, separate from a computer, such as a magnetic disk 31 or magnetic disk 71 (including a flexible disk), optical disk 32 or optical disk 72 (including a CD-ROM (Compact Disc-Read Only Memory) and DVD (Digital Versatile Disc)), magnetic optical disk 33 or magnetic optical disk 73, or semiconductor memory 34 or semiconductor memory 74 having a program recorded thereon and to be distributed for providing a program to a user, or may be constituted of a ROM 13 or ROM 53, or a hard disk not shown having a program recorded thereon to be provided to a user in a state of being preinstalled in a computer.

Incidentally, in the present description, the step of describing a program stored in the recording medium includes processing to be performed in chronological order along the described order, as well as processing to be performed serially or individually even if it is not processed in chronological order.

### INDUSTRIAL APPLICABILITY

As described above, according to the first invention, it is possible to designate business to the user.

Further, according to the first invention, the continuous designation of appropriate business at an appropriate timing and in appropriate order with minimal operation is enabled, and the management side is able to comprehend the business condition.

According to the second invention, it is possible to comprehend the business condition.

Further, according to the second invention, the terminal device side is able to continuously designate the appropriate business at an appropriate timing and in appropriate order with minimal operation, as well as comprehend the business condition.

According to the third embodiment, the terminal device side is able to continuously designate the appropriate business at an appropriate timing and in appropriate order with minimal operation, and the management side is able to comprehend the business condition.

## Claims

1. A terminal device for designating business based on contents containing a layered system with an aggregate of said contents as the unit thereof and having the designation of said business described therein, comprising:
aggregate output control means for controlling the output of said aggregate based on an event response control program associated with said aggregate, which contains said contents being reproduced, among said event response control programs having described therein a command for an event and associated with each of said aggregates, and in correspondence with said event;
contents reproduction control means for controlling the reproduction of said contents contained in said aggregate based on ordinal data associated with said aggregate, for which the output thereof has been designated with said aggregate output control means, among said ordinal data having described therein the reproduction order of said contents associated with each of said aggregates; and
transmission control means for controlling the transmission of the business condition information indicating the condition of said business to a contents provision device for providing said contents based on said event response control program associated with said aggregate containing said contents being reproduced, and in correspondence with said event.

2. A terminal device according to claim 1, wherein said business condition information contains at least either contents reproduction condition information indicating the reproduction of said contents, or acquisition condition information acquired internally or externally thereof.

3. A terminal device according to claim 2, wherein said acquisition condition information contains at least either event information indicating the acquired event, or sensor information acquired with a sensor.

4. A terminal device according to claim 1, further comprising a sensor for acquiring the sensor information contained in said business condition information.

5. A terminal device according to claim 1, further comprising first memory control means for controlling the memory of said business condition information.

6. A terminal device according to claim 1, wherein said aggregate output control means controls the output of said aggregate based on said event response control program associated with said aggregate containing said contents being reproduced, and said event response control program associated with said aggregate of the ancestor of said aggregate containing said contents being reproduced, and in correspondence with said event.

7. A terminal device according to claim 1, further comprising reproduction means for reproducing said contents based on the control of said contents reproduction control means and in correspondence with the type of said contents.

8. A. terminal device according to claim 1, further comprising event generation means for acquiring the outside status and generating said event.

9. A terminal device according to claim 1, further comprising second memory control means for controlling the memory of said contents, said event response control program, and said ordinal data.

10. A terminal device according to claim 1, wherein said transmission control means further controls the transmission of the request of said aggregate, for which the reception thereof has been designated from said aggregate output control means, to said contents provision device for providing said contents; and the terminal device further comprises:
reception control means for controlling the reception of said contents belonging to said requested aggregate provided by said contents provision device, as well as said event response control program and said ordinal data associated with said requested aggregate.

11. A terminal device according to claim 1, wherein said aggregate output control means rewrites said ordinal data.

12. A business designation method for designating business based on contents containing a layered system with an aggregate of said contents as the unit thereof and having the designation of said business described therein, comprising:
an aggregate output control step for controlling the output of said aggregate based on an event response control program associated with said aggregate, which contains said contents being reproduced, among said event response control programs having described therein a command for an event and associated with each of said aggregates, and in correspondence with said event;
a contents reproduction control step for controlling the reproduction of said contents contained in said aggregate based on ordinal data associated with said aggregate, for which the output thereof has been designated in said aggregate output control step, among said ordinal data having described therein the reproduction order of said contents associated with each of said aggregates; and
a transmission control step for controlling the transmission of the business condition information indicating the condition of said business to a contents provision device for providing said contents based on said event response control program associated with said aggregate containing said contents being reproduced, and in correspondence with said event.

13. A recording medium having recorded thereon a computer readable program, which is a program for business designation processing for designating business based on contents containing a layered system with an aggregate of said contents as the unit thereof and having the designation of said business described therein, said program comprising:
an aggregate output control step for controlling the output of said aggregate based on an event response control program associated with said aggregate, which contains said contents being reproduced, among said event response control programs having described therein a command for an event and associated with each of said aggregates, and in correspondence with said event;
a contents reproduction control step for controlling the reproduction of said contents contained in said aggregate based on ordinal data associated with said aggregate, for which the output thereof has been designated in said aggregate output control step, among said ordinal data having described therein the reproduction order of said contents associated with each of said aggregates; and
a transmission control step for controlling the transmission of the business condition information indicating the condition of said business to a contents provision device for providing said contents based on said event response control program associated with said aggregate containing said contents being reproduced, and in correspondence with said event.

14. A program for making a computer execute business designation processing for designating business based on contents containing a layered system with an aggregate of said contents as the unit thereof and having the designation of said business described therein, said program comprising:
an aggregate output control step for controlling the output of said aggregate based on an event response control program associated with said aggregate, which contains said contents being reproduced, among said event response control programs having described therein a command for an event and associated with each of said aggregates, and in correspondence with said event;
a contents reproduction control step for controlling the reproduction of said contents contained in said aggregate based on ordinal data associated with said aggregate, for which the output thereof has been designated in said aggregate output control step, among said ordinal data having described therein the reproduction order of said contents associated with each of said aggregates; and
a transmission control step for controlling the transmission of the business condition information indicating the condition of said business to a contents provision device for providing said contents based on said event response control program associated with said aggregate containing said contents being reproduced, and in correspondence with said event.

15. A contents provision device, comprising:
memory control means for controlling the contents containing a layered system with an aggregate of said contents as the unit thereof and having the designation of said business described therein, and controlling the memory of an event response control program having described therein a command for an event to a terminal device for reproducing said contents associated with each of said aggregates, and ordinal data having described therein the order of reproducing said contents;
transmission control means for controlling the transmission to said terminal device, when said aggregate is requested from said terminal device, of said contents belonging to said requested aggregate as well as said event response control program and said ordinal data associated with said requested aggregate; and
reception control means for controlling the reception of the business condition information indicating the condition of said business to be transmitted from said terminal device.

16. A contents provision method, comprising:
a memory control step for controlling the contents containing a layered system with an aggregate of said contents as the unit thereof and having the designation of said business described therein, and controlling the memory of an event response control program having described therein a command for an event to a terminal device for reproducing said contents associated with each of said aggregates, and ordinal data having described therein the order of reproducing said contents;
a transmission control step for controlling the transmission to said terminal device, when said aggregate is requested from said terminal device, of said contents belonging to said requested aggregate as well as said event response control program and said ordinal data associated with said requested aggregate; and
a reception control step for controlling the reception of the business condition information indicating the condition of said business to be transmitted from said terminal device.

17. A recording medium having recorded thereon a program for making a computer execute contents provision processing, said program comprising:
a memory control step for controlling the contents containing a layered system with an aggregate of said contents as the unit thereof and having the designation of said business described therein, and controlling the memory of an event response control program having described therein a command for an event to a terminal device for reproducing said contents associated with each of said aggregates, and ordinal data having described therein the order of reproducing said contents;
a transmission control step for controlling the transmission to said terminal device, when said aggregate is requested from said terminal device, of said contents belonging to said requested aggregate as well as said event response control program and said ordinal data associated with said requested aggregate; and
a reception control step for controlling the reception of the business condition information indicating the condition of said business to be transmitted from said terminal device.

18. A program for making a computer execute:
a memory control step for controlling the contents containing a layered system with an aggregate of said contents as the unit thereof and having the designation of said business described therein, and controlling the memory of an event response control program having described therein a command for an event to a terminal device for reproducing said contents associated with each of said aggregates, and ordinal data having described therein the order of reproducing said contents;
a transmission control step for controlling the transmission to said terminal device, when said aggregate is requested from said terminal device, of said contents belonging to said requested aggregate as well as said event response control program and said ordinal data associated with said requested aggregate; and
a reception control step for controlling the reception of the business condition information indicating the condition of said business to be transmitted from said terminal device.

19. A business management system constituted from a contents provision device for providing contents containing a layered system with an aggregate of said contents as the unit thereof and having the designation of said business described therein, and a terminal device for designating said business based on said contents;
wherein said contents provision device comprises:
memory control means for controlling the memory of said contents, and controlling the memory of an event response control program having described therein a command for an event to a terminal device and associated with each of said aggregates, and ordinal data having described therein the order of reproducing said contents; and
first transmission control means for controlling the transmission to said terminal device, when said aggregate is requested from said terminal device, of said contents belonging to said requested aggregate as well as said event response control program and said ordinal data associated with said requested aggregate; and
wherein said terminal device comprises:
first reception control means for controlling the reception of said contents, said event response control program, and said ordinal data transmitted from said contents provision device;
aggregate output control means for controlling the output of said aggregate based on said event response control program associated with said aggregate containing said contents being reproduced among said received event response control programs, and in correspondence with said event;
contents reproduction control means for controlling the reproduction of said contents contained in said aggregate based on said ordinal data associated with said aggregate, for which the output thereof has been designated with said aggregate output control means, among said received ordinal data; and
second transmission control means for controlling the transmission of the business condition information indicating the condition of said business to said contents provision device based on said event response control program associated with said aggregate containing said contents being reproduced, and in correspondence with said event; and
wherein said contents provision device further comprises:
second reception control means for controlling the reception of said business condition information to be transmitted from said terminal device.

20. A business management method of a business management system constituted from a contents provision device for providing contents containing a layered system with an aggregate of said contents as the unit thereof and having the designation of said business described therein, and a terminal device for designating said business based on said contents, comprising:
a memory control step for controlling the memory of said contents, and controlling the memory of an event response control program having described therein a command for an event to a terminal device and associated with each of said aggregates, and ordinal data having described therein the order of reproducing said contents;
a first transmission control step for controlling the transmission to said terminal device, when said aggregate is requested from said terminal device, of said contents belonging to said requested aggregate as well as said event response control program and said ordinal data associated with said requested aggregate;
a first reception control step for controlling the reception of said contents, said event response control program, and said ordinal data transmitted from said contents provision device;
an aggregate output control step for controlling the output of said aggregate based on said event response control program associated with said aggregate containing said contents being reproduced among said received event response control programs, and in correspondence with said event;
a contents reproduction control step for controlling the reproduction of said contents contained in said aggregate based on said ordinal data associated with said aggregate, for which the output thereof has been designated in said aggregate output control step, among said received ordinal data;
a second transmission control step for controlling the transmission of the business condition information indicating the condition of said business to said contents provision device based on said event response control program associated with said aggregate containing said contents being reproduced, and in correspondence with said event; and
a second reception control step for controlling the reception of said business condition information to be transmitted from said terminal device.
